# FASCICULE DE BREVET EUROPEEN

(11) **EP 3 105 052 B1**
(45) Date de publication et mention de la délivrance du brevet: **11.04.2018**
(21) Numéro de dépôt: 15706898.2
(22) Date de dépôt: 09.02.2015
(51) Int. Cl.: B32B 17/10, G07C 9/00, G07B 15/00, F21V 8/00, G02B 6/02

(54) **ENSEMBLE VITRE LUMINEUX**
LEUCHTEINHEIT AUS GLAS
GLAZED LIGHTING ASSEMBLY

(30) Priorité: 10.02.2014 FR 1451016; 03.07.2014 MY PI2014001989
(43) Date de publication de la demande: 21.12.2016
(73) Titulaire: Saint-Gobain Glass France, 92400 Courbevoie (FR)
(72) Inventeur: GIERENS, Anne, 40545 Düsseldorf (DE); WOLFF, Richard, 60190 Pronleroy (FR); CHAHBOUNE, Kamel, 02200 Soissons (FR); ZHANG, Jingwei, 91300 Massy (FR)
(74) Mandataire: Saint-Gobain Recherche
(86) Numéro de dépôt international: PCT/FR2015/050306
(87) Numéro de publication internationale: WO 2015/118280

(56) Documents cités:
- EP-A1- 2 423 173
- FR-A1- 2 694 069
- FR-A1- 2 976 342
- FR-A1- 2 989 176
- JP-A- H10 124 710
- JP-A- 2007 328 810

## Description

La présente invention se rapporte au domaine de la lumière et plus particulièrement concerne un ensemble vitré lumineux par extraction de lumière guidée dans un verre.

Il est connu de former un vitrage lumineux en éclairant un verre par la tranche avec une source de lumière comme un ensemble de diodes électroluminescentes. La lumière ainsi injectée est guidée par réflexion totale interne à l'intérieur de ce verre grâce au contraste d'indice de réfraction avec les matériaux environnants. Cette lumière est ensuite extraite à l'aide de moyens formant signalisation qui sont classiquement une couche diffusante.

Naturellement, les diodes peuvent être pilotées pour fournir via le motif diffusant une zone lumineuse en continu ou clignotante ou encore changeant de couleur.

La Demanderesse propose d'élargir la gamme des vitrages lumineux disponibles basés sur un verre guide de lumière à éclairage par la tranche en rendant possible la vision simultanée d'une première zone lumineuse d'une première couleur visible seulement du premier côté du vitrage et d'une deuxième zone lumineuse d'une deuxième couleur distincte visible seulement de l'autre côté du vitrage.

A cet effet l'invention a pour premier objet un ensemble vitré lumineux, de préférence pour porte d'accès entre des premier et deuxième espaces, comportant :
- un premier vitrage (transparent, de préférence clair, et même extraclair), de préférence en verre minéral et même trempé (nu ou déjà revêtu), voire organique (de préférence rigide) d'indice de réfraction n1 de préférence inférieur à 1,6 à 550nm (mieux dans l'ensemble du spectre visible), et même inférieur à 1,55 ou même encore inférieur ou égal à 1,53 à 550nm (mieux dans l'ensemble du spectre visible), de préférence de 1,5 à 1,53, avec des faces principales appelées face interne et face externe et une première tranche,
- une première source de lumière (visible), de préférence un ensemble de diodes électroluminescentes (sur un premier support PCB alignées, en barrette(s)) ou une fibre optique extractrice avec source primaire de lumière (diode(s)), couplée optiquement au premier vitrage, par la première tranche voire par l'une des faces à la périphérie de la première tranche (notamment avec un logement des diodes),
   le premier vitrage guidant la lumière émise par la première source de lumière, première source de lumière pilotée en statique ou (de préférence) en dynamique pour émettre (de préférence dans le vert) à l'instant t0 un premier rayonnement principal à une première longueur d'onde dite λ1 (de préférence du vert) et de préférence commutable pour émettre (de préférence dans le rouge) à l'instant t'≠t0 un deuxième rayonnement principal à une deuxième longueur d'onde dite λ2 distincte de λ1 (de préférence distincte de λ1 d'au moins 20nm, 40nm et même d'au moins 80nm, λ2 de préférence du rouge), et éventuellement pour émettre (dans le blanc, le rouge ou le vert, le bleu) à t3#0 et t3#t' un rayonnement principal (décoratif ou fonctionnel) même encore distinct du premier et/ou du deuxième rayonnement principal,
- des premiers moyens d'extraction de lumière (issue du guidage) associés au premier vitrage comportant un ou une pluralité de premiers motifs d'extraction (diffusants de préférence), délimitant une première surface d'extraction (occupant tout ou partie de la face interne de préférence hors une première zone de marge coté couplage optique avec la première source, notamment occupant une zone, comme une bande, de la première tranche à la tranche opposée hormis de préférence ladite première zone de marge), la lumière extraite étant visible côté face externe, les premiers moyens d'extraction (notamment couche diffusante blanche, de préférence définie par une clarté L* d'au moins 50) étant tels que la lumière extraite audit t0 est d'une première couleur dite C1 (C1 de préférence dans le vert, correspondant à un état passant d'une porte d'accès, C1 de rayonnement principal λ'1) sensiblement égal à λ1) et de préférence audit t' est d'une deuxième couleur dite C2 distincte de la première couleur C1 (C2 de préférence dans le rouge, correspondant à un stop pour une porte d'accès, et/ou C2 de rayonnement principal λ'2 sensiblement égal à λ2),
   notamment premiers moyens d'extraction de lumière qui sont de préférence des moyens diffusants du côté de la face interne (de préférence sur la face interne, voire dans ou sur un premier intercalaire de feuilletage), et/ou du côté de (même de préférence sur) la face externe et/ou dans la masse du premier vitrage, moyens d'extraction éventuellement formant concentrateur de la lumière,
- des premiers moyens de masquage de la lumière extraite (des premiers moyens d'extraction) côté face interne, agencés côté face interne, couvrant partiellement la face interne, choisis parmi l'un au moins des moyens suivants (et leur combinaison):
   - (de préférence) moyens opaques (au sens principalement absorbant) en congruence (même forme, même taille et en coïncidence) avec les premiers moyens d'extraction, - en particulier au moins absorbant aux longueurs d'onde principales de C1 et/ou C2 (et/ou de C3 et/ C4 définies plus tard)-, plus éloignés que les premiers moyens d'extraction de la face interne et de préférence sur les premiers moyens d'extraction,
   - moyens réfléchissants (de préférence spéculaires) en regard des premiers moyens d'extraction, et de préférence qui sont (directement) sur les premiers moyens d'extraction et plus éloignés du premier vitrage que les premiers moyens d'extraction, de préférence en congruence avec les premiers moyens d'extraction (avec les premiers motifs d'extraction) ou éventuellement dépassant latéralement des premiers moyens d'extraction (du ou des premiers motifs d'extraction) notamment d'au plus 2mm et même de moins de 1mm, notamment couvrant la première surface d'extraction et autour de la première surface d'extraction sur au plus 2mm et mieux de moins de 1mm),
- en contact optique avec le premier vitrage, notamment (de préférence) séparé par une ou des couches- ou en variante espacé du premier vitrage-, un deuxième vitrage, (de préférence en verre minéral voire organique (rigide), transparent, de préférence clair, même extraclair, et même trempé), d'indice de réfraction n'1 de préférence inférieur à 1,6 à 550nm (mieux dans l'ensemble du spectre visible), et même inférieur à 1,55 à 550nm (mieux dans l'ensemble du spectre visible) ou même encore inférieur ou égal à 1,53 à 550nm (mieux dans l'ensemble du spectre visible), de préférence de 1,5 à 1,53, avec des faces principales appelées face de collage et face extérieure, la face de collage étant en regard de la face interne, et une tranche, dite deuxième tranche (alignée ou décalée de la première tranche vers l'extérieur de l'ensemble vitré, laissant une bande périphérique de la face de collage dépassante de la première tranche ou de la tranche opposée à la première tranche),
- une deuxième source de lumière (visible), de préférence un ensemble de diodes électroluminescentes (sur un deuxième support PCB, alignées, en barrette(s)), de préférence identique à la première source de lumière), voire une fibre optique extractrice avec source primaire de lumière (diode(s)), couplée optiquement au deuxième vitrage, par la deuxième tranche voire par l'une des faces à la périphérie de la deuxième tranche (notamment avec un logement des diodes), le deuxième vitrage guidant la lumière émise par la deuxième source de lumière, (deuxième tranche du côté de la première tranche, alignée ou décalée vers l'intérieur de l'ensemble vitré, ou côté opposé à la première tranche),
   la deuxième source de lumière étant pilotée, en statique ou (de préférence) en dynamique pour émettre audit t0 (de préférence dans le rouge) un troisième rayonnement principal à une longueur d'onde dite λ3 distincte de λ1 (de préférence distincte de λ1 d'au moins 20nm, 40nm et même d'au moins 80nm, λ3 de préférence du rouge) et de préférence sensiblement égale à λ2 et de préférence pour émettre (de préférence dans le vert) audit instant t' un quatrième rayonnement principal à une longueur d'onde dite λ4 distincte de λ3 (de préférence distincte de λ3 d'au moins 20nm, 40nm et même d'au moins 80nm, λ4 de préférence du rouge), voire distincte de λ2, et de préférence sensiblement égale à λ1, et notamment pour émettre (dans le blanc, le rouge ou le vert, le bleu) à t3#0 et t3#t' un rayonnement principal (décoratif ou fonctionnel) même encore distinct du troisième et/ou quatrième (même du premier et/ou du deuxième) rayonnement principal,
- des deuxièmes moyens d'extraction de lumière (issue du guidage) associés au deuxième vitrage, comportant un ou une pluralité de deuxièmes motifs d'extraction (diffusants de préférence), délimitant une deuxième surface d'extraction (occupant tout ou partie de la face de collage de préférence hors deuxième zone de marge coté couplage optique avec la deuxième source, notamment occupant une zone, comme une bande, de la deuxième tranche à la tranche opposée hormis de préférence ladite deuxième zone de marge), la lumière ainsi extraite étant visible côté face extérieure, deuxièmes moyens d'extraction de lumière (notamment couche diffusante blanche, de préférence définie par une clarté L* d'au moins 50) tels que la lumière extraite à t0 est d'une couleur dite C3 distincte de C1 (C3 de préférence dans le rouge, correspondant à un stop pour une porte d'accès, de rayonnement principal λ'3 sensiblement égal à λ3, distinct de λ'1 d'au moins 20nm, 40nm et même 80nm, λ'3 de préférence du rouge), de préférence sensiblement égale à C2 (λ'3 sensiblement égal à λ'2) et de préférence audit t' d'une couleur dite C4 distincte de C3 (C4 de préférence dans le vert, correspondant à un état passant d'une porte d'accès, C4 de rayonnement principal λ'4 sensiblement égal à λ4, distinct de λ'3 d'au moins 20nm, 40nm et même 80nm), voire distincte de C2, de préférence sensiblement égale à C1 (λ'4 sensiblement égal à λ'1),
- des deuxièmes moyens de masquage de la lumière extraite (des deuxièmes moyens d'extraction) côté face de collage, agencés côté face de collage, couvrant partiellement la face de collage, choisis parmi l'un au moins des moyens suivants (et leur combinaison):
   - (de préférence) moyens opaques (au sens principalement absorbant) en congruence avec les deuxièmes moyens d'extraction, en particulier au moins absorbant aux longueurs d'onde principales de C3 et/ou C4 (et/ou C1 et/ou C2 en fonction des premiers moyens de masquage opaques), - de préférence le couple premiers moyens de masquage opaques/ deuxièmes moyens de masquage opaque est absorbant au moins aux longueurs d'onde principales de C1, C3 et d'autres couleurs éventuelles C2, C4 etc- plus éloignés que les deuxièmes moyens d'extraction de la face de collage et de préférence (directement) sur les deuxièmes moyens d'extraction,
   - moyens réfléchissants (au sens principalement réfléchissant, de préférence spéculaires) en regard des deuxièmes moyens d'extraction, et de préférence qui sont (directement) sur les deuxièmes moyens d'extraction et plus éloignés du deuxième vitrage que les deuxièmes moyens d'extraction, moyens réfléchissants de préférence en congruence avec les deuxièmes moyens d'extraction ou éventuellement dépassant latéralement des deuxièmes moyens d'extraction notamment d'au plus 2mm et mieux de moins de 1mm, notamment couvrant sensiblement la deuxième surface d'extraction et autour de la deuxième surface d'extraction sur au plus 2mm et mieux moins de 1mm).

L'ensemble vitré comprend en outre entre les premiers moyens de masquage et les deuxièmes moyens d'extraction, -le cas échéant entre les premiers moyens de masquage et les deuxièmes moyens de masquage distincts des premiers moyens de masquage-, un isolateur optique (de préférence continu, plan ou bombé, en une pièce), dit premier isolateur optique, transparent, d'indice de réfraction n2 tel que, aux longueurs d'onde de la première (et mieux de la deuxième source si isolateur unique) source de lumière (mieux de l'ensemble du spectre visible) n1-n2 est d'au moins 0,08 et même d'au moins 0,2 et mieux encore d'au moins 0,3 (et mieux n'1-n2 est d'au moins 0,08 et même d'au moins 0,2 et mieux encore d'au moins 0,3, si isolateur unique) qui est :
- au moins en regard de la face interne entre les premiers motifs d'extraction (si plusieurs, ou encore dans le vide d'un motif fermé évidé), de préférence couvrant la première surface d'extraction, et/ou (de préférence et) en regard de la face interne entre la première tranche de couplage et (le bord adjacent de) la première surface d'extraction, et de préférence en regard de la face interne entre la première surface d'extraction et la tranche opposée à la première tranche, premier isolateur optique de préférence couvrant sensiblement la face interne (hormis éventuellement une première zone dite de marge coté couplage optique avec la première source et même d'autres zones périphériques)
- de préférence si le premier isolateur est unique, au moins en regard de la face de collage :entre les deuxièmes motifs d'extraction (si plusieurs, ou encore dans le vide d'un motif fermé évidé), de préférence couvrant la deuxième surface d'extraction et/ou (de préférence et) entre la deuxième tranche et (le bord adjacent de) la deuxième surface d'extraction, et de préférence entre la deuxième surface d'extraction et la tranche opposée à la deuxième tranche, premier isolateur optique de préférence couvrant alors sensiblement la face de collage (hormis éventuellement une deuxième zone dite de marge coté couplage optique avec la deuxième source et même d'autres zones périphériques).

Le premier isolateur optique, -ayant des première et deuxième surfaces principales-, est feuilleté -via la première surface principale- au premier vitrage (avec côté face interne les premiers moyens de masquage et même de préférence les premiers moyens d'extraction dessous) au moyen d'un premier intercalaire de feuilletage, en première matière polymérique transparente, de préférence thermoplastique voire thermodurcie, qui est d'indice de réfraction n3 tel que n3-n1 en valeur absolue est inférieur à 0,05 et même inférieur à 0,03 aux longueurs d'onde de la première source de lumière et mieux dans l'ensemble du spectre du visible. En variante, le premier isolateur optique est de l'air.

L'ensemble vitré comprend en outre entre les premiers moyens de masquage et les deuxièmes moyens d'extraction, -le cas échéant entre les premiers moyens de masquage et les deuxièmes moyens de masquage espacés des premiers moyens de masquage-, un isolateur optique (de préférence continu et plan, en une pièce), dit deuxième isolateur optique, confondu avec le premier isolateur optique ou distinct et plus proche des deuxièmes moyens d'extraction, transparent, d'indice de réfraction n'2 tel que, aux longueurs d'onde de la deuxième source de lumière (mieux de l'ensemble du spectre visible) n'1-n'2 est d'au moins 0,08 et même d'au moins 0,2 et mieux encore d'au moins 0,3 qui est :
- au moins en regard de la face de collage entre les deuxièmes motifs d'extraction (si plusieurs, ou encore dans le vide d'un motif fermé évidé), de préférence couvrant la deuxième surface d'extraction et/ou (de préférence et) entre la deuxième tranche et (le bord adjacent de) la deuxième surface d'extraction, et de préférence entre la deuxième surface d'extraction et la tranche opposée à la deuxième tranche, deuxième isolateur optique de préférence couvrant alors sensiblement la face de collage (hormis éventuellement une deuxième zone dite de marge coté couplage optique avec la deuxième source et même d'autres zones périphériques).

Le deuxième isolateur optique est feuilleté, (via la deuxième surface du premier isolateur optique si confondu avec), au deuxième vitrage (donc côté face de collage et avec les deuxièmes moyens de masquage et même de préférence les deuxièmes moyens d'extraction) au moyen d'un deuxième intercalaire de feuilletage, en deuxième matière polymérique transparente (de préférence thermoplastique voire thermodurcie, de préférence deuxième matière identique ou similaire à la première matière), qui est d'indice de réfraction n'3 tel que n'3-n'1, en valeur absolue, est inférieur à 0,05 et même à 0,03 aux longueurs d'onde de la deuxième source de lumière (et mieux dans l'ensemble du spectre du visible).

Le ou les isolateurs optiques combinés aux moyens de masquage garantissent l'indépendance des deux éclairages tout particulièrement commutable pour former la signalisation d'une porte d'accès :
- à l'instant t0 : couleur d'accès, telle que verte, d'un premier côté et couleur d'attente, telle que rouge, du deuxième côté
- à l'instant t' : inversion de la signalisation, couleur d'arrêt du premier côté et couleur de passage du deuxième côté.

Dans une application de signalétique, pour un compartiment de train, on peut avoir écrit « libre » en vert d'un côté et « réservé » en rouge de l'autre côté ou encore pour une séparation entre un espace familles ou un espace classique on peut avoir côté familles de la lumière avec des motifs pour les enfants (géométrie, couleur etc) et côté classique une lumière plus douce (et/ou un ou des motifs lumineux plus sobres) par exemple un blanc chaud. On peut souhaiter un deuxième isolateur optique si le premier isolateur optique est plus éloigné du deuxième vitrage que du premier vitrage et/ou n'isole pas (suffisamment) les rayons issus de la deuxième source de lumière par sa position ou son étendue.

Dans une application décorative, par exemple pour une cloison entre deux bureaux, chaque personne peut choisir sa couleur de décor.

Dans une application cloison entre deux espaces (bâtiment, à l'extérieur, dans un véhicule notamment de transport en commun..), chaque espace peut avoir un ou des motifs lumineux de couleur, type de commutation (et de forme) adaptés et une fonction adaptée décorative ou (plus) fonctionnelle (éclairage).

Par exemple il peut s'agir d'une cloison entre deux bureaux, entre deux chambres ou salon et autre espace dans un magasin; il peut s'agir de cloison séparatrice d'espace, notamment de rayons, par exemple des totems ou encore d'une cabine d'essayage.

D'un côté, l'éclairage peut être décoratif et de l'autre côté fonctionnel. Pour une porte de placard ou une porte -de préférence miroir- de meuble de salle de bains, la lumière côté extérieur peut être colorée et côté intérieur blanche.

Pour chaque côté (ou espace), la couleur peut évoluer en fonction du moment de la journée (ou de saisons) tout comme l'intensité. Le pilotage des sources (de chaque côté) peut être automatique et/ou manuel.

D'un côté l'éclairage peut être en dynamique et de l'autre côté en statique.

Les premiers moyens de masquage opaques selon l'invention peuvent être noirs ou gris (foncés) ou même blanc (typiquement par épaississement des premiers moyens d'extraction). Les premiers moyens de masquage opaques peuvent être aussi colorés et suffisamment épais pour être opaques à toutes les longueurs d'ondes principales ou avec une opacité à certaine(s) des longueurs d'onde principales.

Les premiers moyens de masquage (de préférence opaques, ou réfléchissants) peuvent être :
- sur le premier isolateur optique notamment film bas indice, face côté face interne
- sur le premier intercalaire de préférence face côté face interne
- sur la face interne ou sur les premiers moyens d'extraction côté face interne

On préfère les mettre au plus près des premiers moyens d'extraction.

Les deuxièmes moyens de masquage (de préférence opaques, ou réfléchissants) peuvent être cumulativement :
- sur le deuxième isolateur optique, notamment film bas indice, face côté face de collage
- sur le deuxième intercalaire de préférence face côté face de collage,
- sur la face de collage ou sur les deuxièmes moyens d'extraction face côté face de collage.

On préfère les mettre au plus près des deuxièmes moyens d'extraction.

De préférence, les premiers moyens d'extraction (notamment couche diffusante, de préférence émail voire encre ou peinture) sont sur la face interne, les premiers moyens de masquage comprennent une couche opaque (de préférence émail voire encre ou même peinture), voire réfléchissante, en congruence et (directement) sur les premiers moyens d'extraction, le premier vitrage avec l'ensemble présentant côté face interne en regard des premiers moyens de masquage:
- une absorption (aux longueurs d'onde principales de C1 et/ou C2 et/ou C3 et/ou C4), et même dans tout le visible) d'au moins 80% et même d'au moins 90%,
- un facteur de transmission (aux longueurs d'onde principales de C1 et/ou C2 et/ou C3 et/ou C4, et même dans tout le visible) d'au plus 2% et même 1% ou 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

De préférence, les deuxièmes moyens d'extraction (notamment couche diffusante, de préférence émail voire encre ou peinture) sont sur la face de collage, les deuxièmes moyens de masquage comprennent une couche opaque (de préférence émail, encre), voire réfléchissante, en congruence et (directement) sur les deuxièmes moyens d'extraction, l'ensemble sur le deuxième vitrage présentant côté face de collage:
- une absorption (aux longueurs d'onde principales de C3 et/ou C4 et/ou encore C1 et/ou C4 en fonction des premiers moyens de masquage) d'au moins 80% et même d'au moins 90%,
- un facteur de transmission (aux longueurs d'onde principales de C3 et/ou C4 et/ou encore C1 et/ou C4 en fonction des premiers moyens de masquage) d'au plus 2% et même 1% ou 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

Les premiers et/ou deuxièmes moyens de masquage opaques peuvent être doublés d'une couche réfléchissante, sur sa face tournée vers les moyens d'extractions, par exemple d'une mince couche métallique, il est suffisant que l'ensemble présente la densité optique, la transmission, l'absorption ci-dessus.

Alternativement, les premiers moyens de masquages sont (principalement) réfléchissants et peuvent être du côté de la face interne et les premiers moyens d'extraction du côté de la face externe. De préférence, les premiers moyens de masquages sont (directement) sur les premiers moyens d'extraction qui sont sur la face interne.

Le premier vitrage avec les premiers moyens de masquage réfléchissant peut présenter un facteur de transmission (aux longueurs d'onde principales de C1 et/ou C2 et/ou C3 et/ou C4, même dans tout le visible) d'au plus 2% et même d'au plus 1% ou d'au plus 0,5% (notamment une TL d'au plus 2%, même d'au plus 1%) et une RL d'au moins 90%. TL et RL sont mesurés du côté face interne en regard des premiers moyens réfléchissant.

De même, les deuxièmes moyens de masquages sont (principalement) réfléchissants (comme les premiers moyens de masquage) et peuvent être du côté de la face de collage et les deuxièmes d'extraction du côté de la face extérieure. De préférence, les deuxièmes moyens de masquages sont (directement) sur les deuxièmes moyens d'extraction qui sont sur la face de collage.

Le deuxième vitrage avec les deuxièmes moyens de masquage réfléchissant peut présenter un facteur de transmission (aux longueurs d'onde principales de C3 et/ou C4 et/ou encore C1 et/ou C2 en fonction des premiers moyens de masquage) d'au plus 2% et même d'au plus 1% ou d'au plus 0,5% (notamment une TL d'au plus 2%, même d'au plus 1%) et une RL d'au moins 90%. TL et RL mesurés du côté face de collage en regard des deuxièmes moyens réfléchissant.

Les premiers moyens de masquage réfléchissants peuvent être (directement) sur et entre les premiers motifs, donc une zone pleine sensiblement englobant la première surface d'extraction. La réflexion est spéculaire si ces moyens sont présents entre des premiers motifs d'extraction (formant une pleine couche dans la première surface d'extraction) et/ou dans la zone de couplage optique.

On préfère des premiers moyens de masquage réfléchissant congruents et même (directement) sur les premiers moyens d'extraction ou ne dépassant pas de plus de 2mm et même moins de 1mm pour :
- préserver la transparence globale dans la première surface d'extraction et dans la zone de couplage (avant le motif d'extraction le plus proche de la première tranche)
- et/ou préserver le guidage par réflexion totale interne -notamment à l'aide du premier isolateur optique- qui permet une meilleure efficacité extraction que la réflexion spéculaire.

Il en est de même pour les deuxièmes moyens de masquage. On préfère des deuxièmes moyens de masquage réfléchissant congruents et même (directement) sur les deuxièmes moyens d'extraction ou ne dépassant pas de plus de 2mm et même moins de 1mm

De préférence les premiers (respectivement deuxièmes) moyens de masquages réfléchissants ou opaques ne sont pas en contact direct avec le premier (respectivement deuxième) isolateur optique notamment couche poreuse.

Les premiers moyens de masquages réfléchissants peuvent être un revêtement (une argenture, ou une mono ou multicouche minces avec au moins une couche fonctionnelle métallique telle qu'une couche argent et/ou aluminium et/ou cuivre et/ou or) (directement) sur les premiers moyens d'extraction ou sur la face interne (premiers moyens d'extraction sur la face extérieure) ou encore sur le premier intercalaire de feuilletage orienté côté face interne voire face de collage voire sur un support additionnel (transparent par exemple film plastique, verre).

Les deuxièmes moyens de masquages (de préférence opaques, ou réfléchissants) sont de préférence de matière identique aux premiers moyens déjà décrits et même en congruence.

L'ensemble premier vitrage/premiers moyens d'extraction/premiers moyens de masquage peut être de préférence identique à l'ensemble deuxième vitrage/deuxièmes moyens d'extraction/deuxièmes moyens de masquage.

De préférence, entre le premier isolateur optique qui est un film bas indice (détaillé plus tard) et la face interne on n'ajoute pas d'autres éléments que ceux précités. De préférence, entre le deuxième isolateur optique qui est un film bas indice (détaillé plus tard) et la face de collage on n'ajoute pas d'autres éléments que ceux précités.

Les premiers et deuxièmes moyens de masquage (notamment opaques) peuvent être confondus lorsque les deuxièmes motifs diffusants sont en congruence avec les premiers motifs diffusants et:
- de préférence les premiers moyens de masquage opaques absorbent les longueurs d'onde principales de C1, C3 (et le cas échéant de C2, voire C4), notamment sont noirs ou surépais (blanc etc)
- ou les premiers moyens de masquages réfléchissent les longueurs d'onde principales de C1, C3 (et le cas échéant de C2, voire C4).

Autrement dit, les premiers moyens de masquage, distants des deuxièmes moyens d'extraction et de préférence (directement) sur les premiers moyens d'extraction, servent alors à réaliser la vision à sens unique tant coté premier vitrage que coté deuxième vitrage. Toutefois, par sécurité, même dans cette configuration de congruence (même forme, même taille, coïncidence), on préfère ajouter des deuxièmes moyens de masquage (opaques) distincts :
- comme renfort d'opacité (au cas où les premiers moyens opaques ont une TL encore trop élevée)
- ou comme renfort de réflexion lumineuse (au cas où les premiers moyens réfléchissants ont une TL encore trop élevée).

On préfère un revêtement opaque, notamment congruent avec les moyens d'extraction, comme un émail, une encre, une peinture.

Les deuxièmes moyens de masquage aux premiers moyens sont identiques d'un point de vue opacité ou complémentaires des premiers moyens pour l'opacité de toutes les longueurs d'ondes principales C1, C3 (C2, C4 et autres éventuelles), mieux de toutes les longueurs d'ondes émises par les première et deuxième sources. Côté face interne ou de collage en regard des premiers moyens ou des deuxièmes moyens de masquage, le facteur de transmission de chaque longueur d'onde principale étant de préférence d'au plus 1% ou même d'au plus 0,5%.

Avantageusement, les premiers moyens d'extraction sont sur la face interne, les premiers moyens de masquage comprennent (sont constitués de) une couche opaque, voire réfléchissante, en congruence et (directement) sur les premiers moyens d'extraction, le facteur de transmission aux longueurs d'onde principales de C1 et/ou C2 et/ou C3 et/ou C4 (de préférence rouge et/ou vert) mieux dans tout le visible côté face interne en regard des premiers moyens de masquage étant de préférence d'au plus 1% ou même d'au plus 0,5% et de préférence les deuxièmes moyens d'extraction sont sur la face de collage, les deuxièmes moyens de masquage comprennent (sont constitués de) une couche opaque, voire réfléchissante, en congruence et (directement) sur les deuxièmes moyens d'extraction, le facteur de transmission aux longueurs d'onde principales de de C1 et/ou C2 et/ou C3 et/ou C4 (de préférence rouge et/ou vert, de préférence complémentaire ou en renfort des premiers moyens de masquage) mieux dans tout le visible côté face de collage en regard des deuxièmes moyens de masquage étant de préférence d'au plus 1% ou même d'au plus 0,5%.

Et la première surface d'extraction peut être congruence avec la deuxième surface d'extraction et même à l'intérieur les premiers moyens de masquage et d'extraction peuvent être congruents avec les deuxièmes moyens de masquage et d'extraction.

Dans un mode de réalisation préféré pour réaliser la vision à sens unique de chacun des premiers et deuxièmes motifs d'extraction, les premiers moyens d'extraction comprennent (sont constitués de) une couche diffusante d'émail - notamment contenant un pigment minéral de préférence blanc- sur la face interne, les premiers moyens de masquage comprennent (sont constitués de) une couche d'émail opaque -notamment contenant un pigment minéral (noir ou coloré voire blanc)- en congruence et (directement) sur la couche diffusante d'émail, le facteur de transmission aux longueurs d'onde principales de C1 et/ou C2 et/ou C3 et/ou C4 (de préférence vert et/ou rouge) mieux dans le visible côté face interne en regard des premiers moyens de masquage étant de préférence d'au plus 1% (et même d'au plus 0,5%).

Et de préférence les deuxièmes moyens d'extraction comprennent (sont constitués de) une couche diffusante d'émail -notamment contenant un pigment minéral- sur la face de collage, les deuxièmes moyens de masquage (éventuels) comprennent (sont constitués de) une couche opaque d'émail -contenant un pigment minéral (noir ou coloré voire blanc)- en congruence et (directement) sur la couche diffusante d'émail, le facteur de transmission aux longueurs d'onde principales de C1 et/ou C2 et/ou C3 et/ou C4 (de préférence complémentaire ou en renfort des premiers moyens de masquage, de préférence rouge et/ou vert) mieux dans le visible côté face de collage en regard des deuxièmes moyens de masquage étant de préférence d'au plus 1% (et même d'au plus 0,5%).

Et la première surface d'extraction peut être congruente avec la deuxième surface d'extraction et même, mieux, les premiers moyens de masquage et d'extraction peuvent être congruents avec les deuxièmes moyens de masquage et d'extraction.

La couche diffusante est de préférence blanche, définie par une clarté L* d'au moins 50. De préférence, le pigment minéral est choisi de telle sorte qu'il présente une coloration blanche. Ce pigment est notamment l'oxyde de titane TiO₂. Avantageusement, ce pigment minéral blanc présente une clarté L* telle que définie dans le modèle de représentation chromatique CIE Lab (1931) qui varie de 65 à 85, mesurée sur le premier vitrage.

La clarté L* peut être mesurée dans les conditions de la recommandation CIE (1931) utilisant un illuminant D₆₅, un observateur à 10°, en mode SCE (composante spéculaire exclue) diffuse 8° (CM 600 Minolta).

L'épaisseur (humide ou finale) de la couche diffusante en émail est de préférence supérieure à l'épaisseur de la couche en émail opaque (directement) dessus.

Pour les premiers (et même les deuxièmes) moyens de masquage, le pigment minéral est choisi de préférence parmi les pigments qui permettent de conférer une couleur noire. A titre d'exemples, on peut citer les pigments à base de chrome, de fer, de manganèse, de cuivre et/ou de cobalt, notamment sous forme d'oxydes ou de sulfures. Bien que les pigments à base de chrome permettent d'avoir une couleur noire intense, ils ne sont pas préférés du fait des problèmes liés à leur toxicité potentielle et à leur recyclage. Ainsi, de façon préférée, le pigment minéral est exempt de chrome.

Avantageusement, le pigment minéral noir présente une clarté L* telle que définie dans le modèle de représentation chromatique CIE Lab (1931) qui est inférieure ou égale à 15, de préférence inférieure ou égale à 10, mesurée coté masquage.

Le pigment minéral pour le masquage peut être d'une couleur différente que le noir, et est par exemple à base de Cr₂O₃ (coloration verte), de Co₃O₄ (coloration bleue), de bleu de cobalt, à base d'oxyde de fer, de Fe₂O₃ (brun).

La fritte de verre de la couche diffusante est exempte d'oxyde de plomb PbO pour des raisons liées à la préservation de l'environnement.

De préférence, la fritte de verre est un borosilicate à base d'oxyde de bismuth Bi₂O₃ et/ou d'oxyde de zinc ZnO. Par exemple, la fritte de verre à base de Bi₂O₃ contient 35 à 75 % en poids de SiO₂ et 20 à 40 % en poids de Bi₂O₃ et avantageusement 25 à 30 %.Par exemple, la fritte de verre à base de ZnO contient 35 à 75 % en poids de SiO₂ et 4 à 10 % en poids de ZnO.

La fritte de verre a par exemple la composition suivante (en pourcentage pondéral) : 54 % de SiO₂, 28,5 % de Bi₂O₃, 8 % de Na₂O, 3,5 % d'Al₂O₃ et 3 % de TiO₂, le reste étant constitué de BaO ; CaO, K₂O, P₂O₅, SrO et ZnO.

La fabrication d'un assemblage des motifs discrets noir/blanc est décrit dans le brevet WO2012/172269 (sous forme inversée aux motifs diffusants/opaques selon l'invention) ou encore le EP1549498.

La face externe (respectivement extérieure) est de préférence libre (de revêtement, couvrant) hormis éventuellement les premiers moyens d'extraction (respectivement deuxièmes moyens d'extraction).

La plupart des rayons sont guidés par réflexion totale interne à l'interface air face externe et à l'interface premier intercalaire et premier isolateur optique. Le premier (deuxième) isolateur optique, le premier (deuxième) intercalaire de feuilletage sont transparents et d'indices de réfraction adaptés pour la propagation des rayons guidés. La plupart des rayons qui sont réfractés et atteignent le premier isolateur optique sont réfléchis sauf les rayons à fort angle allant dans une zone proche du couplage optique dite première zone de marge comme détaillé plus tard. De préférence, on cache les points chauds sur la largeur W au moins d'1 cm et de préférence d'au plus 5 cm et mieux 3-cm par un profilé.

Les première et deuxième sources de lumière sont agencés de préférence du même côté de l'ensemble vitré (première et deuxième tranches sont du même côté) si les tranches opposées aux première et deuxième tranches sont visibles. L'ensemble vitré lumineux peut comporter en périphérie de la première tranche et de la deuxième tranche, un profilé, notamment au moins en partie métallique, dépassant sur la face externe de préférence sur une distance W entre 1cm et 3cm, renfermant ou porteur de la première source de lumière et de la deuxième source de lumière. Le profilé peut ainsi servir à masquer la vision des points chauds.

Le profilé n'est pas forcément en contact optique avec la face externe.

Le profilé peut être :
- collé, par colle ou double face opaque, qui va absorber les rayons à fort angle
- ou est collé par colle ou double face transparent, les rayons à fort angle sont réfléchis sur le profilé réflecteur et sortent plus loin ou sont absorbés par le profilé (à surface rendue) opaque.

L'invention a pour deuxième objet un ensemble vitré lumineux, notamment pour porte d'accès entre des premier et deuxième espaces comportant :
- un premier vitrage (transparent, clair, extraclair et mieux trempé), de préférence en verre minéral, et même trempé, voire organique, d'indice de réfraction n1 de préférence inférieur à 1,6 à 550nm (mieux dans l'ensemble du spectre visible), et même inférieur à 1,55 à 550nm (mieux dans l'ensemble du spectre visible) ou même encore inférieur ou égal à 1,53 à 550nm (mieux dans l'ensemble du spectre visible), de préférence de 1,5 à 1,53, avec des faces principales appelées face interne et face externe et une première tranche,
- une première source de lumière (visible), de préférence un ensemble de diodes électroluminescentes (sur un premier support PCB, alignées, en barrette(s)) voire une fibre optique extractrice avec source primaire de lumière (diode(s)), couplée optiquement au premier vitrage, par la première tranche voire par l'une des faces à la périphérie de la première tranche (notamment avec un logement des diodes), le premier vitrage guidant la lumière émise par la première source de lumière,
   première source de lumière pilotée en statique ou (de préférence) en dynamique pour émettre (de préférence dans le vert) à l'instant t0 un premier rayonnement principal à une première longueur d'onde dite λ1 (λ1 de préférence du vert) et de préférence commutable pour émettre (de préférence dans le rouge) à l'instant t'≠t0 un deuxième rayonnement principal à une deuxième longueur d'onde dite λ2 distincte de λ1 (de préférence distincte de λ1 d'au moins 20nm, 40nm et même d'au moins 80nm, λ2 de préférence du rouge), et notamment pour émettre (dans le blanc, le rouge ou le vert, le bleu) à t3#0 et t3#t' un rayonnement principal (décoratif ou fonctionnel) même encore distinct du premier et/ou du deuxième rayonnement principal,
- des premiers moyens d'extraction de lumière (issue du guidage) associés au premier vitrage, comportant un ou une pluralité de premiers motifs d'extraction (diffusants de préférence) et délimitant une première surface d'extraction (occupant tout ou partie de la face interne de préférence hors première zone de marge coté couplage optique avec la première source, notamment occupant une zone, comme une bande, de la première tranche à la tranche opposée hormis de préférence ladite première zone de marge), la lumière extraite étant visible côté face externe, les premiers moyens d'extraction (notamment couche diffusante blanche, de préférence définie par une clarté L* d'au moins 50) étant tels que la lumière extraite audit t0 est d'une première couleur dite C1 (C1 de préférence dans le vert, correspondant à un état passant d'une porte d'accès, C1 de rayonnement principal λ'1 sensiblement égal à λ1) et de préférence audit t' est d'une deuxième couleur dite C2 distincte de la première couleur C1 (C2 de préférence dans le rouge, correspondant à un stop pour une porte d'accès, C2 de rayonnement principal λ'2 sensiblement égal à λ2)
   notamment les premiers moyens d'extraction de lumière comprennent de préférence des moyens diffusants du côté de la face interne (de préférence sur la face interne, voire dans/sur un premier intercalaire de feuilletage etc) et/ou du côté de (même de préférence sur) la face externe et/ou dans la masse du premier vitrage, moyens éventuellement formant concentrateur de la lumière,
- des premiers moyens de masquage de la lumière extraite (des premiers moyens d'extraction) côté face interne, agencés côté face interne, au moins en regard des premiers moyens d'extraction, opaques (principalement absorbant) -notamment au moins absorbant aux longueurs d'onde principales de C1 et/ou C2 (et/ou de C3 et/ C4 défini plus tard) - ou réfléchissants (principalement réfléchissant), de préférence couvrant la première surface d'extraction et même la face interne
- entre les premiers moyens d'extraction et les premiers moyens de masquage, un premier isolateur optique transparent, d'indice de réfraction n2 tel que, aux longueurs d'onde de la première source de lumière (et mieux dans l'ensemble du spectre du visible), n1-n2 est d'au moins 0,08, même d'au moins 0,2 ou mieux 0,3, qui est au moins en regard de la face interne : entre les premiers motifs d'extraction (si plusieurs, ou dans le creux d'un motif fermé évidé), de préférence couvrant la première surface d'extraction, et/ou (de préférence et) en regard de la face interne entre la première tranche de couplage et (le bord adjacent de) la première surface d'extraction, et de préférence en regard de la face interne entre la première surface d'extraction et la tranche opposée à la première tranche, premier isolateur optique éventuellement couvrant sensiblement la face interne (hormis éventuellement une première zone dite de marge coté couplage optique avec la première source),
- en contact optique avec le premier vitrage, notamment séparé par une ou des couches, un deuxième vitrage (de préférence en verre minéral et même trempé voire organique (notamment rigide), transparent, clair, extraclair, et mieux trempé), d'indice de réfraction n'1 notamment inférieur à 1,6 à 550nm et même inférieur à 1,55 à 550nm (mieux dans l'ensemble du spectre visible)ou même encore inférieur ou égal à 1,53 à 550nm (mieux dans l'ensemble du spectre visible), de préférence de 1,5 à 1,53, avec des faces principales appelées face de collage et face extérieure, la face de collage étant en regard de la face interne, et une tranche, dite deuxième tranche (alignée ou décalée de la première tranche vers l'extérieur de l'ensemble vitré, laissant une bande périphérique de la face de collage dépassante de la première tranche ou de la tranche opposée à la première tranche),
- une deuxième source de lumière, de préférence un ensemble de diodes électroluminescentes (sur un deuxième support PCB, alignées, en barrette(s)), de préférence identique à la première source de lumière), voire une fibre optique extractrice avec source primaire de lumière (diode(s)), couplée optiquement au deuxième vitrage, par la deuxième tranche voire par l'une des faces à la périphérie de la deuxième tranche (notamment avec un logement des diodes), le deuxième vitrage guidant la lumière émise par la deuxième source de lumière, (deuxième tranche du côté de la première tranche, alignée ou décalée vers l'intérieur de l'ensemble vitré, ou côté opposé à la première tranche),
la deuxième source de lumière étant pilotée, en statique ou en dynamique (de préférence) pour émettre audit t0 (de préférence dans le rouge) un troisième rayonnement principal à une longueur d'onde dite λ3 distincte de λ1 (de préférence distincte de λ1 d'au moins 20nm, 40nm et même d'au moins 80nm, λ3 de préférence λ3 du rouge) et même de préférence sensiblement égale à λ2 et de préférence, en dynamique, pour émettre (de préférence dans le vert) audit instant t' un quatrième rayonnement principal à une longueur d'onde dite λ4 distincte de λ3 (de préférence distincte de λ3 d'au moins 20nm, 40nm et même d'au moins 80nm, λ4 de préférence du vert), voire distincte de λ2, et de préférence sensiblement égale à λ1, et notamment pour émettre (dans le blanc, le rouge ou le vert, le bleu) à t3#0 et t3#t' un rayonnement principal (décoratif ou fonctionnel) même encore distinct du troisième et/ou quatrième (même du premier et/ou du deuxième) rayonnement principal,
- des deuxièmes moyens d'extraction de lumière associés au deuxième vitrage, comportant un ou une pluralité de deuxièmes motifs d'extraction (diffusants de préférence) et délimitant une deuxième surface d'extraction (occupant tout ou partie de la face de collage de préférence hors deuxième zone de marge coté couplage optique avec la deuxième source, notamment occupant une zone, comme une bande, de la deuxième tranche à la tranche opposée hormis de préférence ladite deuxième zone de marge),
la lumière extraite du deuxième vitrage étant visible côté face extérieure, la deuxième surface d'extraction étant de préférence en regard et même congruente de la première surface d'extraction , deuxièmes moyens d'extraction de lumière (notamment couche diffusante blanche, de préférence définie par L* d'au moins 50) tels que la lumière extraite à t0 est d'une couleur dite C3 distincte de C1 (C3 de préférence dans le rouge, correspondant à un stop pour une porte d'accès, C3 de rayonnement principal λ'3 sensiblement égal à λ3, distinct de λ'1) d'au moins 20nm, 40nm et même 80nm, de préférence λ'3 du rouge), de préférence sensiblement égale à C2 (λ'3 sensiblement égal à λ'2) et de préférence audit t' la lumière extraite est d'une couleur dite C4 distincte de C3 (C4 de préférence dans le vert, correspondant à un état passant d'une porte d'accès, C4 de rayonnement principal λ'4 sensiblement égal à λ4, distinct de λ'3 d'au moins 20nm et même 40nm ou 80nm, λ'4 du vert), voire distinct de C2, de préférence sensiblement égale à C1 (λ'4 sensiblement égal à λ'1,),
- des deuxièmes moyens de masquage de la lumière extraite côté face de collage, agencés côté face de collage, au moins en regard des deuxièmes moyens d'extraction, opaques (principalement absorbant) ou réfléchissants (principalement réfléchissant), de préférence couvrant la deuxième surface d'extraction et même la face de collage,
- entre les deuxièmes moyens d'extraction et les deuxièmes moyens de masquage, un deuxième isolateur optique transparent, d'indice de réfraction n'2 tel que, aux longueurs d'onde de la deuxième source de lumière (et mieux dans l'ensemble du spectre du visible) n'1-n'2 est d'au moins 0,08, même d'au moins 0,2 ou 0,3 qui est au moins en regard de la face de collage : entre les deuxièmes motifs d'extraction (si plusieurs, ou encore dans le vide d'un motif fermé évidé), de préférence couvrant la deuxième surface d'extraction, et/ou de préférence en regard de la face de collage entre la deuxième tranche de couplage (et le bord adjacent de) la deuxième surface d'extraction, et même de préférence en regard de la face de collage entre la deuxième surface d'extraction et la tranche opposée à la deuxième tranche, éventuellement deuxième isolateur optique couvrant sensiblement la face de collage (hormis éventuellement une deuxième zone dite de marge coté couplage optique avec la deuxième source).

Le premier isolateur, a une première surface principale côté face interne (et une deuxième surface principale côté face de collage) :
- la première surface principale est (directement) sur la face interne (éventuellement -localement- sur les premiers moyens d'extraction côté face interne)
- ou le premier isolateur étant feuilleté par la première surface principale au premier vitrage au moyen d'un premier intercalaire de feuilletage, en première matière polymérique (de préférence thermoplastique voire thermodurcie) transparente, qui est d'indice de réfraction n3 tel que n3-n1, en valeur absolue, est inférieur à 0,05 et même inférieur à 0,03, aux longueurs d'onde de la première source de lumière.

Le deuxième isolateur optique, ayant une troisième surface principale côté face de collage (et une quatrième surface principale côté face interne) :
- la troisième surface principale est (directement) sur la face de collage (éventuellement -localement- sur les deuxièmes moyens d'extraction côté face de collage),
- ou le deuxième isolateur optique est feuilleté par ladite troisième surface principale au deuxième vitrage au moyen d'un deuxième intercalaire de feuilletage, en deuxième matière polymérique transparente (de préférence thermoplastique voire thermodurcie- de préférence identique ou similaire à la première matière-), qui est d'indice de réfraction n'3 tel que n'3-n'1, en valeur absolue, est inférieur à 0,05 et même inférieur à 0,03 aux longueurs d'onde de la deuxième source de lumière.

Et l'ensemble vitré comprend entre le premier isolateur optique et le deuxième isolateur optique, un intercalaire de feuilletage dit central, en matière polymérique dite troisième matière, notamment pour assembler premiers et/ou deuxièmes moyens de masquage, notamment transparente (de préférence thermoplastique voire thermodurcie- de préférence identique ou similaire à la première matière).

On utilise ici deux isolateurs optiques encadrant les premiers et deuxièmes moyens de masquage feuilletés (moyens qui peuvent être confondus comme décrit plus tard) pour la vision à sens unique sur chacun des vitrages :
- le premier isolateur empêchant que le premier et deuxième (éventuel) rayonnements principaux ne soient absorbés par les premiers moyens de masquage sous peine de limiter fortement l'extraction de certains des premiers motifs diffusants surtout les plus éloignés de la première source,
- le deuxième isolateur empêchant que les troisième et (éventuel) quatrième rayonnements principaux ne soient absorbés par les deuxièmes moyens de masquage sous peine de limiter fortement l'extraction de certains des deuxièmes motifs diffusants surtout les plus éloignés de la deuxième source.

La deuxième surface d'extraction est de préférence en regard de la première surface d'extraction, et même :
- (entièrement) congruente, de la première surface d'extraction
- ou au moins avec une zone congruente et avec une autre zone décalée de la première surface d'extraction (horizontalement et/ou verticalement), laissant visible les deuxièmes moyens de masquage,
- ou encore est de taille inférieure à la première surface d'extraction et inscrite dans la première surface d'extraction en congruence avec une zone de la première surface d'extraction, (une partie des premiers moyens de masquage restant visibles).

La première surface d'extraction peut être congruente avec la deuxième surface d'extraction et/ou les premiers moyens de masquage et d'extraction peuvent être congruents avec les deuxièmes moyens de masquage et d'extraction.

On entend selon l'invention (premier comme deuxième objet) par deuxième surface d'extraction congruente avec une première surface d'extraction une surface de même forme (contour général) et une même taille et une coïncidence exacte ou avec une résolution latérale submillimétrique même d'au plus 500µm et même 100µm. Les première est deuxième surface sont généralement des surfaces avec des discontinuités. A l'intérieur des surfaces d'extraction les deuxièmes motifs d'extraction sont de préférence congruents avec les premiers motifs d'extraction.

On entend selon l'invention par premiers motif(s) opaques congruents avec premiers motif(s) d'extraction, en surface pleine, pour chaque motif opaque une même forme et une même taille, et une coïncidence avec une résolution latérale submillimétrique même d'au plus 500µm et même 100µm.

On entend selon l'invention par deuxièmes motif(s) d'extraction congruents avec premiers motif(s) d'extraction, en surface pleine, pour chaque deuxième motif une même forme et une même taille, et une coïncidence avec une résolution latérale submillimétrique même d'au plus 500µm et même 100µm.

Par exemple, des premiers motifs en disques et des deuxièmes motifs en carrés sont considérés comme congruents en satisfaisant la résolution latérale précitée. Des premiers motifs en disques et des deuxièmes motifs en disques plus petits sont considérés comme congruents avec la résolution latérale précitée.

La deuxième surface peut être plus grande que la première surface d'extraction et comprendre une zone congruente (et mieux avec des deuxièmes motifs d'extraction congruents aux premiers motifs d'extraction) et une zone décalée de la première surface d'extraction.

La deuxième surface peut être plus petite que la première surface d'extraction et inscrite dedans, donc avec une zone congruente (et mieux avec des deuxièmes motifs d'extraction congruents aux premiers motifs d'extraction). La première surface peut avoir donc une zone d'extraction masquée qui n'est pas en regard d'une deuxième surface d'extraction.

Pour une meilleur sécurité, en particulier pour une porte d'accès, on préfère choisir de feuilleter les premier et deuxième vitrages et d'utiliser un premier (et deuxième) isolateur optique en contact optique avec ces vitrages. En variante, en particulier pour le premier objet, on supprime les premier et deuxième isolateurs optiques et les premier et deuxième intercalaires de feuilletage, les premier et deuxième vitrages sont espacés par de l'air (isolateur optique idéal) et assemblés (sceller) en périphérie de préférence avec des espaceurs, par exemple comme un double vitrage (un vitrage isolant ou sous vide). Les premiers moyens de masquage sont de préférence en congruence et espacés des deuxièmes moyens de masquage.

Sur la tranche de l'ensemble vitré, du côté opposé à la première (et même deuxième tranche) on peut rajouter un joint polymérique par exemple noir, élastomère. Ce joint ne gêne pas le guidage, il n'est de préférence pas en contact optique avec la face externe (même extérieure) et est de largeur inférieure à 3cm et peut loger mêmes d'autres sources de lumière couplées optiquement. Ce joint peut être rajouté sur un profilé de montage de l'ensemble vitré (ou de fixation de sources de lumière) métallique par exemple de section en U.

Dans ce deuxième objet, les premiers et deuxièmes moyens de masquage peuvent être confondus lorsque les deuxièmes moyens d'extraction (motif(s)) sont en congruence avec les premiers moyens d'extraction et/ou lorsque les premiers moyens de masquage couvrent (sensiblement) la face interne et la face de collage (notamment à une ou des zones de marge près connexes aux couplages optiques), en particulier comportent ou sont un revêtement opaque (noir , coloré, même blanc,) voire un film opaque.

Dans ce deuxième objet, les premiers moyens de masquage comprennent (mieux sont constitués de) de préférence un revêtement opaque, comme une encre, une peinture ou un émail, notamment un encre (imprimée) ou peinture sur l'intercalaire central de feuilletage (côté face interne ou face de collage), un revêtement opaque sur un support additionnel notamment plastique ou verre minéral (souple comme un (poly(téréphtalate d'éthylène) dit PET, ou encore un verre (ultra)mince), éventuellement collant ou feuilleté au premier vitrage. Par exemple il s'agit d'un verre laqué de moins de 3mm comme le produit Planilaque Evolution ou Décolaque de la société Demanderesse feuilleté par l'intercalaire de feuilletage central.

Naturellement, le premier rayonnement présente une première gamme spectrale donnée. Naturellement le deuxième rayonnement présente une deuxième gamme spectrale donnée.

On entend par premier (resp. deuxième) rayonnement principal selon l'invention le rayonnement le plus intense dans la gamme spectrale émise à l'instant t0 (resp. t') par la première source de lumière. Et on entend par troisième (reps. quatrième) rayonnement principal selon l'invention le rayonnement le plus intense dans la gamme spectrale émise à l'instant t0 (resp t') par la deuxième source de lumière.

De préférence la gamme spectrale du premier rayonnement est étroite d'au plus 50nm et est sans recouvrement avec la gamme spectrale du deuxième rayonnement également étroite ou avec un recouvrement de moins de 50nm pour des intensités normalisés inférieures à 0,15, par exemple recouvrement entre le rouge et l'ambre ou entre le vert et le bleu.

De préférence on recherche les couleurs de signalisation communément employées actuellement. Donc :
- à t0 : la première source émet dans le vert avec λ1 dans une gamme allant de 515nm à 535nm et de préférence de largeur spectrale à mi-hauteur de moins de 50nm (et la lumière extraite C1 est verte définie par un premier rayonnement extrait principal à λ1' sensiblement égal à λ1, par exemple distinct d'au plus 10nm ou 5nm et de préférence avec une largeur spectrale à mi-hauteur de moins de 30nm),
   la deuxième source émet dans le rouge avec λ3 dans une gamme allant de 615nm à 635nm et de préférence de largeur spectrale à mi-hauteur de moins de 30nm (et la lumière extraite C3 est rouge définie par un troisième rayonnement extrait principal à λ3' sensiblement égal à λ3, par exemple distinct d'au plus 10nm ou 5nm et de préférence avec une largeur spectrale à mi-hauteur de moins de 30nm) ou encore du blanc
   et à t' la première source émet dans le rouge avec λ2 dans une gamme allant de 615nm à 635nm et de préférence de largeur spectrale à mi-hauteur de moins de 30nm (et la lumière extraite C2 est rouge définie par un deuxième rayonnement extrait principal à λ1' sensiblement égal à λ1, par exemple distinct d'au plus 10nm ou 5nm et de préférence avec une largeur spectrale à mi-hauteur de moins de 30nm)
   et de préférence la deuxième source émet dans le vert avec λ4 dans une gamme allant de 515nm à 535nm et de préférence de largeur spectrale à mi-hauteur de moins de 50nm (et la lumière extraite C4 est verte définie par un quatrième rayonnement extrait principal à λ4' sensiblement égal à λ4, par exemple distinct d'au plus 10nm ou 5nm et de préférence avec une largeur spectrale à mi-hauteur de moins de 30nm) ou alternativement la première source continue d'émettre dans le rouge avec λ4 dans une gamme allant de 615nm à 635nm et de préférence de largeur spectrale à mi-hauteur de moins de 30nm (et la lumière extraite C4 est rouge définie par un quatrième rayonnement extrait principal à λ4' sensiblement égal à λ1, par exemple distinct d'au plus 10nm ou 5nm et de préférence avec une largeur spectrale à mi-hauteur de moins de 30nm).
   Et de préférence :
   - les premiers moyens d'extraction sont diffusants par dépoli de la face externe et les deuxièmes moyens d'extraction sont diffusants par dépoli de la face extérieure
   - ou, mieux, les premiers moyens d'extraction comportent une couche diffusante (blanche, en émail) de préférence côté face interne et les deuxièmes moyens d'extraction comportent une couche diffusante (blanche, en émail) de préférence côté face de collage.

Une autre configuration est que par exemple à t3 chaque source émette dans le vert ou dans le blanc. Il est aussi possible qu'une des sources soit éteinte (donc configurations suivantes : rouge et état off; vert et état off; blanc et état off). Il peut exister des zones décoratives de couleurs distinctes.

De manière avantageuse, la première source de lumière est un ensemble de diodes électroluminescentes -de préférence alignées- sur une carte de circuit imprimé dite premier support PCB (de préférence barrette) et couplées à la première tranche, et la deuxième source de lumière est un ensemble de diodes électroluminescentes -de préférence alignées- sur une carte de circuit imprimé dite deuxième support PCB et couplées à la deuxième tranche qui est de préférence aligné (voire décalée) de la première tranche ou alignée ou même décalée de la tranche opposée à la première tranche.

Les premier et deuxième supports PCB sont espacés, jointifs ou en un support PCB commun (première et deuxième tranche du même côté) par exemple collé avec une colle thermique à un profilé métallique.

Le premier (deuxième) support PCB ou le support commun peut être un composite de résine (époxy) renforcé de fibres de verre (souvent dit FR-4), métallique (aluminium, cuivre, etc). Il est de préférence d'épaisseur millimétrique (moins de 10mm de préférence) ou même d'au plus 1mm.

Naturellement l'ensemble vitré peut fonctionner aussi en mode statique c'est-à-dire proposer uniquement la combinaison C1 et C3 (ou C1 et état off de C2, ou C3 et état off de C4 éventuel). Dans ce cas, la première source de lumière peut même ne contenir que des premières diodes à λ1 et la deuxième source de lumière ne contenir que des troisièmes diodes à λ3.

A t0 la première source comporte une première diode qui émet dans le vert avec λ1 dans une gamme allant de 515nm à 535 nm, et à t' la première source comporte une deuxième diode qui émet dans le rouge avec λ2 dans une gamme allant de 615nm à 635nm.

La réponse de l'oeil est meilleure pour le vert que pour le rouge et en outre le verre (minéral ou organique) absorbe plus le rouge que le vert. On peut donc percevoir un rouge trop pale.

Aussi, de préférence, le circuit électrique de la première diode est ajusté (résistance(s) adaptée(s) etc) pour que le flux F1 (ou la puissance) émis par la première diode soit inférieur à 0,8, même inférieur à égal à 0,7 ou 0,6 fois le flux F2 (ou la puissance) émis par la deuxième diode. De préférence, il en est de même pour la deuxième source de lumière émettant dans le rouge à t0 puis dans le vert à t'.

Pour avoir un flux F1 inférieur à celui de F2 on peut ajuster l'intensité lumineuse de la diode rouge pour qu'elle soit supérieure à celle de la diode verte et/ou avoir sur le premier support PCB un nombre de diodes rouges par unité de longueur de support PCB supérieure au nombre de diodes vertes par unité de longueur de support PCB.

De préférence, il en est de même pour la deuxième source de lumière émettant dans le rouge à t0 puis dans le vert à t'.

Par exemple, on peut avoir sur le premier support PCB (respectivement le deuxième) n fois la séquence suivante, n entier supérieur ou égal à 1 : deux diodes rouges /une diode verte...

Dans le cas d'un support PCB commun on peut avoir :
- pour le premier ensemble de diodes n fois la séquence suivante, n entier supérieur ou égal à 1 : deux diodes rouges /une diode verte...
- pour le deuxième ensemble de diodes n' fois la séquence suivante, n' entier supérieur ou égal à 1 de préférence égal à n: deux diodes rouges /une diode verte...

La luminance à la normale côté face externe (resp. face extérieure) avec C1 verte (ou C2 rouge) est de préférence d'au moins 80cd/m² en particulier pour les portes d'accès. La luminance à la normale côté face externe (resp. face extérieure) est de préférence uniforme à +/- 10 cd/m².

A to, la luminance à la normale côté face externe avec C1 verte peut être inférieure à la luminance à la normale côté face externe avec C2 rouge côté face externe pour tenir compte de la réponse de l'oeil, en particulier pour les portes d'accès.

Les première et deuxième sources de lumière sont agencés de préférence du même côté de l'ensemble vitré (notamment si tranches opposées libres) et notamment masquées par un profilé de montage de l'ensemble vitré qui même aussi porter première et deuxième sources de lumière.

La première source de lumière est de préférence un premier ensemble de diodes électroluminescentes -de préférence alignées- sur une carte de circuit imprimé dit premier support PCB (de préférence barrette) et couplées à la première tranche en étant collées à la première tranche par une colle optique ou un adhésif double face transparent ou en étant espacés de la première tranche d'au plus 5mm et même d'au plus 2mm -par de l'air (ou du vide). Et la deuxième source de lumière est de préférence un deuxième ensemble de diodes électroluminescentes -de préférence alignées- sur une carte de circuit imprimé dit deuxième support PCB et couplées à la deuxième tranche :
- en étant collées à la deuxième tranche par une colle optique ou un adhésif double face transparent (d'épaisseur inférieure à 50µm) lorsque les diodes sont avec une encapsulation primaire
- ou en étant espacés de la deuxième tranche d'au plus 5mm et même d'au plus 2mm -par un espace, par de l'air (ou du vide)- notamment lorsque les diodes sont sans encapsulation primaire.

Les premier et deuxième supports PCB peuvent être sur un support commun PCB si les première et deuxième tranches sont du même côté et de préférence sensiblement alignées (pour une distance d'au plus 5mm et même d'au plus 2mm entre diodes et première ou deuxième tranches).

Pour des diodes à émission par le haut (diodes classiques), le support commun PCB peut donc être suffisamment large pour porter premier et deuxième ensembles de diodes. Le support commun PCB (et les diodes) peut même être collé sur les première et deuxième tranches de l'ensemble vitré par une colle optique ou un adhésif double face transparent surtout lorsque les diodes sont avec une encapsulation primaire.

Pour des diodes à émission latérale, le support commun porte le premier ensemble sur une première face principale et le deuxième ensemble sur la face opposée. On préfère alors un PCB en métal pour la dissipation thermique. Alternativement les PCB sont accolés ou espacés par exemple par une pièce métallique.

Le premier et deuxième vitrage forment un vitrage feuilleté (incluant les intercalaires, le ou les isolateurs optiques en film ou dépôt sur verre) comportant une tranche dite centrale entre première et deuxième tranches entre faces interne et de collage).

Surtout si leurs diagrammes de rayonnement est large (demi angle d'émission à mi hauteur d'au moins 50° voire d'au moins 60° par exemple) et même lorsque les faces émettrices sont à une distance des tranches d'au plus 5mm et même d'au plus 2mm, on peut prévoir un cloisonnement dit commun réfléchissant comme une pièce métallique (telle que l'aluminium etc) ou pièce avec deux revêtements réfléchissants (métalliques...) de part et d'autre ou encore opaque ou pièce avec deux revêtements opaques de part et d'autre, cloisonnement dit commun entre les première et deuxième sources de lumière (diodes de préférence) si elles sont agencés du même côté de l'ensemble vitré, notamment du vitrage feuilleté (notamment sans décalage notable, de plus de 1mm, de la première tranche et de la deuxième tranche), empêchant tout ou partie de la réfraction de la lumière émise par la première source de lumière (diodes) à la tranche centrale et empêchant tout ou partie de la réfraction de la lumière émise par la deuxième source de lumière (diodes) à la tranche centrale.

Le premier et/ou deuxième support PCB ou encore un support PCB dit support PCB commun formant les premier et deuxième supports PCB a par exemple une face principale en regard des première et deuxième tranches et le premier et/ou le deuxième support PCB ou encore le support PCB commun porte le cloisonnement commun.

Notamment si les sources de lumière (diodes) sont sur des côtés distincts (opposés voire adjacents) notamment opposés du vitrage feuilleté (donc première et deuxième tranches de deux côtés distincts notamment opposés du vitrage feuilleté, on prévoit un moyen dit premier cloisonnement, réfléchissant (comme une pièce métallique notamment aluminium etc) ou pièce avec un revêtement réfléchissant (métallique etc) ou encore opaque ou avec un revêtement opaque, empêchant tout ou partie de la réfraction de la lumière émise par la première source de lumière (diodes) à la tranche centrale et un moyen dit deuxième cloisonnement, réfléchissant (comme une pièce métallique notamment aluminium etc) ou pièce avec un revêtement réfléchissant (métallique etc) ou encore opaque notamment pièce avec un revêtement opaque, empêchant tout ou partie de la réfraction de la lumière émise par la deuxième source de lumière (diodes) à la tranche centrale.

Le premier (resp deuxième) cloisonnement de préférence réfléchit et/ou absorbe (tout ou partie, au moins la majorité) des rayons les plus latéraux -par exemple émettant dans le vert- de la première source (resp deuxième) non guidés dans la première tranche (resp deuxième) qui pourraient être guidés dans la tranche centrale et être extraits par les deuxièmes (resp. premiers) moyens d'extraction -par exemple voués à extraire du rouge-.

Le cloisonnement commun de préférence réfléchit et/ou absorbe (tout ou partie, au moins la majorité)
- des rayons les plus latéraux -par exemple émettant dans le vert - de la première source non guidés dans la première tranche qui pourraient être guidés dans la tranche centrale et être extraits par les deuxièmes moyens d'extraction -par exemple voués à extraire du rouge-,
- des rayons les plus latéraux -par exemple émettant dans le rouge - de la deuxième source (diodes) non guidés dans la deuxième tranche qui pourraient être guidés dans la tranche centrale et être extraits par les premiers moyens d'extraction -par exemple voués à extraire du vert-.

Selon l'invention, le cloisonnement commun peut être une pièce opaque (et/) ou métallique notamment une pièce en aluminium, parallèle au plan du vitrage feuilleté et contre la tranche centrale.

Selon l'invention, le cloisonnement commun peut être une pièce avec un revêtement opaque côté première source (diodes), (sensiblement) parallèle au plan du premier vitrage, et un revêtement opaque côté deuxième source (diodes), (sensiblement) parallèle au plan du deuxième vitrage.

Le premier cloisonnement opaque présente :
- une absorption (aux longueurs d'onde principales λ1, même λ2 même dans tout le visible) d'au moins 80% et même d'au moins 90% ou d'au moins 95%, et un facteur de transmission (aux longueurs d'onde principales de λ1, même λ2 et même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

Le deuxième cloisonnement opaque présente :
- une absorption (aux longueurs d'onde principales λ3, même λ4 même dans tout le visible) d'au moins 80% et même d'au moins 90% ou d'au moins 95%, et un facteur de transmission (aux longueurs d'onde principales de λ3, même λ4 et même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

Le cloisonnement commun opaque présente :
- une absorption (aux longueurs d'onde principales λ1, même λ2 même dans tout le visible) d'au moins 80% et même d'au moins 90% ou d'au moins 95%, et un facteur de transmission (aux longueurs d'onde principales de λ1, même λ2 et même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.
et:
- une absorption (aux longueurs d'onde principales λ3, même λ4 même dans tout le visible) d'au moins 80% et même d'au moins 90% ou d'au moins 95%, et un facteur de transmission (aux longueurs d'onde principales de λ3, même λ4 et même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

On pourrait à la limite choisir un cloisonnement diffusant à T_{L} faible (facteur de transmission dans le visible de moins de 2%) mais une partie des rayons peuvent rester gênants (guidés dans le verre et pas tous absorbés par une bande anti mélange).

Comme exemple de cloisonnement (opaque), on peut citer une pièce avec un dépôt (émail peinture..), avec un ruban adhésif monoface ou multiface opaque, sur deux faces latérales de la pièce (si cloisonnement commun).

Le cloisonnement commun (respectivement le premier ou le deuxième cloisonnement) peut être à réflexion diffuse ou spéculaire.

On préfère que le cloisonnement commun (respectivement le premier), comme une pièce avec revêtement opaque ou une pièce réfléchissante (métallique), ne dépasse pas sur la première tranche (resp. deuxième) ou dépasse de moins de 1mm.

Le cloisonnement commun notamment réfléchissant (respectivement le premier et/ou le deuxième) est de préférence d'épaisseur inférieure ou égale à l'épaisseur entre face interne et face de collage ou épaisseur de tranche dite centrale.

Le cloisonnement commun notamment réfléchissant, même métallique, (respectivement le premier et/ou le deuxième cloisonnement) comporte une pièce de préférence contre ou espacée de la tranche dite centrale d'au plus 1mm et même d'au plus 0,5mm.

De préférence le cloisonnement commun notamment réfléchissant (métallique) et la tranche centrale il n'y a pas de colle ou tout autre moyen de fixation.

Le cloisonnement commun comme une pièce (barrette) métallique ou avec revêtement(s) réfléchissant(s) ou opaque(s) peut être fixée (collée) ou dans une encoche d'un support PCB commun ou d'une autre pièce (profilé par exemple).

Le cloisonnement commun peut comporter une pièce (réfléchissante, métallique ou avec revêtements réfléchissants ou opaques), de préférence en saillie par rapport à la première source de lumière (diodes) et à la deuxième source (diodes) en direction de la première et de la deuxième tranche.

Mieux, le premier ensemble de diodes électroluminescentes et le deuxième ensemble de diodes électroluminescentes sont par exemple agencés du même côté du vitrage feuilleté et à émission par le haut (top émission en anglais), les première et deuxième tranches étant du même côté, et un support PCB dit support PCB commun, forme les premier et deuxième supports PCB et a une face principale en regard des premier et deuxième tranches et porte le cloisonnement de préférence réfléchissant (métallique comme l'aluminium) ou opaque, notamment pièce avec deux revêtements réfléchissants ou opaques, de préférence saillant par rapport aux première et deuxième ensemble de diodes électroluminescentes en direction des première et deuxième tranches.

Les premier et deuxième supports PCB peuvent être donc sur un support commun PCB si les première et deuxième tranches sont du même côté et de préférence sensiblement alignées (et mieux avec une distance d'au plus 5mm et même d'au plus 2mm entre diodes et première ou deuxième tranches).

Le support commun PCB (et les diodes) peut même être collé sur les première et deuxième tranches de l'ensemble vitré par une colle optique ou un adhésif double face transparent surtout lorsque les diodes sont avec une encapsulation primaire.

On peut donc prévoir un cloisonnement commun entre les premier et deuxième ensemble de diodes agencés du même côté du vitrage feuilleté (notamment sans décalage notable, de plus de 1mm, de la première tranche et de la deuxième tranche) qui est :
- une pièce (intrinsèquement) réfléchissante (métallique) ou opaque ou avec revêtement(s) réfléchissant(s) ou opaque(s) rapportée (fixée par tout moyen) sur un profilé (éventuellement de montage de l'ensemble vitré ou profilé de fixation de la première source de lumière à la première tranche, profilé de fixation au sein du volume intérieur défini par le profilé de montage) ou rapportée sur le support commun PCB ou l'un des premiers ou deuxième supports PCB distincts,
- ou encore une partie réfléchissante (métallique) ou opaque ou avec revêtement(s) réfléchissant(s) (métallique(s)) ou opaque(s) d'un profilé (de montage de l'ensemble vitré ou profilé de fixation de la première source de lumière à la première tranche, profilé de fixation au sein du volume intérieur défini par le profilé de montage) par exemple profilé de section en E ou double C voire en F ou même en T tourné à 90°
- ou si les diodes sont à émission latérale, le(s) support PCB réfléchissant ou opaques ou avec revêtement(s) réfléchissant(s) (métallique(s)) ou opaque(s), notamment support(s) PCB dans une gorge entre les premier et deuxième vitrages (notamment par un retrait des éléments entre premier et deuxième vitrage tels que le premier intercalaire, le premier isolateur, le deuxième intercalaire).

Un profilé de montage de l'ensemble vitré (à un portant, bloc etc) peut être un U (base en regard de la tranche de l'ensemble vitré et de part et d'autres deux ailes latérales sur les faces externe et extérieure) ou en E avec la branche centrale du E distant (espacé) de l'ensemble vitré (du vitrage feuilleté) de moins de 1mm ou même s'étendant dans une gorge entre les premier et deuxième vitrages. Il peut être métallique et/ou plastique (PVC, rigide) et/ou en bois. Il peut être métallique (préféré pour la dissipation thermique s'il porte les sources de lumière notamment PCB via de la colle thermique etc).

La base peut être espacée de préférence d'au plus 3cm et même d'au plus 1cm de la première tranche (et de la deuxième tranche).

La première aile peut être métallique et éventuellement avec un revêtement opaque (ruban adhésif noir monoface, dépôt noir ..), revêtement interne c'est-à-dire coté première source de lumière. Et la deuxième aile peut être métallique et éventuellement avec un revêtement opaque (ruban adhésif noir monoface, dépôt noir ..), revêtement interne c'est-à-dire coté deuxième source de lumière.

Un profilé de fixation de la première (et/ou deuxième) source de lumière à la première (et/ou deuxième tranche) peut être une base rectangulaire (barrette) ou de section en T, ou U (base en regard de la tranche de l'ensemble vitré et de part et d'autres deux ailes latérales par exemple sur les faces externe et extérieure) ou en E avec la branche centrale du E distante (espacée) de l'ensemble vitré (du vitrage feuilleté) de moins de 1mm ou même s'étendant dans une gorge entre les premier et deuxième vitrages. Il peut être métallique (préféré pour la dissipation thermique s'il porte les sources de lumière notamment PCB via de la colle thermique etc) et/ou plastique. Le profilé de fixation est de préférence :
- au sein du profilé de montage de l'ensemble vitré, espacés ou fixé dessus,
- ou encore est confondu avec le profilé de montage.

Sinon le premier (deuxième) support PCB (de préférence métallique) avec le premier (deuxième) ensemble de diodes peut être fixé à la première (deuxième) tranche sans utiliser de profilé de fixation additionnel, par une colle optique ou un ruban adhésif double face transparent.

En particulier, dans une configuration où les première et deuxième sources de lumière sont sur des côtés opposés, le deuxième vitrage (en étant de préférence de taille identique ou similaire du premier vitrage) dépasse de la première tranche formant une première zone dépassante et de préférence le premier vitrage dépasse de la deuxième tranche formant une deuxième zone dépassante et la première source de lumière (diodes sur support PCB) sur un premier support (métallique, profilé en U ou L ou barrette..) qui est lié à la première zone dépassante et/ou dans la première zone dépassante et ne dépassant pas de la deuxième tranche et de préférence la deuxième source de lumière (diodes sur support PCB) est sur un deuxième support (métallique, profilé en U ou L ou barrette...), qui est lié à la deuxième zone dépassante et/ou est dans la deuxième zone dépassante et ne dépassant pas de la première tranche.

Et même, la première bande de masquage, opaque de préférence, est dans la première région dépassante sur la face interne, notamment un adhésif opaque, et même une autre première bande de masquage est dans la première région dépassante sur la première face, notamment un adhésif opaque, et la deuxième bande de masquage, opaque de préférence, est dans la deuxième région dépassante notamment un adhésif opaque et même une autre deuxième bande de masquage, opaque de préférence, est dans la deuxième région dépassante sur la deuxième face notamment un adhésif opaque.

Le premier vitrage peut comporter :
- un évidement périphérique (local, sur une fraction de la longueur de la première tranche, latérale ou longitudinale)
- ou de préférence le deuxième vitrage dépasse de la première tranche, formant une première zone dépassante,
- et la première source de lumière (de préférence ensemble de diodes) sur un premier support, comme une carte à circuit imprimé dite premier support PCB (de diodes), qui est (avec la première source) dans l'évidement périphérique ou de préférence la première zone dépassante, et ne dépasse pas de la deuxième et même du plan de la face extérieure.

Et de préférence le premier support de source (PCB) est :
- fixé ((directement) ou via une embase) à la face de collage dans la première zone dépassante ou est dans l'évidement périphérique
- et/ou dans une gorge entre la face interne et la face de collage notamment si première source de lumière (diodes) à émission latérale,
- et/ou encore fixé à la première tranche par une colle optique ou un adhésif double face transparent.

Le deuxième vitrage peut dépasser de la première tranche par décalage avec le premier vitrage, en étant de préférence de taille identique ou similaire pour que du côté opposé le premier vitrage dépasse de la deuxième tranche par décalage avec le deuxième vitrage formant une deuxième zone dépassante. La deuxième source de lumière (de préférence ensemble de diodes) sur un deuxième support, comme une carte à circuit imprimé dite deuxième support PCB (de diodes), dans la deuxième zone dépassante, ne dépasse pas de de la première tranche du vitrage et même du plan de la face externe.

Et de préférence le deuxième support de source (PCB) est :
- fixé ((directement) ou via une embase) à la face interne dans la deuxième zone dépassante (ou est dans l'évidement périphérique)
- et/ou dans une gorge entre la face interne et la face de collage notamment si deuxième source de lumière (diodes) à émission latérale,
- et/ou encore fixé à la deuxième tranche par une colle optique ou un adhésif double face transparent.

On peut préférer un premier support PCB (resp. deuxième support PCB) métallique pour la dissipation thermique ou on le fixe par l'arrière à une embase métallique de préférence ne dépassant de la deuxième tranche (resp. première tranche) et même du plan de la face extérieure (resp. face externe). Cette embase peut être une barrette, de section en L voire en U.

Les premiers et deuxièmes moyens (éventuels) de masquage opaques empêchent la lumière extraite d'un vitrage de traverser jusqu'à atteindre l'autre vitrage.

De préférence, le premier vitrage avec les premiers moyens de masquage opaques présente en regard du masquage et coté masquage le plus éloigné du premier vitrage:
- une absorption (aux longueurs d'onde principales de C1 et/ou C2 et/ou C3 et/ou C4), même dans tout le visible) d'au moins 80% et même d'au moins 90%,
- un facteur de transmission (aux longueurs d'onde principales de C1 et/ou C2 et/ou C3 et/ou C4, même dans tout le visible) d'au plus 2% et même d'au plus 1% ou d'au plus 0,5% (notamment une TL d'au plus 2% et même d'au plus 1% ou d'au plus 0,5%)
- et/ou une densité optique d'au moins 2 et mieux d'au moins 2,5 et même 3 plus préférentiellement de 2,8 à 4,5 et en particulier de 3 à 4.

Lorsque des moyens de masquage opaques (revêtement opaque) sont doublés d'une couche réfléchissante, sur sa face tournée vers les moyens d'extractions, par exemple d'une mince couche métallique, il est suffisant que l'ensemble présente la densité optique, la transmission, l'absorption ci-dessus.

Pour le premier ou le deuxième objet, les premiers moyens opaques selon l'invention peuvent être noirs ou gris (foncés) mais aussi colorés s'ils sont distincts des deuxièmes moyens opaques et en congruence, comme par exemple à base d'au moins un pigment minéral (comme ceux déjà cités), et mieux couche d'émail opaque. On peut ainsi prévoir :
- les premiers moyens de masquage et les deuxièmes moyens de masquage sont chacun noirs (par pigment noir) ou gris
- les premiers moyens de masquage sont colorés absorbent le vert notamment sont à base de rouge: rouge marron, violet, orange, rose
- et les deuxièmes moyens de masquage sont colorés, absorbent le rouge notamment sont vert ou une autre couleur qui n'est pas à base de rouge, par exemple bleu, jaune, vert,
- les premiers moyens de masquage sont blancs (ou de toute autre couleur) mais absorbant de par leur épaisseur suffisante, par exemple par surépaisseur d'émail diffusant blanc (ou de toute autre couleur) formant premiers moyens d'extraction, les deuxièmes moyens de masquage sont blancs mais absorbant de par leur épaisseur suffisante (ou de toute autre couleur), par exemple par surépaisseur d'émail diffusant blanc formant deuxièmes moyens d'extraction.

On peut souhaiter ne pas voir les premiers moyens de masquage (ni même les deuxièmes) aussi de préférence la deuxième surface d'extraction est congruente avec la première surface d'extraction en particulier pour le premier objet, ou dans le deuxième objet si les moyens de masquage ne sont pas entièrement couvrant (dans le clair de vitre). Les premiers moyens de masquage sont alors invisibles grâce aux deuxièmes moyens d'extraction ou même grâce aux deuxièmes moyens de masquage si distincts (espacés) des premiers.

Des rayons à fort angle émis par la première source pourraient sortir dans une première zone périphérique (sans moyens d'extraction) et aller jusqu'à traverser le deuxième vitrage et sortent aussi (directement) par la face externe en particulier pour le premier objet, ou dans le deuxième objet si les moyens de masquage ne sont pas entièrement couvrant (dans le clair de vitre). Ces points chauds peuvent être cachés par exemple par un premier profilé (de montage, de fixation comme déjà décrit) opaque et/ou réfléchissant - de préférence métallique, voire plastique, ou bois - de préférence qui n'est pas en contact optique avec la face extérieure du deuxième vitrage (par ses irrégularités de surface) ou alors est collé et absorbe les rayons.

De même des rayons à fort angle émis par la deuxième source pourraient sortir dans une deuxième zone périphérique (sans moyens d'extraction) et jusqu'à traverser le premier vitrage et sortent aussi (directement) par la face extérieure. Ces points chauds peuvent être cachés par exemple par un deuxième profilé (de montage, de fixation comme déjà décrit) opaque et/ou réfléchissant - de préférence métallique, voie plastique, bois - de préférence qui n'est pas en contact optique avec la face externe du premier vitrage (par ses irrégularités de surface) ou alors est collé et absorbe les rayons.

Naturellement les premier et deuxième profilé (de montage, de fixation comme déjà décrit) peuvent être confondus si première et deuxième tranche du même côté de l'ensemble vitré.

Typiquement, on cache de préférence les points chauds sur une largeur W au moins d'1 cm et de préférence d'au plus 5 cm et mieux 3,5cm.

En outre, par économie et pour l'efficacité d'extraction si la bordure de l'ensemble vitré est vouée à être cachée (profilé de montage, de fixation etc) sur la largeur W entre 1 cm et 3 cm, par en périphérie de la première tranche un profilé, de préférence métallique, dépassant sur les faces extérieure et externe, les premiers motifs d'extraction (diffusants, blanc ou dépoli) peuvent être espacés de la première tranche d'au moins la distance W (largeur de zone des points chauds), donc commencer au début du clair de vitre.

En l'absence de masquage par un profilé (de montage, de fixation) ou autre (joint etc), on peut souhaiter au contraire commencer l'extraction (avec son masquage) le plus proche possible du bord.

Toutefois, avec ou sans profilé on préfère former une bande anti mélange grâce aux moyens de masquage sur les moyens d'extraction comme détaillé ci-après.

Par ailleurs, dans une bande périphérique de largeur D0 -inférieure à W- à partir de la première tranche, des rayons de la première source pourraient être réfractés dans le premier intercalaire de feuilletage, côté face interne, dans le premier isolateur optique (d'indice de réfraction encore trop élevé), dans le deuxième intercalaire de feuilletage, puis au niveau de la face de collage :
- être extraits directement par les deuxièmes moyens d'extraction situés sur la face extérieure,
- ou être extraits directement par les deuxièmes moyens d'extraction sur la face de collage- (notamment motifs les plus proches de la deuxième tranche)
- ou être guidés dans le deuxième vitrage (en réflexion totale interne à l'interface face extérieure et air puis être extraits par les deuxièmes moyens d'extraction sur la face de collage- (notamment motifs les plus proches de la deuxième tranche)

Ces rayons atteignant les deuxièmes moyens d'extraction provoquent une pollution de la couleur C3, pour le premier objet, ou dans le deuxième objet si les moyens de masquage ne sont pas dans cette bande périphérique. Une pollution peut intervenir de la couleur C1 de manière symétrique. Cette zone est dite première zone de marge pour le premier vitrage ou deuxième zone de marge pour le deuxième vitrage.

Aussi dans une première configuration « anti mélange », de préférence pour le premier objet, la première source de lumière -comportant un ensemble de diodes (alignées, sur un premier support PCB), comprend une première diode électroluminescente avec ledit premier rayonnement principal à λ1 de préférence du vert et une deuxième diode électroluminescente, avec ledit deuxième rayonnement principal à λ2 de préférence du rouge, chacune des première et deuxième diodes est espacée de la première tranche -par une espace, de l'air- (de préférence de moins de 5mm et même d'au plus 2mm) et au moins 80% (mieux au moins 90% et même au moins 95%) du flux lumineux émis par chacune des première et deuxième diodes est dans un cône d'émission entre -α1 et α1 avec α1 = Arsin(n1 * sin (α2)) où α2=(π/2)-Arsin (n2/n1) et correspond à l'angle de réfraction dans le premier vitrage, notamment par de premiers moyens de collimation (sur les puces émettrices).
Et la deuxième source de lumière -comportant un ensemble de diodes (alignées, sur un deuxième support PCB)- comprend une troisième diode électroluminescente avec ledit troisième rayonnement principal de λ3 de préférence du rouge et éventuellement une quatrième diode électroluminescente avec ledit quatrième rayonnement principal de λ4 de préférence du vert, la troisième diode voire la quatrième diode éventuelle est espacée de la deuxième tranche - par une espace, par de l'air- (de préférence de moins de 5mm et même d'au plus 2mm) et au moins 80% (mieux au moins 90% et même au moins 95%) du flux lumineux émis par chacune des troisième et quatrième diodes est dans un cône d'émission entre -α'1 et α'1 avec α'1 = Arsin(n'1 * sin (α'2)) où α'2=(π/2)-Arsin (n'2/n'1) et correspond à l'angle de réfraction dans le deuxième vitrage, notamment par des deuxièmes moyens de collimation.

On souhaite qu'il y ait réflexion totale interne à l'interface avec le premier isolateur optique pour tous les angles y compris les grands angles.

Arsin (n2/n1) correspond sensiblement à l'angle de réflexion totale à l'interface avec le premier isolateur optique (α'2 est l'angle complémentaire pour avoir cette réflexion totale). Plus précisément il faudrait faire intervenir Arsin (n2/n3) mais n3 étant très proche de n1 l'impact est négligeable.

Le tableau I suivant indique des exemples de α1, αr en fonction de n2 pour n1 égal à 1,5 où ar est l'angle de réfraction.

**Tableau I**

| α1 (°) | αr (°) |
|---|---|
| 30 | 20 |
| 35 | 22 |
| 40 | 25 |
| 45 | 28 |
| 50 | 31 |
| 60 | 35 |

Le tableau I' suivant indique des exemples de α1 (angle d'émission pour réflexion totale), α2 (angle de réfraction pour réflexion totale à l'interface du premier isolateur optique) en fonction de n2 pour n1 égal à 1,5 ou 1,52. Il peut servir d'abaque.

**Tableau I'**

| | | n2=1,4 | n2=1,35 | n2=1,3 | n2=1,25 | n2=1,2 | n2=1,15 | n2=1,1 |
|---|---|---|---|---|---|---|---|---|
| α2 | n1=1,5 | 21 | 26 | 30 | 34 | 37 | 40 | 43 |
| α2 | n1=1,52 | 23 | 27 | 31 | 35 | 38 | 41 | 44 |
| α1 | n1=1,5 | 33 | 41 | 48 | 56 | 64 | 74 | |
| α1 | n1=1,52 | 36 | 44 | 51 | 59 | 67 | 79 | |

En dessous de n2=1,15, on peut choisir des diodes classiques sans moyens de collimation voir même en dessous de n2=1,2.

De préférence la majorité et mieux toutes les diodes des première et deuxième sources de lumière présentent un tel diagramme d'émission étroit, notamment par des moyens de collimation.

La collimation est individuelle voire commune à plusieurs diodes de chaque source (diodes vertes, diodes rouges, voire même diodes vertes et rouges)...

Naturellement on met autant que de diodes émettant à λ1 et de diodes émettant à λ2 que nécessaire et on ajuste leur répartition (nombre, espacement) pour s'étendre le long de la tranche dans la première surface d'extraction. On peut choisir d'alterner λ1 et λ2 ou non.

On peut rajouter d'autres diodes (émettant dans le bleu, ou le blanc) pour apporter de nouvelles couleurs de lumières ou fonctionnalité et on préfère également choisir leur diagramme d'émission étroit.

Pour le deuxième objet, ces diagrammes d'émission étroits sont utiles surtout si les moyens de masquages ne sont pas présents dans ces zones de marge.

Lorsque l'on choisit une fibre optique extractrice pour chaque source primaire on peut choisir aussi des diagrammes d'émission étroits.

Aussi dans une deuxième configuration « anti mélange », on prévoit une première bande (pleine) dite antimélange qui est en contact optique avec la face interne, en périphérie de la face interne, s'étendant à partir de la première tranche (du couplage optique avec la première source) - le long de la première tranche-, bande de largeur D0 au moins égale à 0,8Dmin et mieux égale à Dmin avec Dmin= d1 / tan ((π/2)-arsin(n2/n1)) et de préférence inférieure à 2cm et même à 1cm (et de préférence inférieure à W), où d1 est la distance entre la première source de lumière et la face interne.

La première bande en matériau opaque est décalée (tout ou partie) des premiers moyens de masquage et de la première surface d'extraction plus éloignés de la première tranche ou la première bande est formée par un motif des premiers moyens de masquages opaques (directement) sur un motif d'extraction sur face interne. Donc (tout ou partie de) la première surface d'extraction commence à partir de la première tranche.

De préférence la première source (chaque diode) est d'étendue (largeur de la face émettrice) W0 inférieure à l'épaisseur du premier vitrage typiquement W0 d'au plus 5mm et la première source (chaque diode) sensiblement centrée par rapport à la première tranche. d1 est de 1 à 5mm mieux de 1 à 3mm.

Pour d' on choisit de préférence le bord de la première source le plus éloigné de la face interne.

Par précaution, on peut aussi de préférence rajouter une autre première bande anti-mélange congruente (et par exemple en matière identique) à la première bande antimélange côté (même sur) face externe. Par exemple il s'agit d'un émail opaque (noir etc) ou d'un adhésif opaque monoface ou double face.

Et de préférence une deuxième bande (pleine) dit antimélange qui est en contact optique avec la face de collage, en périphérie de la face de collage, s'étendant à partir de la deuxième tranche (du couplage optique avec la deuxième source) bande de largeur D'0 au moins égale à 0,8D'min et mieux égale à D'min avec D'min= d'1 / tan ((π/2)-arsin(n2/n'1)) et de préférence inférieure à 2cm, et même à 1cm (et de préférence inférieure à W) et en matériau opaque où d'1 est la distance entre la deuxième source de lumière et la face de collage. La deuxième bande en matériau opaque est décalée (tout ou partie) des deuxièmes moyens de masquage et de la deuxième surface d'extraction plus éloignés de la deuxième tranche ou la deuxième bande est formée par un motif dit de masquage (et de préférence (directement) sur un motif d'extraction surface de collage) des deuxièmes moyens de masquages opaques. Donc (tout en partie de) la deuxième surface d'extraction commence à partir de la deuxième tranche.

De préférence la deuxième source (chaque diode) est d'étendue (largeur de la face émettrice) W'0 inférieure à l'épaisseur du deuxième vitrage typiquement W'0 d'au plus 5mm et la deuxième source (chaque diode) sensiblement centrée par rapport à la deuxième tranche. d'1 est de 1 à 5 mm mieux de 1 à 3mm.

Pour d' on choisit de préférence le bord de la deuxième source le plus éloigné de la face de collage.

Par précaution on limite la largeur de la (première et deuxième) bande antimélange pour ne pas éliminer trop de rayons (y compris rayons guidables).

Par précaution, on peut aussi rajouter de préférence une deuxième autre bande anti-mélange congruente (et de préférence en matière identique) à la deuxième bande antimélange côté (même sur) face extérieure. Par exemple il s'agit d'un émail opaque (noir etc) ou d'un ruban adhésif opaque monoface ou double face.

Le tableau II suivant indique des exemples de Dmin en fonction de n2 et n1 et de d1. Il peut servir d'abaque.

**Tableau II**

| n1 | n2 | d1 (mm) | Dmin (mm) |
|---|---|---|---|
| 1,5 | 1,15 | 1 | 1,2 |
| 1,52 | 1,15 | 1 | 1,2 |
| 1,5 | 1,2 | 1 | 1,3 |
| 1,52 | 1,2 | 1 | 1,3 |
| 1,5 | 1,25 | 1 | 1,5 |
| 1,52 | 1,25 | 1 | 1,4 |
| 1,5 | 1,3 | 1 | 1,7 |
| 1,52 | 1,3 | 1 | 1,7 |
| 1,5 | 1,35 | 1 | 2,1 |
| 1,52 | 1,35 | 1 | 1,9 |
| 1,5 | 1,4 | 1 | 2,6 |
| 1,52 | 1,4 | 1 | 2,4 |
| 1,5 | 1,15 | 3 | 3,6 |
| 1,52 | 1,15 | 3 | 3,5 |
| 1,5 | 1,2 | 3 | 4,0 |
| 1,52 | 1,2 | 3 | 3,9 |
| 1,5 | 1,25 | 3 | 4,5 |
| 1,52 | 1,25 | 3 | 4,3 |
| 1,5 | 1,3 | 3 | 5,2 |
| 1,52 | 1,3 | 3 | 5,0 |
| 1,5 | 1,35 | 3 | 6,2 |
| 1,52 | 1,35 | 3 | 5,8 |
| 1,5 | 1,4 | 3 | 7,8 |
| 1,52 | 1,4 | 3 | 7,1 |
| 1,5 | 1,4 | 5 | 13,0 |
| 1,52 | 1,4 | 5 | 11,8 |

La première bande (comme la deuxième bande de préférence de nature identique ou similaire et agencement identique ou similaire par rapport au vitrage) peut être :
- de préférence un revêtement opaque en contact optique avec la face interne et mieux (directement) sur la face interne:
   - une encre (par exemple sur la face interne ou imprimée sur le premier intercalaire de feuilletage côté face interne voire sur la face opposée),
   - un émail (sur la face interne du premier vitrage de préférence minéral),
   - une peinture par exemple sur la face interne,
   - une colle opaque, une bande adhésive opaque,
   - un revêtement opaque sur un support, adhésivé à la face interne, support notamment transparent plastique (souple, comme un PET, transparent ou teinté etc), verre mince, ou une pièce métallique, plastique ou bois, support PCB de diodes à émission latérale de la première source, (partie de profilé de montage ou de fixation, notamment métallique ou plastique ou bois)
- voire une pièce opaque adhésivée à la face interne (partie de profilé de montage, de fixation comme déjà décrit, métallique ou plastique ou même bois) et dans une gorge entre les premier et deuxième vitrages

La deuxième bande est de préférence en matière identique et comme précitée.

Les bandes anti mélange sur face externe et extérieure sont chacune par exemple un adhésif opaque monoface (sous un profilé) ou double face pour coller un profilé (métallique, réflecteur notamment).

Dmin, D'min sont égaux si on choisit les mêmes vitrages et le ou les mêmes isolateurs optiques. D0 et D'0 sont égaux par simplicité.

Les première et deuxième bandes antimélange peuvent être en regard si la première et deuxième tranches sont alignées. La deuxième bande pourrait être confondue avec la première bande si la première bande est opaque pour tous les rayonnements des première et deuxième sources de lumières et de largeur suffisante aussi pour les rayons issus de la deuxième source. On préfère doubler les moyens par précaution. Si on choisir une seule bande on préfère choisir comme largeur la plus grande entre Dmin et D'min. Les première et deuxième bandes peuvent être en regard, même congruentes sinon être sur des côtés opposés de l'ensemble vitré.

Dans la zone de la première bande anti mélange, dite première zone de marge, le premier intercalaire et/ou le premier isolateur optique peuvent être absents, donc sont en retrait par rapport à la première tranche d'au moins D0.

Dans la zone de la deuxième bande anti mélange, dite deuxième zone de marge, le deuxième intercalaire et/ou le deuxième isolateur optique peuvent être absents, donc sont en retrait par rapport à la deuxième tranche d'au moins D'0.

Le premier vitrage peut dépasser du deuxième vitrage (coté première tranche, deuxième tranche de préférence à l'opposé de l'ensemble vitré) si bien que la première bande anti mélange est dans cette zone dépassante, et éventuellement avec une surface libre ou sous un profilé. La première bande anti mélange et la bande anti mélange coté face interne sont par exemple un adhésif opaque monoface (sous un profilé) ou double face pour coller un profilé.

Dans la zone de la première bande anti mélange (voire de la deuxième bande en regard), il peut y avoir une gorge entre le premier et deuxième vitrage sans les premier et (deuxième) intercalaires ni le premier (et deuxième) isolateur optique et éventuellement avec une pièce avec revêtement opaque pour former la première bande anti mélange. On peut insérer une pièce opaque plus aisément si son épaisseur (inférieure à la distance entre premier et deuxième vitrages) est d'au plus 0,8mm et même d'au plus 0,5mm.

Dans la zone de la deuxième bande anti mélange (par exemple le coté de l'ensemble vitré opposé de celui de la première bande), il peut y avoir une gorge entre le premier et deuxième vitrage sans le premier (et deuxième) intercalaire ni le premier (et deuxième) isolateur optique et éventuellement avec une pièce avec revêtement opaque pour former la première bande anti mélange. On peut insérer une pièce opaque plus aisément si son épaisseur (dimension entre les vitrages) est d'au plus 0,8mm et même d'au plus 0,5mm.

Selon l'invention, le premier vitrage avec la première bande anti-mélange présente, côté le plus éloigné du premier vitrage en regard de ladite première bande:
- une absorption (aux longueurs d'onde principales de C1 et/ou C2 et/ou C3 et/ou C4, même dans tout le visible) d'au moins 80% et même d'au moins 90%,
- un facteur de transmission (aux longueurs d'onde principales de C1 et/ou C2 et/ou C3 et/ou C4, même dans tout le visible) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

Selon l'invention, le deuxième vitrage avec la deuxième bande anti-mélange présente côté le plus éloigné du deuxième vitrage en regard de ladite deuxième bande:
- une absorption (aux longueurs d'onde principales de C3 et/ou C4 et/ou encore C1 et/ou C2 en fonction des premiers moyens de masquage) d'au moins 80% et même d'au moins 90%,
- un facteur de transmission (aux longueurs d'onde principales de C3 et/ou C4 et/ou C1 et/ou C2 en fonction des premiers moyens de masquage) d'au plus 2% et même d'au plus 1% ou d'au plus 0,5% (notamment une TL d'au plus 2% et même 1% ou 0,5%)
- et/ou une densité optique d'au moins 2 et mieux d'au moins 2,5 et même 3 plus préférentiellement de 2,8 à 4,5 et en particulier de 3 à 4.

On préfère en outre pour les bande opaques anti-mélange une réflexion lumineuse limitée d'au plus 5% aux longueurs d'onde principales.

Comme pour les moyens de masquage, les première et deuxième bandes antimélange selon l'invention peuvent être noirs ou gris (foncés) mais aussi colorés s'ils sont en congruence :
- chacune noire (par pigment noir notamment) ou grise
- première bande colorée absorbant le vert notamment à base de rouge: rouge marron, violet, orange, rose
- deuxième bande colorée, absorbant le rouge notamment vert ou une autre couleur qui n'est pas à base de rouge, par exemple bleu, jaune, vert,
- voire première bande blanche ou d'une autre couleur absorbante de par l'épaisseur suffisante, deuxième bande blanche ou d'une autre couleur mais absorbante de par l'épaisseur suffisante,

On peut par exemple sérigraphier une bande en émail noir ou coloré.

Pour le deuxième objet, ces diagrammes d'émission étroits sont utiles surtout si les moyens de masquages ne sont pas présents dans ces zones de marge.

La première surface d'extraction (zone lumineuse) peut couvrir une partie de la surface, laisser ainsi au moins une première zone sombre, c'est-à-dire non lumineuse peut couvrir une partie de la surface, laisser ainsi au moins une première zone, zone sombre qui est choisie parmi une zone transparente (clair de vitre...) voire une zone décorative par un revêtement opaque et/ou coloré, ou encore une zone réfléchissante notamment miroir par exemple formée par une argenture couverte par une peinture de protection.

La première surface d'extraction (zone lumineuse) peut s'étendre en s'éloignant de la première tranche, selon par exemple au moins une bande ou un dessin.

Dans une réalisation, l'ensemble vitré comporte une zone transparente -donc dénuée des premiers et deuxièmes moyens d'extraction et de masquage- (la première surface d'extraction et la deuxième surface d'extraction couvrant partiellement les premier et deuxième vitrages) et de préférence les tranches en regard de la zone transparente sont dénuées de sources de lumière et/ou la première surface d'extraction (éventuellement avec la deuxième surface d'extraction en regard et même avec une zone congruente) présente une transparence globale (vision à travers de l'ensemble vitré) par exemple formée de motifs espacés entre 2mm et 4mm et de largeur d'au plus 5cm, ou 3cm et même 5mm (motifs discrets pour une lumière uniforme par exemple).

La première source de lumière, notamment un ensemble de diodes, est alors de préférence agencée uniquement sur une portion de la première tranche en regard de la première surface d'extraction. La deuxième source de lumière, notamment un ensemble de diodes, est alors de préférence agencée uniquement sur une portion de la deuxième tranche en regard de la deuxième surface d'extraction.

La zone transparente et l'ensemble des zones transparentes peut occuper au moins 20% de la surface du premier vitrage ou même au moins 50%.

De préférence la TL dans la zone transparente est d'au moins 85% et même d'au moins 88%. Le flou est de préférence d'au plus 2,5%.

On peut (même en l'absence de zone transparente donc zone sans motifs d'extraction) souhaiter que la taille et l'espacement de certains ou de tous les premiers motifs d'extraction sont ajustés pour une transparence globale de tout ou partie de la première surface d'extraction. La taille et l'espacement sont ajustés en fonction de l'étendue de la première surface d'extraction avec ces premiers motifs.

On peut en outre souhaiter que la taille et l'espacement de certains ou de tous les deuxièmes motifs d'extraction sont ajustés pour une transparence globale de tout ou partie de la deuxième surface d'extraction

La deuxième surface d'extraction peut être décalée au moins en partie de la première surface d'extraction, la zone hors recouvrement de la deuxième surface d'extraction comportant une partie des deuxièmes moyens de masquage.

La tranche opposée à la première tranche peut être polie (et droite) ou diffusante. La tranche opposée à la deuxième tranche peut être polie ou diffusante. De préférence, pour une application où les tranches opposées sont visibles (sans profilé de montage, de fixation, les masquant ou même sans joint polymérique), les première et deuxième tranches sont du même côté de l'ensemble vitré et même sont alignées et même les tranches opposés ne sont pas couplées optiquement.

Toutefois, l'ensemble vitré en particulier peut comprendre :
- une troisième source de lumière identique à la première source de lumière et en regard, synchronisée avec la première source, pilotée (de préférence) en dynamique, sur la tranche opposée à la première tranche notamment si la première surface d'extraction présente une dimension caractéristique suivant l'axe de propagation de la lumière d'au moins 450mm (s'éloignant de la première source)
- et de préférence comprend une quatrième source de lumière identique à la deuxième source de lumière et en regard, synchronisée avec la deuxième source pilotée de préférence en dynamique, sur la tranche opposée à la deuxième tranche notamment si la deuxième surface d'extraction présente une dimension caractéristique suivant l'axe de propagation de la lumière d'au moins 450mm (s'éloignant de la deuxième source).

Dans ce dernier cas, comme la première source, la troisième source est de préférence cachée par un profilé de montage de préférence métallique (ou plastique rigide, bois) et/ou de section en U et le cas échéant comme la deuxième source, la quatrième source est cachée par un profilé de montage par exemple métallique (ou plastique ou bois et/ou de section en U.

En particulier, l'ensemble vitré comprend un cadre de montage par exemple un profilé métallique ou plastique (rigide), en polychlorure de vinyle PVC, ou bois) et/ou de section en U et les sources de lumières sont dans le volume intérieur entre le cadre de montage et les tranches sur les deux montants verticaux fixées au cadre ou fixées au vitrage par la tranche (par un profilé de fixation par exemple).

Dans ce dernier cas, la troisième source peut être cachée par un joint polymérique (noir, foncé etc), par exemple élastomère (un éthylène-propylène-diène monomère EPDM etc), notamment si en configuration de montage on agence deux ensembles vitrés (vantaux) espacés et s'ouvrant latéralement (coulissement etc).. Ce joint ne gêne pas le guidage, il n'est pas généralement pas en contact optique et est de préférence de largeur inférieure à 3cm sur le premier vitrage par exemple pour plus de confort si les vantaux se rabbattent trop vite (sur le piéton).

Les surfaces d'extraction peuvent être de forme et taille diverses. La première surface d'extraction peut comporter un seul motif de préférence diffusant par exemple plein, fermé et même évidé ou comme un anneau. Dans le creux (évidement) on préfère que le premier isolateur optique soit en regard de la face interne.

Les motifs d'extraction, diffusants sont par exemple géométriques : bande rectiligne ou courbée, des ronds concentriques, des L. etc. Les motifs sont identiques ou distincts, parallèle entre eux ou non, avec une distance entre eux identiques ou non.

Pour l'extraction de la lumière on emploie de préférence des moyens de diffusion, formés soit par un traitement superficiel du verre du type sablage, attaque acide, dépôt d'émail ou de pâte diffusante, soit par un traitement dans la masse du verre de type gravure laser.

Les moyens d'extraction peuvent former un concentrateur de lumière (émission de lumière dirigée) par exemple :
- moyens réfléchissants en regard de chacun des moyens d'extraction (diffusants) et aptes à réfléchir les rayons extraits selon une direction donnée comme décrit dans le document FR2989176,
- lentille comme décrit dans le document WO2005/018283,

Pour l'extraction de la lumière on emploie des moyens de diffusion, formés soit par un traitement superficiel de la feuille de verre du type sablage, attaque acide, dépôt d'émail ou de pâte diffusante ou de peinture, soit par un traitement dans la masse du verre de type gravure laser.

Selon une caractéristique, les premiers (et/ou deuxième) moyens d'extractions sont une couche diffusante blanche, notamment un émail ou une peinture, en présentant une clarté L* d'au moins 50. La couleur est définie de manière connue par les paramètres L*, a* et b* et est mesurée par un spectrocolorimètre.

La densité optique d'une couche diffusante (émail, peinture, encre..), notamment blanche, pour les premiers et/ou deuxièmes moyens d'extraction peut être inférieure à 2,5 à 2 même inférieure à 1,5 ou encore inférieure à 1.

La couche diffusante, notamment émail, peut être une couche continue en surface, de largeur inférieure à 200 mm, voire à 100 mm et encore plus préférentiellement inférieure ou égale à 50 mm, ou être discontinue et formée d'un ensemble de motifs fins.

Dans un mode de réalisation préféré, la couche diffusante (tout ou partie des moyens d'extraction) est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns. Cette couche diffusante préférée est particulièrement décrite dans la demande WO0190787.

Les particules peuvent être choisies parmi des particules semi-transparentes et de préférence des particules minérales telles que des oxydes, des nitrures, des carbures. Les particules seront de préférence choisies parmi les oxydes de silice, d'alumine, de zircone, de titane, de cérium, ou d'un mélange d'au moins deux de ces oxydes

Selon une caractéristique, l'émail d'extraction présente la composition suivante :
- entre 20 et 60% en poids de SiO₂,
- 10 à 45% en poids de pigments réfractaires, notamment de TiO₂, notamment de taille micronique,
- de préférence pas plus de 20% en poids d'alumine et/ou d'oxyde de zinc.

Les pigments TiO₂ rendent l'émail suffisamment opaque (pour visualiser l'émail à l'état off) et abaissent la TL. Des exemples de composition d'émail d'extraction peuvent être l'émail sous la dénomination Ferro 194011 commercialisé par l'entreprise FERRO, la référence AF5000 commercialisé par la société JM, la référence VV30-244-1 commercialisé par Pemco sont très blancs avec une brillance supérieure à 20 et présentent une transmission lumineuse basse, inférieure à 40%.

De préférence il s'agit d'une pluralité de motifs et de préférence diffusants (de préférence par une couche diffusante discontinue).

Les premiers moyens d'extraction peuvent être comme déjà vu un ensemble de motifs diffusants qualifié de réseau diffusant tout particulièrement pour une zone lumineuse de grande taille souhaitée la plus uniforme possible.

De préférence, le premier (deuxième) vitrage revêtu des premiers (deuxième) moyens d'extraction diffusants, notamment émail, présente une transmission lumineuse inférieure à 45% voire à 40% ou même à 35% du côté face externe (extérieure).

Les premiers moyens d'extraction, notamment émail, s'étendent, par exemple sur la totalité d'une face du verre, de manière discontinue ou selon des formes géométriques éparses aux lignes courbes et/ou droites. Les moyens d'extraction sont par exemple à géométrie fractale.

Selon une autre caractéristique, les premiers moyens d'extraction s'étendent de manière discontinue et délimite des zones sombres notamment des motifs de formes géométriques éparses aux lignes courbes et/ou droites, notamment de longueur (plus grande dimension) au moins centimétrique.

Les premiers motifs, identiques ou distincts par exemple sont en creux, graphique, caractère lettre (avec signe diacritique), chiffre, alphanumérique, ponctuation, symbol, arrangée en cadre et/ou en bande).

La première surface d'extraction peut être de contour droit ou courbe, peut être géométrique (rectangulaire) peut être de largeur inférieure au premier vitrage et de hauteur ou longueur (suivant la première tranche) inférieure à la hauteur ou longueur du premier vitrage.

De préférence, le premier vitrage (comme le deuxième vitrage) est de type rectangulaire et de largeur perpendiculaire au sol une fois monté.

La première surface d'extraction peut comporter :
- un premier réseau de motifs diffusants ponctuels, notamment géométriques (carré, ronds etc) et notamment de même forme, de largeur l₁ d'au plus 1cm (largeur, selon l'axe de propagation de la lumière), mieux d'au plus 5mm et même d'au plus 2,5mm éventuellement variable (plus grand en s'éloignant de la première source si pas de source de lumière à l'opposé) et espacés d'un pas p₁ d'au plus 1cm, mieux d'au plus 5mm éventuellement variable (plus petit en s'éloignant de la première source si pas de source de lumière à l'opposé), notamment largeur et pas adaptés pour une transparence globale (au sens vision au travers du premier vitrage, dans cette première surface d'extraction),
- et/ou un premier motif diffusant décoratif de largeur l₂ (largeur, selon l'axe de propagation de la lumière) centimétrique et d'au plus 5cm mieux d'au plus de préférence entouré (même entrelacé) avec le premier réseau,
- et/ou un premier ensemble diffusant de caractères tel qu' un LOGO et/ou tels que de lettres et/ou chiffres, chacun de largeur l₃ centimétriques (largeur selon l'axe X de propagation de la lumière) et d'au plus 5cm mieux d'au plus espacés d'un pas p₃ d'au plus 1cm, mieux d'au plus de 5mm de préférence entouré par le premier réseau de motifs diffusants ponctuels.

Et de préférence les premiers moyens d'extraction sont sur la face interne et les premiers moyens de masquage sont (directement) sur les premiers moyens d'extraction.

Et de préférence la deuxième surface d'extraction en regard et même congruente avec la première surface d'extraction et comporte :
- un deuxième réseau de motifs diffusants ponctuels, notamment géométriques (carré, ronds etc) et notamment de même forme, de largeur l'₁ d'au plus 1cm mieux d'au plus 5mm et même d'au plus 2,5mm (largeur, selon l'axe de propagation de la lumière) éventuellement variable (plus petit en s'éloignant de la deuxième source si pas de source à l'opposé) et espacés d'un pas p'₁ d'au plus 1cm mieux d'au plus 5mm éventuellement variable (plus grand en s'éloignant de la deuxième source si pas de source à l'opposé), notamment largeur et pas adaptés pour une transparence globale (au sens vision au travers du deuxième vitrage, dans cette deuxième surface d'extraction de préférence congruente avec la première surface)
- et/ou un deuxième motif diffusant décoratif de largeur l'₂ (largeur, selon l'axe de propagation de la lumière) centimétrique et d'au plus 5cm de préférence entouré (même entrelacé) avec le deuxième réseau, congruent avec le premier motif diffusant décoratif ou en regard avec le premier réseau de motifs diffusants ponctuels (couvrant même le deuxième motif diffusant décoratif),
- et/ou un deuxième ensemble diffusant de caractères tel qu' un LOGO et/ou tels que de lettres et/ou chiffres, chacun de largeur l'₃ centimétriques (largeur selon l'axe X de propagation de la lumière) et d'au plus 5 cm espacés d'un pas p'₃ d'au plus 1cm, même d'au plus 5mm de préférence entouré par le deuxième réseau de motifs diffusants ponctuels, congruent avec le premier ensemble diffusant ou en regard avec le premier réseau de motifs diffusants ponctuels (couvrant même le deuxième ensemble diffusant).

Et de préférence les deuxièmes moyens d'extraction sont sur la face de collage et les deuxièmes moyens de masquage sont (directement) sur les deuxièmes moyens d'extraction.

Comme source de lumière on peut choisir une fibre optique extractrice, avec une face émettrice latérale (couplée à une source de lumière primaire qui est typiquement une diode). On utilise par exemple la fibre optique de 3M dite 3M™ Précision Lighting Elements.

Pour la première source de lumière, on préfère des diodes électroluminescentes alignées sur une première carte de circuit imprimé PCB, de préférence en barrette éventuellement moins large que l'ensemble vitré et même le premier vitrage.

Les diodes peuvent être (pré) encapsulées, c'est-à-dire comprenant une puce semi-conductrice et une enveloppe, par exemple en résine type époxy ou en PMMA, encapsulant la puce.

Les diodes peuvent comprendre voire être de préférence simples puces semi-conductrices par exemple de largeur W0 de l'ordre de la centaine de µm ou de 1 à 5mm. La largeur de chaque diode de la première source est de préférence inférieure à l'épaisseur du premier vitrage. La largeur de chaque diode de la deuxième source est de préférence inférieure à l'épaisseur du deuxième vitrage.

Les diodes peuvent éventuellement comprendre une enveloppe protectrice (provisoire ou non) pour protéger la puce lors de manipulations ou pour améliorer la compatibilité entre les matériaux de la puce et d'autres matériaux.

Chaque diode de la première source (de la deuxième source) peut être choisie notamment parmi au moins l'une des diodes électroluminescentes suivantes :
- une diode à émission latérale, c'est-à-dire parallèlement aux (faces de) contacts électriques, avec une face émettrice latérale par rapport au premier (deuxième) support PCB,
- une diode, dont la direction principale d'émission est perpendiculaire ou oblique par rapport la face émettrice de la puce.

Les diodes de préférence ont un spectre (de type) gaussien.

Le diagramme d'émission d'une diode classiquement lambertien avec un demi angle d'émission de 60°.

De préférence la distance entre les puces (ou les moyens de collimation si présents) et la première tranche de couplage (respectivement la deuxième tranche de couplage) est inférieure ou égale à 5mm et même à 2mm.

La lumière extraite des premiers motifs d'extraction peut clignoter, en plus de changer de couleur grâce à des moyens de pilotage de la première source de lumière par exemple un ensemble de diodes émettrices de rouge, de vert, en alternance ,et de préférence également de blanc (alternance de rouge, de vert et de blanc).

S'il s'agit d'une porte d'accès avec billet, passe ou moyens d'identification, en cas d'invalidité ou de non reconnaissance, à to la première source peut passer du vert au rouge et même clignoter sur un temps donné (moins de 10 s), par exemple de 1s à 5s, et redevenir verte (la deuxième source restant rouge).

Comme premier intercalaire de feuilletage et mieux tous les intercalaires de feuilletage, on peut choisir notamment une feuille de matière thermoplastique en éthylène vinylacétate (EVA) ou encore en polyuréthane (PU), en polyvinylbutyral (PVB). On préfère une telle feuille à résine pluri ou mono-composants réticulable thermiquement (époxy, PU) ou aux ultraviolets (époxy, résine acrylique).

Le premier intercalaire de feuilletage est par exemple submillimétrique, en une ou plusieurs feuilles à l'assemblage. Le premier intercalaire de feuilletage (et mieux tous les intercalaires de feuilletage) peut être clair, extraclair, et être neutre en couleur.

Le premier intercalaire de feuilletage est choisi de préférence parmi EVA et PVB.On préfère que chaque intercalaire de feuilletage ait un flou (mesuré classiquement au hazemeter) d'au plus 1,5% et même d'au plus 1% comme par exemple un EVA ou un PVB. Cela réduit le caractère diffusant entre les motifs d'extraction, dans la ou les zones transparentes. Pour l'EVA ou le PVB n3 (n'3) typiquement est autour de 1,49.

Le premier isolateur optique (et de préférence le deuxième) est de préférence un élément plan (ou suivant la courbure du premier vitrage). Il peut être de préférence continu mais peut être en plusieurs morceaux, de même matière, voire de matière distincte.

Le premier isolateur optique (respectivement le deuxième isolateur optique pour le deuxième objet) peut être un élément (film) rapporté ou une couche déposée (un dépôt).

Dans un premier mode de réalisation, le premier isolateur optique selon l'invention comprend (mieux est constitué de) un premier film à base de fluoropolymère, mieux en fluoropolymère notamment d'épaisseur e2 d'au moins 600nm, mieux micronique et même d'au moins 10µm ou 50µm et (surtout pour le deuxième objet) de préférence le deuxième isolateur optique selon l'invention comprend (mieux est constitué de) un autre film à base de fluoropolymère, mieux en fluoropolymère notamment d'épaisseur e'2 d'au moins 600nm, mieux micronique et même d'au moins 10µm ou 50µm et identique au premier film fluoropolymère.

Le film fluoropolymère bas indice permet une mise en oeuvre simple, une souplesse de design (par simple découpage du film) et pour toute taille (grande surface comprise).

Le premier intercalaire de feuilletage, de préférence en EVA, procure une tenue mécanique du premier film pour un contact optique satisfaisant.

On préfère distinguer dans le produit final, le film de fluoropolymère bas indice (assemblé via le premier intercalaire) d'une couche ou dépôt de fluoropolymère, déposée par voie liquide. Une couche de fluoropolymère nécessite d'utiliser des solvants spéciaux et l'adhésion peut être très problématique.

Pour le feuilletage on peut utiliser un cycle thermique classique et même mieux celui utilisé pour le vitrage feuilleté renfermant de films plastiques (poly(téréphtalate d'éthylène) dit PET etc).

De préférence, n2 peut être inférieur ou égal à 1,45 voire inférieur ou égal à 1,4.

Le premier isolateur optique de préférence est constitué du premier film bas indice.

Par simplicité, le premier film bas indice s'étend sur l'ensemble du premier intercalaire de feuilletage lui-même s'étendant sensiblement sur l'ensemble du premier vitrage en étant éventuellement en retrait de la première tranche par exemple absent dans la zone anti mélange précitée.

De préférence, le premier intercalaire de feuilletage (et même le premier film bas indice) est en retrait de la première tranche, laissant une zone (ou bande) périphérique libre, restant en contact avec l'air. Le support de la première source de lumière (notamment un PCB ou un support de PCB) peut être agencé en regard de cette zone périphérique.

Le premier film en fluoropolymère (et le cas échéant le deuxième) peut être à base voire en l'une des matières suivantes :
- le perfluoroalkoxy PFA, notamment de n2 d'environ 1,3
- le poly(vinylidène fluoride) PVDF, notamment de n2 d'environ 1,4
- l'éthylène Chlorotrifluoroéthylène l'ECTFE
- l'éthylène tétrafluoroéthylène l'ETFE , plus précisément poly(éthylène-co-tétrafluoroéthyléne, notamment de n2 d'environ 1,4
- le copolymère Ethylène Propylène perfluoré FEP ou (Fluorinated Ethylene Propylene en anglais) notamment de n2 d'environ 1,3
- le polytétrafluoroéthylène PTFE notamment de n2 d'environ 1,3, mais qui est le plus difficile à laminer.

L'ETFE est préféré car il est le plus facile à laminer sur le premier intercalaire de feuilletage thermoplastique. On préfère qu'il ait un flou d'au plus 2%. Le FEP peut être préféré pour son plus faible indice de réfraction ou un flou plus faible d'au plus 2% avec un laminage acceptable.

Il existe des polysiloxanes comme autre bas indice mais leurs propriétés mécaniques sont insuffisantes.

Un film fluoropolymère est aisément disponible à partir de 50µm.

Pour un meilleur assemblage au verre, le premier film bas indice peut présenter des surfaces principales traitées par traitement de surface promoteur d'adhésion, de préférence un traitement corona.

Si le deuxième isolateur optique est distinct du premier on préfère choisir également un film bas indice identique ou similaire.

Dans un mode de réalisation préféré du premier objet, on peut avoir la séquence suivante sur l'épaisseur de l'ensemble vitré dans une zone avec première et deuxième surface d'extraction congruentes:
- premier vitrage/premiers moyens d'extraction en couche diffusante/premiers moyens de masquage en couche opaque ou réfléchissante de préférence congruents avec les premiers moyens d'extraction /premier intercalaire de feuilletage (de préférence EVA)/premier isolateur optique en film bas indice /deuxième intercalaire de feuilletage feuilletage (de préférence EVA)/ deuxièmes moyens de masquage en couche opaque ou réfléchissante de préférence congruents avec les premiers moyens de masquage/ deuxièmes moyens d'extraction en couche diffusante congruents avec les premiers moyens d'extraction/deuxième vitrage,
   et même en particulier les première et deuxième sources de lumière sont du même côté (et même première et deuxième tranche alignées), mieux des ensembles de diodes.

Dans un mode de réalisation préféré du deuxième objet, on peut avoir la séquence suivante sur l'épaisseur de l'ensemble vitré dans une zone avec première et deuxième surface d'extraction en regard:
- premier vitrage/premiers moyens d'extraction en couche diffusante/premier intercalaire de feuilletage (de préférence EVA)/ premier isolateur optique en film bas indice / intercalaire central (de préférence EVA)/premiers moyens de masquage en couche opaque (pleine face) voire réfléchissante, de préférence revêtement sur intercalaire central/ (autre intercalaire central)/deuxième isolateur optique en film bas indice / deuxième intercalaire de feuilletage (de préférence EVA/ deuxièmes moyens d'extraction en couche diffusante/deuxième vitrage
   et même de préférence avec les première et deuxième sources de lumière du même côté (et même première et deuxième tranche alignées), mieux des ensembles de diodes.

Dans un autre mode de réalisation d'isolateur optique selon l'invention, le premier isolateur optique comprend (mieux est constitué de) une première couche de silice poreuse d'épaisseur e2 d'au moins 400nm située :
- pour le premier objet : sur une face principale d'un troisième vitrage transparent, en verre minéral, orientée côté face interne
- pour le deuxième objet : sur la face interne.

En outre, le deuxième isolateur optique peut de préférence comprendre (mieux être constitué de) une deuxième couche de silice poreuse d'épaisseur e'2 (d'au moins 400nm).

Pour le premier objet, le premier isolateur optique peut comprendre sur une face principale d'un troisième vitrage transparent orientée côté face interne, en verre minéral, une première couche de silice poreuse d'épaisseur e2 d'au moins 400nm et de préférence revêtue d'un premier revêtement de protection minéral et transparent, qui est de préférence une couche de silice d'épaisseur e4 supérieure à 50nm et de préférence supérieure à 100nm et avec un indice de réfraction n4 d'au moins 1,4 à 550nm. Et l'ensemble vitré peut comprendre également, sur une autre face principale du troisième substrat verrier orientée côté face de collage, une deuxième couche de silice poreuse d'épaisseur e'2 d'au moins 400nm formant deuxième isolateur optique revêtue d'un deuxième revêtement de protection minéral et transparent, qui est de préférence une couche de silice d'épaisseur e'4 supérieure à 50nm et de préférence supérieure à 100nm et avec un indice de réfraction n'4 d'au moins 1,4 à 550nm.

n2 (dans l'ensemble du spectre visible) peut être d'au plus 1,35, de préférence d'au plus 1,25 et même inférieur à 1,2. Il en est de même pour n'2.

On peut utiliser seulement la première couche sol gel poreuse avec son revêtement de protection (de préférence) mais étant donné l'épaisseur -millimétrique-du verre central 1" on augmente le trajet des rayons guidés et cela peut diminuer l'efficacité d'extraction (et même plus de rayons pouvant être absorbés par les premiers moyens de masquage opaques).

Le document WO2008/059170 propose d'utiliser une couche poreuse bas indice comme isolateur optique dans un vitrage feuilleté éclairant à diodes. Cette couche isole optiquement le premier vitrage du deuxième vitrage teinté le plus extérieur. On peut reprendre les conditions de fabrication décrites en ajustant e2 (e'2).

Pour une isolation optique tenant compte de l'épaisseur de peau, on préfère que :
- lorsque n2 (n'2) est inférieur ou égal à 1,3, e2 (e'2) est d'au moins 600nm,
- lorsque n2 (n'2) est inférieur ou égal à 1,25, e2 (e'2) est d'au moins 500nm,
- lorsque n2 (n'2) est inférieur ou égal à 1,2, e2 (e'2) est d'au moins 400nm.

Par sécurité on choisit e2 (e'2) d'au moins 600nm et même d'au moins 700nm ou même d'au moins 800nm.

La couche de silice poreuse peut être un empilement compact de nanoparticules de silice, par exemple obtenue par voie sol-gel, ou de préférence, une couche de silice comportant une matrice de silice (autrement appelée réseau de silice) contenant des pores et de préférence obtenue par voie sol-gel. On préfère tout particulièrement une couche poreuse comportant une phase solide (essentiellement) continue, formant ainsi les murs denses des pores, plutôt qu'une phase solide principalement sous forme de (nano)particules ou de cristallites.

Pour fabriquer la couche sol gel poreuse, il existe différents agents porogènes. Le document EP1329433 divulgue ainsi une couche de silice poreuse élaborée à partir d'un sol de tétraéthoxysilane (TEOS) hydrolysé en milieu acide avec un agent porogène à base de polyéthylène glycol tert phényle éther (dit Triton) à une concentration entre 5 et 50g/l. La combustion de cet agent porogène à 500°C libère les pores. Cet agent porogène non localisé est de forme indéterminée et se répand dans la structure de façon incontrôlée.

D'autres agents porogènes connus tels que des micelles de molécules tensioactives cationiques en solution et, éventuellement, sous forme hydrolysée, ou de tensioactifs anioniques, non ioniques, ou des molécules amphiphiles, par exemple des copolymères blocs. De tels agents génèrent des pores sous forme de canaux de petite largeur ou des pores plus ou moins ronds de petite taille entre 2 et 5nm.

On préfère une couche de silice poreuse obtenue avec un agent porogène particulaire comme des billes polymériques qui permet quant à lui une meilleure maîtrise de la taille des pores, notamment l'accès à des grandes tailles, une meilleure maîtrise de l'organisation des pores notamment une distribution homogène, ainsi qu'une meilleure maîtrise du taux de pores dans la couche et une meilleure reproductibilité. Les billes polymériques peuvent être un coeur polymérique et une écorce minérale.

La plus petite dimension caractéristique des pores peut être encore plus préférentiellement supérieure ou égale à 30nm et de préférence inférieure à 120nm mieux à 100nm. Et de préférence également, la plus grande dimension caractéristique des pores peut être encore plus préférentiellement supérieure ou égale à 30 nm et de préférence inférieure à 120nm mieux à 100nm.

Le facteur de forme plus grande dimension divisé par plus petite dimension peut être inférieur à 2 et même à 1,5.

Dans un mode de réalisation préféré, la couche de silice poreuse est une matrice de silice avec des pores fermés (de préférence délimités par les parois de la silice) en volume, et en particulier une porosité ouverte en surface, notamment pores fermés de forme sensiblement ovale ou sensiblement sphérique, chacun de plus petite dimension d'au moins 30nm et de plus grande dimension d'au plus 120nm,de préférence entre 75nm et 100nm.

La couche poreuse à pores fermés en volume est mécaniquement stable, elle ne s'effondre pas même pour des fortes concentrations de pores. Les pores peuvent être aisément séparés les uns des autres, bien individualisés.

Les pores peuvent avoir une forme allongée, notamment en grain de riz. Encore plus préférentiellement, les pores peuvent avoir une forme sensiblement sphérique ou ovale. On préfère que la majorité des pores fermés, voire au moins 80% d'entre eux, aient une forme donnée sensiblement identique, notamment allongée, sensiblement sphérique ou ovale.

La majorité des pores fermés, (voire entre 80% ou même 95% ou mieux tous), peuvent avoir de préférence une plus petite dimension caractéristique, et de préférence une plus grande dimension également, entre 75 et 100 nm.

Dans la couche poreuse, les pores peuvent être de dimensions différentes, bien que ce ne soit pas préféré.

La porosité peut être en outre monodisperse en taille, la taille des pores étant alors calibrée à une valeur minimale de 30nm, de préférence 40nm encore plus préférentiellement 50 nm et de préférence inférieure à 120nm.

La fraction volumique de pores peut être de préférence supérieure à 50% et même à 65% et de préférence inférieure à 85%.

Il doit être noté cependant que la fraction volumique maximale de 74% est la valeur maximale théorique appliquée à un empilement de sphères de dimension identique, quelle qu'elle soit.

La Demanderesse a constaté qu'en appliquant (directement) la première couche de silice poreuse sur le premier intercalaire de feuilletage sur sa fonction d'isolateur optique était affectée. Il est probable que les pores, en particulier ceux ouverts en surface, de la couche poreuse soient pollués au moment de la fabrication et que les polluants restent piégés dans les pores même après un traitement thermique (pour le feuilletage).

Aussi de manière avantageuse, la première couche de silice poreuse est revêtue d'un premier revêtement de protection minéral et transparent, qui de préférence une couche de silice d'épaisseur e4 supérieure à 50nm et de préférence supérieure à 100nm et même 180nm, et avec un indice de réfraction n4 d'au moins 1,4 à 550nm (mieux à λ1, λ2, λ3, λ4 et même dans l'ensemble du visible).

La transparence du revêtement de protection permet en particulier de préserver la vision.

Lors d'essais, la Demanderesse a constaté qu'avec une épaisseur inférieure à 50nm la barrière aux polluants de la couche de silice poreuse était insuffisante.

La couche de silice dense comporte une phase solide (essentiellement) continue, plutôt qu'une phase solide principalement sous forme de (nano)particules ou de cristallites.

Une couche de silice dense (notamment non rendue poreuse de manière intentionnelle) présente de manière classique un indice de réfraction à 550nm de l'ordre de 1,45 si déposée par dépôt physique en phase vapeur et entre 1,42 et 1,46 si obtenue par voie sol gel.

Le vitrage avec la couche sol gel (et le revêtement de protection) peut avoir été traité thermiquement, à une température supérieure ou égale à 450°C de préférence supérieure ou égale à 600°C, notamment est même un verre trempé, bombage trempé.

La silice poreuse (et le revêtement de protection) peut être minérale ou même hybride minéral organique. La silice peut être dopée. Les éléments dopants peuvent de préférence être choisis parmi Al, Zr, B, Sn, Zn. Le dopant est introduit pour remplacer les atomes de Si dans un pourcentage molaire pouvant de préférence atteindre 10%, encore plus préférentiellement jusqu'à 5%.

La première (deuxième) couche de silice poreuse peut être une couche sol-gel et le premier (deuxième) revêtement de protection être une couche de silice sol-gel.

La fabrication de la couche de silice poreuse, servant comme isolateur optique entre un verre de guidage et un verre teinté d'un vitrage feuilleté lumineux, est décrite dans la demande WO2008/059170.

Dans un mode de réalisation préféré du premier objet, on peut avoir la séquence suivante sur l'épaisseur de l'ensemble vitré dans une zone avec première et deuxième surface d'extraction en regard:
premier vitrage/premiers moyens d'extraction en couche diffusante/premiers moyens de masquage en couche opaque ou réfléchissante de préférence congruents avec les premiers moyens d'extraction /premier intercalaire de feuilletage (de préférence PVB)/(premier revêtement de protection (couche de silice))/premier isolateur optique en couche de silice poreuse/verre central (notamment mince)/deuxième isolateur optique en couche de silice poreuse/(deuxième revêtement de protection (couche de silice))/deuxième intercalaire de feuilletage (de préférence PVB)/ deuxièmes moyens de masquage en couche opaque ou réfléchissante de préférence congruents avec les premiers moyens de masquage/ deuxièmes moyens d'extraction en couche diffusante congruents avec les premiers moyens d'extraction/deuxième vitrage
et même de préférence avec les première et deuxième sources de lumière du même côté (même première et deuxième tranche alignées), mieux des ensembles de diodes.

Dans un mode de réalisation préféré du deuxième objet, on peut avoir la séquence suivante sur l'épaisseur de l'ensemble vitré dans une zone avec première et deuxième surface d'extraction en regard:
- premiers moyens d'extraction diffusants (dépoli ou couche)/premier vitrage/ premier isolateur optique en couche de silice poreuse/ (premier revêtement de protection (couche de silice))/premier intercalaire de feuilletage (de préférence EVA)/ premiers moyens de masquage en couche opaque ou réfléchissante, de préférence revêtement couvrant et sur premier intercalaire/ (deuxième revêtement de protection (couche de silice)/deuxième isolateur optique en couche de silice poreuse / deuxième vitrage/ deuxièmes moyens d'extraction diffusants (dépoli ou couche).

La face externe (respectivement extérieure) est de préférence libre (de revêtement, couvrant) hormis éventuellement les premiers moyens d'extraction (respectivement deuxièmes moyens d'extraction).

On entend selon l'invention par vitrage, une feuille de verre monolithique.

De préférence le premier vitrage, en verre minéral trempé, est d'épaisseur de 4 à 6,5mm, le deuxième vitrage, en verre minéral trempé, est d'épaisseur de 4 à 6,5mm notamment identique. Lorsque les premiers (resp. deuxièmes) moyens d'extraction sont en émail et même les premiers (resp. deuxièmes) moyens de masquage opaques la cuisson pour former l'émail peut être suivi de l'(unique) opération de trempe.

Le deuxième vitrage peut aussi être en verre organique (de préférence rigide, semi rigide) comme un polyméthacrylate de méthyle (PMMA)- de préférence avec intercalaire de feuilletage PU-, un polycarbonate (PC)-de préférence avec intercalaire de feuilletage PVB-.

Le premier (deuxième) vitrage peut être tout type de verre plat, (éventuellement bombé par les procédés de bombage connus de l'homme du métier, lorsqu'il s'agit de revêtir des surfaces courbes). Il s'agit de verres monolithiques, c'est-à-dire composés d'une seule feuille de verre minérale, laquelle peut être produite par le procédé « float » permettant d'obtenir une feuille parfaitement plane et lisse, ou par des procédés d'étirage ou de laminage.

A titre d'exemples de matériaux verriers, on peut citer le verre float (ou verre flotté) de composition sodo-calcique classique, éventuellement durci ou trempé par voie thermique ou chimique, un borosilicate d'aluminium ou de sodium ou toute autre composition.

Le verre des premier et deuxième vitrages peut être clair, extra-clair, à très faible teneur en oxyde(s) de fer. Il s'agit par exemple des verres commercialisés dans la gamme « DIAMANT » par SAINT-GOBAIN GLASS.

Pour les premier et deuxième vitrages on peut choisir un vitrage en verre silicosodocalcique, notamment extraclair, peut présenter :
- une transmission du rayonnement lumineux supérieure ou égale à 91% voire supérieure ou égale 92% ou même 93% ou 94% à 550 nm ou de préférence sur toute la gamme visible,
- et/ou une réflexion du rayonnement lumineux inférieure ou égale à 7%, voire inférieure ou égale à 4%, à 550 nm ou de préférence sur toute la gamme visible.

Chaque tranche couplée optiquement peut être façonnée, notamment droite et polie.

Le verre peut avoir été traité thermiquement, à une température supérieure ou égale à 450°C de préférence supérieure ou égale à 600°C, notamment est même un verre trempé, bombage trempé.

L'épaisseur du premier vitrage est de préférence comprise entre 2 et 19mm, de préférence entre 4 et 10mm, plus particulièrement entre 5 et 9mm. L'épaisseur du deuxième vitrage est de préférence comprise entre 2 et 19mm, de préférence entre 4 et 10mm, plus particulièrement entre 5 et 9mm. On peut préférer des épaisseurs égales pour les deux verres.

L'épaisseur du troisième vitrage éventuel est de préférence comprise entre 2 et 19mm, de préférence entre 2 et 4mm.On peut préférer des épaisseurs égales pour les trois verres (et même plus réduites qu'avec deux verres) par exemple 4mm environ/4mm environ/4mm environ.

Le deuxième (troisième) vitrage peut être de préférence de taille identique au premier.

Pour le premier (resp. deuxième et même le troisième) vitrage en verre minéral, n1 (n'1, n"1) est typiquement de 1,50 à 1,53.

En fonctionnement statique, la première et /ou deuxième surface d'extraction est d'une couleur donnée à l'état on (lumière allumée). En fonctionnement dynamique, la première et /ou deuxième surface d'extraction est d'une couleur donnée à l'état on (lumière allumée) et l'intensité peut varier, ou elle peut clignoter. En fonctionnement dynamique et commutable, la couleur à l'état on peut changer en outre.

L'invention s'applique tout particulièrement pour la signalisation, et de préférence aux portes d'accès piéton et/ou même véhicule incorporant un premier ensemble vitré lumineux tel que décrit précédemment et même un deuxième ensemble vitré tel que décrit précédemment (à surfaces d'extraction identiques ou distinctes du premier ensemble), premier et deuxième ensembles espacés de quelques mm et entre deux portants.

Après installation, le premier (et le deuxième) ensemble vitré lumineux est une porte d'accès (de communication):
- entre l'extérieur et un bâtiment,
- entre deux zones d'un bâtiment, dans une salle d'exposition et/ou d'accès restreint ou payant
- au sein d'une station de transport en commun (métro, train),
- entre deux zones extérieures (accès extérieur d'un tramway, d'un parc notamment d'attraction, d'un cinéma de plein air, dans une zone à péage)
- intérieure ou extérieure d'un véhicule terrestre (train..), aquatique (bateau) ou aérien.

De préférence, chaque côté est piloté, de manière commune de préférence commute en même temps.

La porte d'accès peut être en un ou deux (ou plus) ensemble vitré lumineux identiques à éclairage monodirectionnel identiques ou complémentaires :
- le premier ensemble vitré ou chaque ensemble vitré sous forme d'une porte coulissante, dans des rails,
- le ou chaque ensemble vitré (ventail) mobile autour d'un axe de rotation.

Naturellement l'ouverture de la porte (la mobilité de l'ensemble vitré) peut être de préférence conditionnée (par l'usage d'un moyen d'identification, d'un billet). La porte d'accès peut comprendre des moyens pour recevoir un billet, lire un ticket et actionner le ou les vantaux pour laisser le passage.

La porte a un sens général est n'est pas forcément posée au sol, via un montant horizontal par exemple. Elle peut être espacée du sol (sans montant bas et/ou haut horizontal) et fixée latéralement à un portant (bloc fixé ou posé au sol).Le sol est la terre ferme ou sol d'une partie d'un véhicule (bateau, train etc). La porte peut aussi être dans une huisserie solidarisée à une maçonnerie adjacente.

Des repères classiques lumineux (flèche verte, croix rouge...) peuvent être conservés ou supprimés dans les portants. Les première et deuxième surfaces d'extraction sont plus facilement repérables en particulier pour les personnages ayant une vision réduite.

L'invention s'applique plus largement pour former des signalisations et/ou des décors lumineux (ou même de l'éclairage fonctionnel) de couleurs distinctes à un moment donné sur deux côtés distincts de l'ensemble vitré, chaque signaliation ou décor étant commutable indépendamment de préférence de manière automatique ou manuellement par l'utilisateur (lumière d'ambiance etc). Il s'applique à tout ensemble vitré entre un premier espace accessible (avec une circulation de piéton ou de véhicule) et deuxième espace accessible (avec une circulation de piéton ou de véhicule) par exemple une cloison, une fenêtre ou même une dalle de sol à l'étage...

Le profilé de montage de l'ensemble vitré (ou de fixation de la première source et/ou de la deuxième source) peut être un U ou en E avec la branche centrale du E espacé de l'ensemble feuilleté de moins de 1mm ou même s'étendant dans une gorge entre les premier et deuxième vitrages.

De préférence au sein de la première surface d'extraction avec plusieurs motifs d'extraction (diffusants, par une couche discontinue notamment blanche etc), la distance maximale entre motifs voisins (discret, caractère, décoratif..) est d'au plus 1cm et même d'au plus 5mm (et d'au moins 1mm de préférence). Naturellement, il peut y avoir sur le premier vitrage une pluralité de premières surface d'extraction, notamment en bandes horizontales ou verticales, de préférence espacées d'au moins 2cm , 5cm, même d'au moins 10 cm de préférence pour laisser une zone transparente (également sans deuxième surface d'extraction avec son masquage), dans le clair de vitre (hors zone périphérique de montage, anti mélange ou points chauds).

Naturellement, il peut y avoir sur le deuxième vitrage une pluralité de deuxièmes surface d'extraction, en bandes horizontales ou verticales, espacées d'au moins 5cm, 10cm de préférence pour laisser une zone transparente (sans deuxième surface d'extraction avec son masquage), dans le clair de vitre (hors zone périphérique de montage, anti mélange ou points chauds)

De préférence au sein de la deuxième surface d'extraction avec plusieurs motifs d'extraction (diffusants, par une couche discontinue notamment blanche), la distance maximale entre motifs voisins (discret, caractère, décoratif..) est d'au plus 1cm et même d'au plus 0,5mm.

Plusieurs deuxièmes surfaces d'extractions peuvent être dans la zone couverte par la première surface d'extraction.

De préférence :
- la première (resp. deuxième) surface d'extraction présente une largeur d'au moins 3cm, 5cm ou même 10cm,
- la première (resp. deuxième) surface d'extraction est de surface d'au moins 25cm² (5x5cm²) ou même d'au moins 100cm² (10x10cm²), de taille pour être visible à au moins 1m ou même 2m, 10m,
- et/ou la première (resp. deuxième) surface d'extraction présente une transparence globale (vision au travers de l'ensemble vitré), à motifs de pas de préférence dans une gamme allant de 2mm à 4mm
- la première et deuxième surface d'extraction sont congruentes, et en motif(s) d'extraction de préférence congruents,
- la première (resp. deuxième) surface d'extraction peut occuper sensiblement tout le clair de vitre ou être en zones séparées par une zone transparente.

Les détails et caractéristiques avantageuses de l'invention vont maintenant ressortir des exemples suivants non limitatifs, à l'aide des figures :
- la figure 1 montre des portiques d'accès à double signalisation à sens unique dans une station de métro
- les figures 2 à 5, 7, 7', 8, 9 sont des vues schématiques (parfois partielles) en coupe d'ensembles vitrés lumineux dans plusieurs modes de réalisation de l'invention,
- la figure 2a montre en variante l'utilisation de moyens réfléchissants sur les moyens d'extraction,
- les figures 3a, 3b, 3c, 3d, 3e, 3'e sont des variantes de montage,
- les figures 6 et 6' montrent en vue de face schématique et partielle une porte d'entrée coulissante avec ensemble(s) vitré(s) lumineux selon l'invention,
- les figures 8a, 8b montrent en vue de face des surfaces d'extraction côté face externe du premier vitrage en variante de la figure 8.

Les figures ne sont pas à l'échelle.

### EXEMPLES

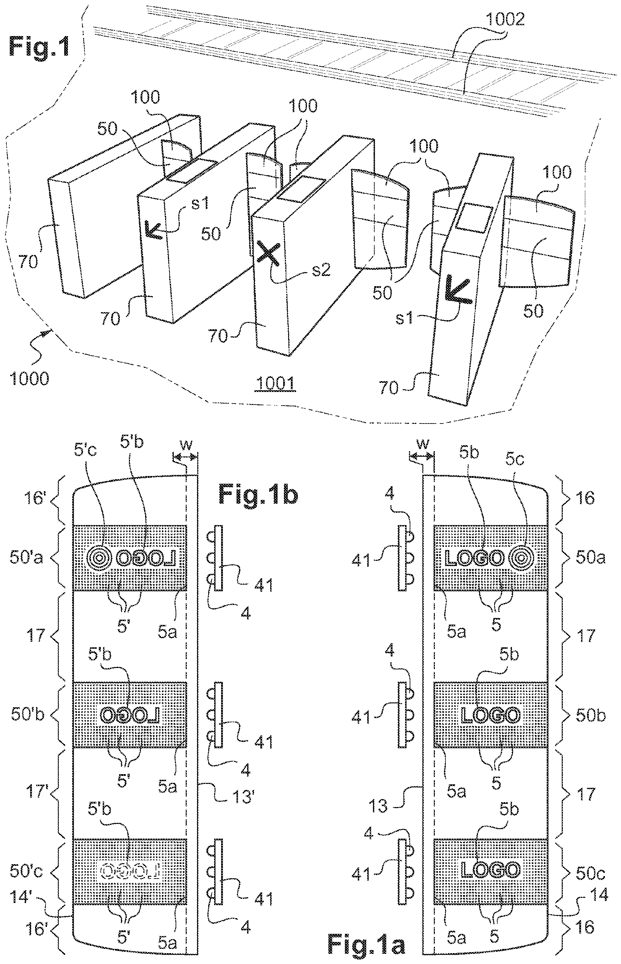

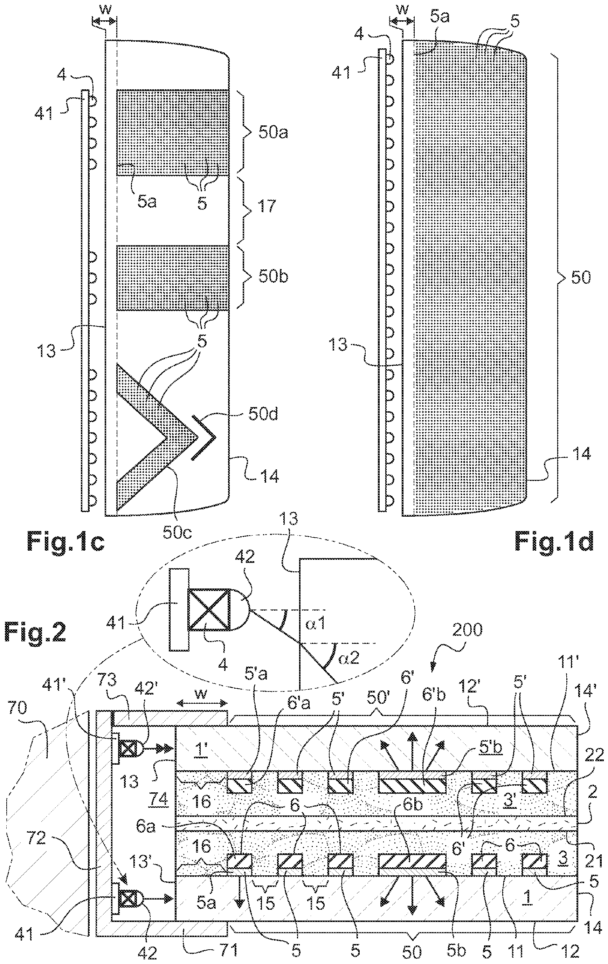

La figure 1 montre une série de quatre portiques d'accès 1000 dans une station de métro entre le hall 1001 coté billetterie et l'espace côté rame 1002 (schématisé par des rails) chacun à double signalisations lumineuses indépendantes (vision unique coté hall /coté rame) et en dynamique (par des moyens de pilotage des sources de lumière non décrits, classiques). Les moyens de lecture d'un ticket ou d'un passe ne sont pas représentés et sont classiques tout comme les moyens déclenchant l'ouverture des vantaux.

Trois portiques d'accès comportent entre deux portants 70 par exemple parallélépipédique et métalliques, deux vantaux 100 de type rectangulaires (par longueur suivant la verticale, largeur de moins de 450mm de préférence) espacés de qq cm, les tranches latérales ayant ici un rayon de courbure en s'éloignant du portant. Les tranches latérales (hors marge) et la tranche à l'opposé du portant sont libres, droites, polies ou diffusantes. Le quatrième (le plus à droite) portique présente un seul vantail lié à un portant (éventuellement contre une paroi, vitrée d'ascenseur etc).

Chaque vantail 100 comporte un premier vitrage de préférence trempé (plan ou bombé et de toute forme générale possible) avec une première tranche, des faces principales appelées face interne et face externe feuilleté avec un deuxième vitrage (plan ou bombé et de toute forme générale possible, identique au premier vitrage) avec une deuxième tranche et des faces principales appelées face de collage et face extérieure, de taille identique et même congruent avec le premier vitrage (même forme, même taille coïncidence des faces et des tranches). Les première et deuxième tranches (dans le portant) sont du même côté, alignées ou décalées de moins de 1mm.

A l'instant t0, les premier et troisième portiques comportent chacun sur le portant de droite côté hall une flèche verte de signalisation s1 orientée vers ses vantaux 100 et présentent chacun dans leur clair de vitre (zone visible) une surface lumineuse verte coté hall, en une bande ici horizontale 50 couvrant partiellement le premier vitrage laissé transparent ailleurs, qui apparait comme sensiblement uniforme (à distance) et préserve dans cette bande 50 une transparence globale par l'usage d'un premier réseau de motifs diffusants discrets couvrant le clair de vitre, des disques de largeur subcentimétrique et espacés d'un pas subcentimétrique, masqués par un premier réseau de motifs de masquage discrets opaques sur la face interne et en congruence (ou réfléchissants de préférence sensiblement en congruence), de préférence directement sur le premier réseau de motifs diffusants agencés sur la face interne. Si le ticket ou le passe est invalide, les surfaces vertes peuvent devenir rouges et même clignoter sur un bref temps donné (moins de 10 s) par exemple 1s à 5s et redevenir vertes.

Le deuxième portique 100 (en partant de la gauche) comporte sur le portant de droite côté hall 1001 une flèche rouge de signalisation s2 et présente dans le clair de vitre une surface lumineuse rouge coté hall, en une bande ici horizontale 50 couvrant partiellement le deuxième vitrage laissé transparent ailleurs qui apparait comme sensiblement uniforme (à distance) et préserve une transparence globale dans cette bande 50 par l'usage d'un (deuxième) réseau de motifs diffusants discrets couvrant le clair de vitre, par exemple des disques de largeur subcentimétrique et espacés d'un pas subcentimétrique, masqués par un (deuxième) réseau de motifs de masquage discrets opaques et en congruence (ou réfléchissants de préférence sensiblement en congruence) sur la face de collage, de préférence directement sur le (deuxième) réseau de motifs diffusants agencés sur la face de collage.

De l'autre côté (non visible), à l'instant t0, le premier et troisième portiques comportent chacun sur le portant de gauche coté rame 1002 une flèche rouge de signalisation et présentent chacun dans leur clair de vitre une surface lumineuse rouge coté rame, en une bande horizontale couvrant partiellement le deuxième vitrage laissé transparent ailleurs et congruente avec la bande côté premier vitrage, qui apparait comme sensiblement uniforme (à distance) et préserve une transparence globale par l'usage d'un deuxième réseau de motifs diffusants discrets couvrant le clair de vitre , des disques de largeur subcentimétrique et espacés d'un pas en congruence avec le premier réseau de motifs diffusants et masqués par un deuxième réseau de motifs de masquage discrets opaques ou réfléchissants sur la face de collage et en congruence avec le deuxième réseau de motifs diffusants, de préférence (directement)sur le deuxième réseau de motifs diffusants agencés sur la face de collage.

De l'autre côté, à l'instant t0, le deuxième portique comporte sur le portant de gauche coté rame une flèche verte de signalisation orienté vers ses vantaux qui présentent chacun dans leur clair de vitre coté rame une surface lumineuse verte coté rame qui apparait comme sensiblement uniforme (à distance) et préserve une transparence globale par l'usage d'un premier réseau de motifs diffusants discrets couvrant le clair de vitre, comme des disques de largeur subcentimétrique et espacés d'un pas subcentimétrique.

Chaque motif diffusant, de préférence blanc, permet d'extraire de la lumière rouge ou verte côté face externe ou extérieure issue d'un rayonnement émis et guidé par des première et deuxième sources de lumière (deux ensemble de diodes par vantail ou fibres optiques extractrices) cachées dans les portants 70, la première source de lumière en couplage optique avec la première tranche, la deuxième source de lumière en couplage optique avec la deuxième tranche.

Les figures suivantes 1a, 1b, 1c, 1d montrent d'autres exemples de zones lumineuses sur les vantaux et l'agencement des première et deuxième sources de lumières.

La figure 1a montre en vue de face un vantail côté rame à droite et côté hall à gauche.

Coté hall, on observe des premières zones lumineuses en trois bandes horizontales et rectangulaires à savoir bande haute 50a, bande centrale 50b et bande basse 50c, espacées par des bandes carrées ou rectangulaires transparentes 17 par exemple de 10 cm de hauteur (ici largeur). Coté rame on observe aussi des deuxièmes zones lumineuses en trois bandes horizontales 50'a 50'b 50'c et rectangulaires congruentes (même taille et même forme) aux premières zones lumineuses espacées par des bandes transparentes 17' par exemple de 10 cm de hauteur (ici largeur).

La première bande verticale haute 50a comporte sur la face interne:
- un premier réseau de motifs diffusants ponctuels 5, motifs de largeur l₁ d'au plus 5mm et espacés d'un pas p₁ d'au plus 5mm, et un premier réseau de motifs opaques ponctuels (non visibles), motifs de largeur l'₁ d'au plus 5mm et espacés d'un pas p'₁ d'au plus 5mm congruents avec le premier réseau de motifs diffusants et (directement)dessus, avec un premier motif 5a distant de W de la première tranche 12 (W de 3cm environ par exemple) comme pour les deux autres bandes
- un premier ensemble diffusant de caractères 5b tel qu' un LOGO, chacun de largeur l₃ d'au plus 5 cm espacés d'un pas p₃ d'au plus 1cm entouré par le premier réseau de motifs diffusants ponctuels 5 et un premier ensemble opaque de caractères (non visibles) tel qu' un LOGO, chacun de largeur l'₃ d'au plus 5 cm espacés d'un pas p₃ d'au plus 1cm congruents avec le premier ensemble diffusant de caractères et (directement)dessus
- un premier motif diffusant décoratif 5c (deux cercles concentriques) de largeur (et même diamètre externe ici) l₂ centimétrique et d'au plus 5 cm entouré par le premier réseau de motifs diffusants ponctuels et un premier motif opaque (cercles concentriques) de largeur l'₂ centimétrique et d'au plus 5 cm congruents avec le premier motif diffusant décoratif et (directement) dessus.

La deuxième bande haute 50'a est congruente avec la première bande haute 50 et comporte sur la face de collage:
- un deuxième réseau de motifs diffusants ponctuels, motifs de largeur m₁ d'au plus 5mm et espacés d'un pas r'₁ d'au plus 5mm, congruent avec le premier réseau de motifs diffusants, et un deuxième réseau de motifs opaques ponctuels, motifs de largeur m'₁ d'au plus 5mm et espacés d'un pas r₁ d'au plus 5mm congruents avec le deuxième réseau de motifs diffusants et (directement)dessus (et congruents au premier réseau de motifs opaques),
- un deuxième motif diffusant décoratif de largeur m₂ centimétrique et d'au plus 5 cm (cercles concentriques) entouré par le deuxième réseau de motifs diffusants ponctuels congruent avec le premier motif diffusant décoratif et un deuxième motif décoratif opaque de largeur m'₂ centimétrique et d'au plus 5 cm congruent avec le deuxième motif diffusant et (directement) dessus (et congruent avec le premier motif décoratif opaque),
- un deuxième ensemble diffusant de caractères tel qu' un LOGO, chacun de largeur m₃ et d'au plus 5 cm espacés d'un pas r₃ d'au plus 1cm, entouré par le deuxième réseau de motifs diffusants ponctuels, congruent avec le premier ensemble diffusant de caractères (donc LOGO inversé) et un deuxième ensemble opaque de caractères tel qu' un LOGO chacun de largeur m'₃ et d'au plus 5 cm espacés d'un pas r'₃ d'au plus 1cm, congruent avec le deuxième ensemble diffusant et (directement)dessus (et congruent avec le premier ensemble opaque)

La première bande centrale 50b comporte sur la face interne:
- un premier réseau de motifs diffusants ponctuels 5', motifs de largeur l₁ d'au plus 5mm et espacés d'un pas p₁ d'au plus 5mm, et un premier réseau de motifs opaques ponctuels, motifs de largeur l₁ d'au plus 5mm et espacés d'un pas p₁ d'au plus 5mm congruents avec le premier réseau de motifs diffusants et (directement)dessus
- un premier ensemble diffusant de caractères 5'b tel qu' un LOGO, chacun de largeur l₃ d'au plus 5 cm espacés d'un pas p₃ d'au plus 1cm entouré par le premier réseau de motifs diffusants ponctuels et un premier ensemble opaque de caractères tel qu'un LOGO, chacun de largeur l₃ d'au plus 5 cm espacés d'un pas p₃ d'au plus 1cm congruents avec le premier ensemble diffusant et (directement)dessus.

La deuxième bande centrale 50'b est congruente avec la première bande centrale. Elle comporte sur la face de collage :
- un deuxième réseau de motifs diffusants ponctuels 5', motifs de largeur m₁ d'au plus 5mm et espacés d'un pas r'₁ d'au plus 5mm, congruent avec le premier réseau de motifs diffusants, et un deuxième réseau de motifs opaques ponctuels, motifs de largeur m'₁ d'au plus 5mm et espacés d'un pas r₁ d'au plus 5mm congruents avec le deuxième réseau de motifs diffusants et (directement)dessus (et congruents au premier réseau de motifs opaques),
- un deuxième ensemble diffusant de caractères 5'b tel qu' un LOGO, chacun de largeur m₃ et d'au plus 5 cm espacés d'un pas r₃ d'au plus 1cm, entouré par le deuxième réseau de motifs diffusants ponctuels, congruent avec le premier ensemble diffusant de caractères (donc LOGO inversé) et un deuxième ensemble opaque de caractères tel qu' un LOGO chacun de largeur m'₃ et d'au plus 5 cm espacés d'un pas r'₃ d'au plus 1cm, congruent avec le deuxième ensemble diffusant et (directement)dessus (et congruent avec le premier ensemble opaque).

La première bande basse 50c comporte sur la face interne:
- un premier réseau de motifs diffusants ponctuels 5, motifs de largeur l₁ d'au plus 5mm et espacés d'un pas p₁ d'au plus 5mm, et sur la face interne un premier réseau de motifs opaques ponctuels, motifs de largeur l₁ d'au plus 5mm et espacés d'un pas p₁ d'au plus 5mm congruents avec le premier réseau de motifs diffusants
- un deuxième ensemble diffusant de caractères 5b tel qu' un LOGO, chacun de largeur m₃ et d'au plus 5 cm espacés d'un pas r₃ d'au plus 1cm, entouré par le deuxième réseau de motifs diffusants ponctuels, congruent avec le premier ensemble diffusant de caractères (donc LOGO inversé) et un deuxième ensemble opaque de caractères tel qu' un LOGO chacun de largeur m'₃ et d'au plus 5 cm espacés d'un pas r'₃ d'au plus 1cm, congruent avec le deuxième ensemble diffusant et (directement)dessus (et congruent avec le premier ensemble opaque).

La deuxième bande basse 50'c est congruente avec la première bande basse et comporte sur la face de collage un deuxième réseau de motifs diffusants ponctuels, motifs de largeur l'₁ d'au plus 1cm et espacés d'un pas p'₁ d'au plus 1cm, certains étant congruent avec des motifs du premier réseau de motifs diffusants ponctuels et d'autres dans la zone couverte par le logo (ici montré par transparence en pointillés) de façon à le masquer un deuxième réseau de motifs opaques ponctuels, motifs de largeur l₁ d'au plus 5mm et espacés d'un pas p₁ d'au plus 5mm congruents avec le deuxième réseau de motifs diffusants et (directement)dessus

Les motifs discrets sont par exemple géométriques, comme des disques (ou en carrés en rectangles etc).

Pour une bande horizontale avec une longueur de 256mm et une largeur (« hauteur ») de 144mm, les motifs discrets sont des disques de diamètre 1mm, espacés de 4mm. Chaque caractère du motif « Logo » est espacé (entouré) de 7mm des disques. Le motif Logo est de longueur 100 mm et de largeur entre 25 et 35mm en fonction des caractères. Le grand cercle du motif décoratif a un diamètre interne de 25 mm et est espacé (entouré) de 7mm des disques. Dans la bande lumineuse, il y a une transparence globale (vision au travers de l'ensemble vitré).

En remplaçant les motifs opaques par des motifs réfléchissants, leur largeur peut être plus grande et déborder sur les vitrages de préférence d'au plus 2mm et même de moins de 1mm.

Pour chaque bande lumineuse à vision monoface, un alignement de diodes 4, certaines à t0 ou t' émettant dans le rouge et d'autres à t' ou t0 dans le vert (ou le blanc ou autre couleur, bleu etc), sous forme d'une barrette ici individuelle au commun aux trois bandes. Le support PCB 41 est individuel pour chaque vitrage ou est plus large et est commun et couplé à la première tranche du premier vitrage et à la deuxième tranche du deuxième vitrage.

Dans les zones transparentes dénuées de motifs diffusants on préfère ne pas guider de lumière, on omet les diodes ou on ne les alimente pas.

Un seul PCB peut être commun aux trois bandes haute , centrale, basse du premier vitrage (et/ou du deuxième vitrage).

Une zone lumineuse peut comprendre un motif fin comme par exemple une flèche ou encore être fermé et évidé (contour géométrique etc)

Les zones lumineuses peuvent être de toute forme et étendue, pour la signalisation et/ou le décor.

La figure 1c montre un autre exemple de zones lumineuses de double signalisation (ou double décor) monoface avec bande haute, bande centrale et en bas deux dessins ou « flèches » de signalisation entre des bandes transparentes 17.

La bande haute 50a (coté hall comme côté rame non visible) diffère de celle de la figure 1a par l'absence de LOGO et de motif décoratif. La bande centrale 50b (coté hall comme côté rame non visible) diffère de celle de la figure 1c par l'absence de LOGO.

En partie basse, est formé sur la face interne (respectivement de collage, en congruence)
- une première bande lumineuse 50c en forme de V tourné à 90° (pointe s'éloignant des sources de lumière, de la tranche 13 de couplage du premier vitrage) formée par un ensemble de premiers motifs diffusants 5 revêtus d'un ensemble de premiers motifs opaques en congruence de largeur centimétrique, par exemple 6 cm
- une deuxième bande lumineuse 50d en forme de V tourné à 90°, plus fine et moins étendue, en motif diffusant plein de largeur d'au plus 3cm.

Ces deux « flèches » peut être verte à t0 comme les autres bandes lumineuses et rouge ou non allumées à t' comme les autres bandes lumineuses.

Pour chaque vitrage, on utilise un seul PCB 41 pour toutes les diodes vertes et rouges 4.

La figure 1d montre un autre exemple de signalisation (ou décor) lumineuse double face en remplaçant bande haute, bande centrale et bande basse par une bande couvrante 50.

Comme déjà dit et détaillé plus tard pour les figures 1a à 1d, les motifs diffusants recouverts de motifs opaques commencent à une distance W de la tranche de couplage optique 13, 13' associé car dans cette zone (frontière en pointillés) on ajoute pour la fixation du vitrage un profilé de montage (métallique, plastique rigide, bois ..) par exemple de section en U porteur ou diodes des PCB et permettant aussi de masquer les points chauds. Les tranches opposées 14,14' sont libres.

Comme détaillé plus tard, on peut prévoir en outre sur la face interne une première bande périphérique anti mélange des couleurs rouge et verte large de D0 et on peut prévoir en outre sur la face de collage une deuxième bande périphérique anti mélange large de D'0.

Le premier (deuxième) vitrage avec l'ensemble présentant côté face interne (de collage) en regard des premiers (deuxièmes) moyens de masquage:
- une absorption (dans le rouge et le vert, même dans tout le visible) d'au moins 80% et même d'au moins 90%,
- un facteur de transmission (dans le rouge et le vert, même dans tout le visible) d'au plus 1% et même 0,5% et/ou une densité optique d'au moins 3.

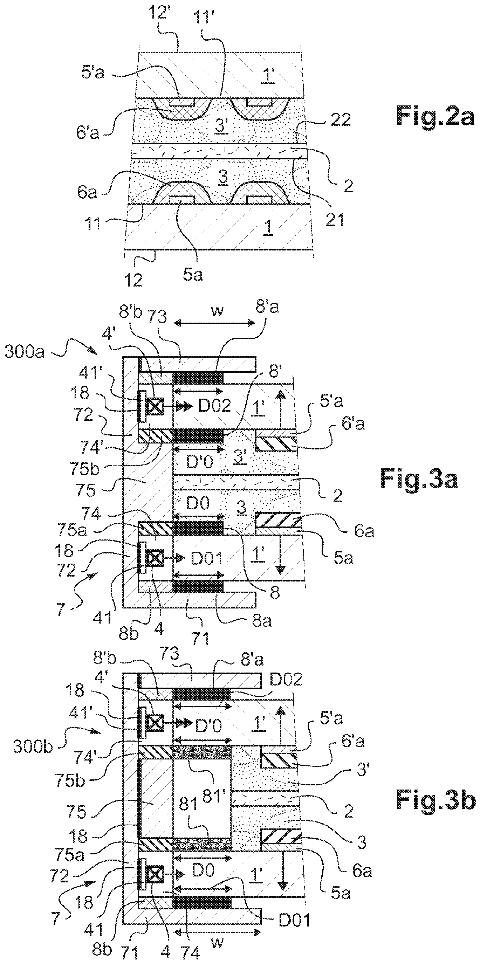

La figure 2 montre plus en détail une vue partielle en coupe d'un ensemble vitré 200 à double zone lumineuse à sens unique dans un deuxième mode de réalisation comportant :
- un premier vitrage 1, ici de forme rectangulaire (par exemple longueur suivant la verticale, largeur par exemple de 250mm), plan ou en variante bombé (trempé), en verre silicosodocalcique clair ou extraclair trempé, (par exemple de 6mm environ notamment le verre dénommé Planilux de la Demanderesse, trempé), d'indice de réfraction n1 d'environ 1,5 à 550nm, de T_{L} d'au moins 90%, avec une première face principale 11 dite face interne, une deuxième face principale 12 dite face externe, une première tranche 13 qui est verticale en position monté et sa tranche opposée 14 (ici chant formé de quatre tranches;la première tranche étant longitudinale),
- une première source de lumière 4, ici un ensemble de diodes électroluminescentes 4 rouges et vertes alignées sur une carte de circuit imprimé dit premier support PCB 41, source couplée optiquement à la première tranche 13, le premier vitrage 1 guidant la lumière émise par les diodes de préférence espacées ici d'au plus 1mm de la première tranche 13, de préférence centrée sur la première tranche et de largeur inférieure à l'épaisseur du premier vitrage 1, par exemple chaque diode de largeur W0 de 4mm,
- une première surface d'extraction 50 (de préférence adaptée pour une transparence globale) délimitée par (les contours) des premiers moyens d'extraction de lumière 5, 5a, 5b associés au premier vitrage ici (directement)sur la face interne 12, qui sont une première couche diffusante discontinue blanche en présentant une clarté L* d'au moins 50, qui est ici un émail blanc diffusant contenant des pigments minéraux blancs et de la fritte de verre fondue, sous forme de premiers motifs diffusants de taille (largeur et/ou longueur) variable, dont un réseau de motifs discrets 5a, 5 adaptés pour une transparence globale, des motif(s) décoratif(s) 5b (ici entouré par les motifs 5 du réseau, et/ou en variante un ensemble de caractères (LOGO etc),
- des premiers moyens de masquage opaques 6, 6a, 6b qui sont une première couche opaque en émail noir, gris ou coloré (rouge, vert ou autre couleur), émail contenant des pigments minéraux et de la fritte de verre fondue, sous forme des premiers motifs opaques 6 de taille variable, congruents et (directement)sur les premiers motifs diffusants, donc un réseau de motifs opaques discrets 6, 6a, des motif(s) 6b sur le ou les motifs décoratif(s, et/ou en variante un ensemble de caractères opaques sur un ensemble de caractères diffusant (LOGO etc).

Le premier motif diffusant 5a est distant de W de la première tranche 13. Le motif le plus large 5b est un motif décoratif par exemple géométrique de largeur 3cm. Les motifs discrets 5 sont par exemple géométriques, comme des disques

Pour une première surface d'extraction 50 de longueur de 256mm (suivant l'horizontale), les motifs discrets sont par exemple des disques de diamètre 1mm, espacés de 4mm. Le motif décoratif 5b est espacé (entouré) de 7mm des disques 5.

Dans un premier exemple de fabrication, on applique par sérigraphie sur la face interne 11 (ou en variante externe) une première composition d'émail, diffusante, liquide de manière discontinue pour former la trame des premiers motifs diffusants 5, 5a,5b comportant fritte de verre, pigment minéral blanc et médium organique, on sèche et on applique une deuxième composition liquide couvrant toute la face interne 12 entre et sur la trame des motifs diffusants 5, 5a,5b composition, dénuée de fritte de verre, contenant un pigment minéral noir (en variante gris ou coloré) et un médium organique. On sèche et cuit l'ensemble et on élimine aisément la deuxième composition cuite entre les motifs diffusants.

Plus précisément, la première composition d'émail renfermant une fritte de verre et des pigments de TiO₂ (commercialisée sous la référence 194100 par la société FERRO) et un médium organique (commercialisé sous la référence 801022 par la société Prince Minerais) en une quantité permettant d'obtenir une viscosité de 200 Poises (mesurée dans les conditions précitées).

L'épaisseur (humide) moyenne de la première couche déposée est égale à 35µm.

Côté verre (face externe) la couleur blanche est définie par L=63,08, a=-1,92 , b=0,69 (après cuisson). Côté masquage (face interne) la couleur blanche est définie par: L= 82,35 , a=-1,24 , b=-0,46 (après cuisson). La densité optique de l'émail diffusant blanc est de 0,9 (côté verre), après cuisson.

L'écran de sérigraphie pour la première couche est constitué d'un tissu de fils de polyester de 80µm de diamètre comprenant 43fils/cm qui permet notamment de former la pluralité de motifs discrets sous forme de disques de 1mm de diamètre espacés de 4mm, un motif décoratif de largeur 2cm comme un disque ou un symbole etc.

L'écran de sérigraphie pour la deuxième couche est constitué d'un tissu de fils de polyester de 48 µm de diamètre comprenant 90 fils/cm pour un dépôt pleine face.

La deuxième composition liquide contient un pigment noir commercialisé sous la référence TDF8874 par la société Ferro) et un médium organique (commercialisé sous la référence 801022 par la société Prince Minerais) en une quantité permettant d'obtenir une viscosité de l'ordre 90 Poises (mesurée à l'aide d'un viscosimètre Haake VT550 ; vitesse de rotation : 23,2 rpm).

L'épaisseur (humide) moyenne de cette couche de pigments déposée sur la première couche est égale à 16µm.

Côté masquage (face interne) la couleur noire est définie par : L= 25,73 ; a=0,55 ; b=-1,63.

Ensuite, le premier vitrage ainsi revêtu est introduit dans un dispositif de séchage équipé de lampes infrarouges opérant à une température de l'ordre de 145 à 155°C afin d'éliminer le médium organique et de consolider les couches.

Le premier vitrage revêtu est ensuite chauffé à une température de 655°C dans un four afin que la fritte de verre fonde et forme l'émail qui enchâsse les particules de pigments.

Les pigments non fixés sont éliminés par brossage et lavage à l'eau.

L'épaisseur (humide) de la première composition est supérieure à la deuxième composition afin de conserver au mieux la couleur blanche côté verre (face extérieure).

Sur le premier vitrage revêtu ainsi obtenu, on mesure la clarté L* de l'ensemble au niveau des motifs apparaissant en noir (au travers du verre côté face externe ou côté opposé) et des motifs blancs (au travers du verre côté face externe ou côté opposé).
Côté verre (face externe) la couleur d'un double motif blanc+ noir est définie par : L=61,88 ; a=-2,17 ; b=0,12. La TL est de 0,15%.

Côté masquage (face interne) les données sur la couleur, l'opacité et la transmission sont répertoriées dans le tableau 1a suivant :

**Tableau 1a**

| Email blanc/émail noir | côté masquage |
|---|---|
| L* | 25,73 |
| a | 0,55 |
| b | -1,53 |
| densité optique | 2,8 |
| T (vert, λ = 525nm) | 0,12 |
| T (rouge, λ = 625nm) | 0,12 |
| TL | 0,15 |

Dans un deuxième exemple de fabrication, on remplace le pigment noir par un pigment à base de rouge (« brun rouge ») absorbant le vert.

Plus précisément, la deuxième composition liquide contient un pigment brun rouge qui est de l'oxyde de fer (commercialisé sous la référence VV33/19/4 par la société Prince Minerais) et un médium organique (commercialisé sous la référence 243 par la société Prince Minerais) en une quantité permettant d'obtenir une viscosité de l'ordre 90 Poises (mesurée à l'aide d'un viscosimètre Haake VT550 ; vitesse de rotation : 23,2 rpm).

L'épaisseur (humide) moyenne de la couche de pigments déposée sur le verre est égale à 15 µm (45 µm pour la première composition blanche).

Côté masquage (face interne) les données sur la couleur, l'opacité et la transmission sont répertoriées dans le tableau 2a suivant :

**Tableau 2a**

| émail (côté masquage) | Rouge |
|---|---|
| L* | 27,6 |
| a | 51,5 |
| b | 40,6 |
| Densité optique | 2,07 |
| T (λ = 525nm) | 0,6 |
| T (λ = 625nm) | 25 |

Sur le deuxième vitrage on choisit un deuxième motif de masquage congruent avec le premier motif de masquage rouge, et coloré absorbant le rouge par exemple avec un pigment bleu tel qu'un bleu de cobalt notamment ou autres pigments connus.

En variante, l'émail diffusant blanc présente par exemple la composition suivante :
- entre 20 et 60 % en poids de SiO₂,
- 10 à 45 % en poids de pigments réfractaires, incluant le Ti0₂, notamment de taille micronique
- pas plus de 20 % en poids d'alumine et/ou d'oxyde de zinc.

Des exemples de composition d'émail peuvent être l'émail sous la dénomination Ferro 194011 commercialisé par l'entreprise FERRO, la référence AF5000 commercialisé par la société JM, la référence VV30-244-1 commercialisé par Pemco.

La face interne 11 et les premiers motifs opaques 6,6a,6b sont (directement) couverts par :
- un premier intercalaire de feuilletage 3 en matière thermoplastique ici de l'EVA submillimétrique, en un feuillet de 0,38mm, transparent même clair, présentant (seul) un flou d'au plus 1,5%,et même 1% et d'indice de réfraction n3 tel que n3-n1, en valeur absolue, est inférieur à 0,05 dans le spectre visible (ici n3 égal à 1,49 environ)
- un film bas indice 2, en fluoropolymère, formant premier (et ici unique) isolateur optique, de préférence ETFE ou FEP et d'épaisseur 50µm ayant des première et deuxième faces principales 21, 22 traitées par traitement corona, de flou entre 1,5 et 2%, tel le produit dénommé Norton ETFE de la société Saint Gobain Performance Plastics de flou entre 1,5 et 2% d'indice de réfraction n2 égal à 1,4 ou Norton FEP de la société Saint Gobain Performance Plastics de flou entre 1,5 et 2% d'indice de réfraction n2 égal à 1,34 environ, film en contact adhésif avec le premier intercalaire de feuilletage 3 par sa face 21,
- un deuxième intercalaire de feuilletage 3' en matière thermoplastique de préférence EVA transparent, clair, identique (nature, épaisseur, un feuillet) au premier intercalaire de feuilletage, en contact adhésif avec la face 22 du film bas indice 2, et d'indice de réfraction n'3
- un deuxième vitrage 1', en verre minéral, identique au premier vitrage congruent et en coïncidence, avec une face principale de collage 11' coté deuxième intercalaire de feuilletage 3', une face opposée dite extérieure 12', une deuxième tranche 13' et sa tranche opposée 14', d'indice de réfraction n'1 d'environ 1,5 à 550nm, de T_{L} d'au moins 90%, (avec n'3 tel que n'3-n'1, en valeur absolue, est inférieur à 0,05 dans le spectre visible (ici n'3 égal à 1,49 environ).

L'ensemble vitré 200 comporte en outre :
- une deuxième source de lumière 4', ici un ensemble de diodes électroluminescentes rouges et vertes alignées sur une carte de circuit imprimé dit deuxième support PCB 41', source couplée optiquement à la deuxième tranche 13', le deuxième vitrage 1' guidant la lumière émise par ces diodes 4' de préférence distantes (espacées ici) d'au plus 1mm de la deuxième tranche, de préférence centrée sur la deuxième tranche et de largeur inférieure à l'épaisseur du deuxième vitrage 1',1', par exemple diode de largeur W'0 de 4mm,
- en congruence avec la première surface d'extraction 50 (même taille, même forme ou contours), une deuxième surface d'extraction 50' délimitée (par ses contours) par des deuxièmes moyens d'extraction de lumière 5',5'a,5'b associés au deuxième vitrage, ici (directement)sur la face de collage 12', qui sont une deuxième couche diffusante discontinue blanche en présentant une clarté L* d'au moins 50, de préférence un émail blanc diffusant avec des pigments minéraux blancs et de la fritte de verre fondue, ici de nature et même épaisseur (sensiblement) identique à la première couche diffusante 5, sous forme de deuxièmes motifs diffusants de taille variable, choisis parmi un réseau de motifs discrets 5',5'a adaptés pour une transparence globale et/ou un ensemble de caractères/ et/ou motif(s) décoratif(s) 5'b, ici deuxièmes motifs diffusants identiques et en congruence avec les premiers motifs diffusants 5,5a,5b
- des deuxièmes moyens de masquage opaques 6',6'a,6'b, qui sont une deuxième couche opaque en émail noir (en variante coloré rouge ou autre couleur), sous forme des deuxièmes motifs opaques de taille variable en congruence avec les deuxièmes motifs diffusants et (directement) dessus (les premiers et deuxièmes motifs, opaques 6,6' comme diffusant 5,5' étant donc tous congruents).

Si la première couche opaque en émail est rouge, à base de rouge ou d'une autre couleur absorbant le vert (et/ou est d'épaisseur suffisante pour l'absorber) alors la deuxième couche en émail opaque est d'une couleur au moins absorbant le rouge par exemple bleu, jaune voire vert.

La fabrication du deuxième vitrage ainsi revêtu d'une double couche émail diffusant blanc /émail opaque noir (ou coloré) est identique à celle décrite pour le premier vitrage.

Entre les motifs 5,5' (zone de transparence 15) l'ensemble vitré est transparent (sans revêtement opaque et/ou diffusant), avec une TL d'au moins 85%. Entre la première (respectivement la deuxième) tranche et le premier motif 5 (respectivement 5') il y a une zone 16 ici également transparente (sans revêtement opaque et/ou diffusant).

Le tableau III suivant donne des exemples de TL et de flou de la zone de transparence (côté face externe) en fonction de l'EVA choisi de 0,38 mm environ.

**Tableau III**

| EVA | Flou (%) | TL (%) |
|---|---|---|
| EPDH de CNC | 2,58 | 89,3 |
| EVASafe039 de Brigdestone | 2 | 89,7 |

Le flou est mesuré au hazemeter.

On préfère un seul feuillet pour chaque intercalaire pour réduire le flou.

Alternativement avec deux PVB RB41 de flou de moins de 1,5% vendu par la société Solutia, dans la zone transparente (côté face externe) la TL est 87% et le flou 2,5% environ.

La première source de lumière 4 est donc pilotée en dynamique pour émettre à l'instant t0 via une première série de diodes 4 un premier rayonnement principal à une première longueur d'onde dite λ1 et à l'instant t'≠t0 via une deuxième série de diodes 4 un deuxième rayonnement principal à une deuxième longueur d'onde dite λ2 distincte de λ1.

La deuxième source de lumière 4' est donc pilotée en dynamique pour émettre à l'instant t0 via une troisième série de diodes 4' un troisième rayonnement principal à une troisième longueur d'onde dite λ3 distincte de λ1 et à l'instant t'≠t0 via une quatrième série de diodes 4' un quatrième rayonnement principal à une quatrième longueur d'onde dite λ4 distincte de λ1.

A t0 :
- la première source émet dans le vert avec λ1 dans une gamme allant de 515nm à 535nm et de largeur spectrale à mi-hauteur de moins de 50nm (et la lumière extraite C1 est verte définie par un premier rayonnement extrait principal à λ1' sensiblement égal à λ1, distinct d'au plus 10nm ou 5nm et avec une largeur spectrale à mi-hauteur de moins de 30nm),
- la deuxième source émet dans le rouge avec λ3 dans une gamme allant de 615nm à 635nm et de largeur spectrale à mi-hauteur de moins de 30nm (et la lumière extraite C3 est rouge définie par un troisième rayonnement extrait principal à λ3' sensiblement égal à λ3, distinct d'au plus 10nm ou 5nm et avec une largeur spectrale à mi-hauteur de moins de 30nm) ou encore du blanc.

At' :
- la première source émet dans le rouge avec λ2 dans une gamme allant de 615nm à 635nm et de largeur spectrale à mi-hauteur de moins de 30nm (et la lumière extraite C2 est rouge définie par un deuxième rayonnement extrait principal à λ1' sensiblement égal à λ1, distinct d'au plus 10nm ou 5nm et avec une largeur spectrale à mi-hauteur de moins de 30nm)
- et la deuxième source émet dans le vert avec λ4 dans une gamme allant de 515nm à 535nm et de largeur spectrale à mi-hauteur de moins de 50nm (et la lumière extraite C4 est verte définie par un quatrième rayonnement extrait principal à λ4' sensiblement égal à λ4, distinct d'au plus 10nm ou 5nm et avec une largeur spectrale à mi-hauteur de moins de 30nm).

Alternativement, la première source continue d'émettre dans le rouge avec λ4 dans une gamme allant de 615nm à 635nm et de largeur spectrale à mi-hauteur de moins de 30nm (et la lumière extraite C4 est rouge définie par un quatrième rayonnement extrait principal à λ4' sensiblement égal à λ1, par exemple distinct d'au plus 10nm ou 5nm et de préférence avec une largeur spectrale à mi-hauteur de moins de 30nm).

Une autre configuration est que par exemple à t3 chaque source 4, 4' émette dans le vert ou dans le blanc. Il est aussi possible qu'une des sources soit éteinte (donc configurations suivantes : rouge et état off ; vert et état off ; blanc et état off).

Pour prévenir le mélange des couleurs vertes et rouges au niveau de la deuxième surface d'extraction, chaque diode 4 de la première source 4 comporte une optique de collimation 42 qui assure un diagramme d'émission étroit. Chaque diode 4 de la première source de lumière 4 est espacée de la première tranche 13 par de l'air d'au plus 1mm (ou moins) et au moins 80% (mieux au moins 90% et même au moins 95%) du flux lumineux émis par chaque diode est dans un cône d'émission entre -a1 et α1 avec a1 = Arsin(n1 * sin (α2)) où α2=π/2-Arsin (n2/n1) et correspond à l'angle de réfraction dans le premier vitrage comme montré en vue de détail.

Pour prévenir le mélange des couleurs vertes et rouges au niveau de la première surface d'extraction, chaque diode de la deuxième source 4 comporte une optique de collimation 42' qui assure un diagramme d'émission étroit. Chaque diode 4' de la deuxième source de lumière 4' est espacée de la deuxième tranche 13' par de l'air d'1mm environ (ou moins) et au moins 80% (mieux au moins 90% et même au moins 95%) du flux lumineux émis par chaque diode est dans un cône d'émission entre -α'1 et a'1 avec a'1 = Arsin(n1 * sin (α'2)) où α'2=π/2-Arsin (n2/n'1) et correspond à l'angle de réfraction dans le deuxième vitrage.

Pour n2=1,4 (indice de l'ETFE) et n1=1,5 dans le spectre du visible α2 est de 21° et α1 de 33°. Pour n2=1,35 (indice du FEP) et n1=1,5 dans le spectre du visible α2 est de 26° et α1 de 41°.

Comme diodes, on peut choisir les diodes ALMD de la société Avago de 4 mm de largeur avec 100% du flux lumineux émis par chaque diode dans un cône d'émission entre -30 et 30°. En particulier, les diodes rouges dénommées ALMD-EG3D-VX002 à base d'AllnGaP de longueur d'onde dominante à 626nm et de largeur spectrale entre 618nm et 630nm.

En particulier les diodes vertes dénommées ALMD-CM3D-XZ002 à base d'InGaN de longueur d'onde dominante à 525nm et de largeur spectrale entre 519nm et 539nm.

Chaque support PCB est en barrette, rectangulaire ne dépassant pas de la tranche de l'ensemble vitré et comprend en alternance LED rouge et verte. L'espacement max entre les diodes de même couleur est choisi d'au plus 20mm.

Les diodes de la première source (respectivement de la deuxième source) ont chacune une direction principale d'émission donnée sensiblement parallèle à la première tranche (respectivement à la deuxième tranche) par exemple de moins de 5°.

La Luminance à la normale d'un motif 5a côté face externe ou face extérieure avec lumière verte ou rouge est d'environ 100 cd/m² (+/- 10 cd/m²). La luminance à la normale est uniforme à (+/- 10 cd/m²).

Le circuit électrique de chaque diode « verte » émettant dans le vert est ajusté pour que le flux F1 émis par cette diode « verte » soit inférieur à 0,8 même à 0,5 fois le flux F2 émis par une diode « rouge » émettant dans le rouge.

Par exemple pour des premiers et deuxièmes supports PCB de même longueur, on peut avoir sur chacun des répétitions de la séquence suivante : deux diodes rouges /une diode verte...

Ici l'ensemble vitré 200 est symétrique de part et d'autre du film bas indice 3 mais les première et deuxième surfaces d'extraction 50,50' avec leurs masquage pourraient être décalées et/ou de taille et forme distincte lorsque les premiers et deuxièmes moyens de masquage absorbent chacun le vert et le rouge (étant noir, gris ou suffisamment épais..).

Toutefois la congruence est souhaitée lorsque les premiers moyens de masquage sont colorés en marron-rouge, les deuxièmes moyens de masquage sont alors par exemple en bleu pour absorber le vert.

Alternativement, les premiers moyens de masquage peuvent être une peinture rouge (ou verte ou noire), ou toute couleur suffisamment épaisse pour absorber. On peut citer par exemple la peinture Rouge Opéra du produit Planilaque Evolution (noir du produit Planilaque Evolution) de la société Demanderesse.Les deuxièmes moyens de masquage peuvent être une peinture verte (ou rouge ou noire). On peut citer par exemple la peinture Vert Mint du produit Planilaque Evolution de la société Demanderesse. Dans ce cas, on peut préférer que les premiers (resp. deuxièmes) moyens d'extraction soient une peinture blanche sur la face externe (resp. extérieure). On peut citer par exemple la peinture extrablanc du produit Planilaque Evolution, de la société Demanderesse avec comme pigment majoritaire du TiO2. L'épaisseur est typiquement entre 40 et 60µm.

Une formulation de peinture peut être déposée selon le procédé du rideau. Le solvant est du xylène ou en variante aqueux. La laque après séchage comprend par exemple les ingrédients suivants :
- un liant sous forme de résine polyuréthane obtenue par réticulation, par un isocyanate non aromatique, de résines acryliques hydroxylées issues de la polymérisation d'un styrène acrylique
- des matières minérales (pigments et charges) à hauteur de 55% en masse.

Comme montré en figure 2a, en autre variante, les premiers et deuxièmes moyens de masquage opaques sont remplacés par des premiers et deuxièmes moyens réfléchissants par exemple une couche d'argent discontinue, par exemple par argenture, qui peut dépasser de part et d'autre de chaque motif diffusant 5a, 5'a d'au plus 1mm. Alternativement on place ces premiers et deuxièmes moyens réfléchissants 6, 6' de l'autre côté sur les faces externe et extérieure ainsi que même éventuellement les premiers et deuxièmes moyens d'extraction (couche diffusante, dépoli des premier et deuxième vitrages).

Les premier et deuxième supports PCB 41, 41' sont dans le volume intérieur 74 d'un profilé de montage 7 de section en U, de préférence métallique (aluminium, acier laqué ou en variante plastique (PVC etc) ou encore bois comportant :
- une base 72 en regard de la tranche de l'ensemble vitré 200 (incluant la première et deuxième tranche 13,13'; les tranches du film bas indice et des premier et deuxième intercalaire de feuilletage 3,3'), base métallique portant ici les premier et deuxième supports PCB 41,41' et servant par exemple de dissipateur thermique, premier et deuxième supports PCB par exemple collés à la base avec une colle thermique (non montrée)
- de part et d'autre de la base 72 des première et deuxièmes ailes 71, 73 respectivement s'étendant sur face externe 12 et face extérieure 12' sur une largeur W de 3cm, sans être en contact optique pour ne pas perturber le guidage.

La face 12' est une surface libre du vitrage lumineux, est visible voire même accessible (au toucher). L'ensemble vitré pourrait être assemblé dans un vitrage isolant ou sous vide si nécessaire

Les première et deuxième tranches 13,13' sont droites, polies. Les tranches opposées 14, 14' sont droites, polies ou même diffusantes.

On peut rajouter d'autres diodes sur la tranche opposée (non montrée ici) notamment dans le cas d'un vitrage avec une large première surface d'extraction et/ou avec plusieurs motifs centimétriques espacés.

On peut placer un joint polymérique sur cette tranche opposée par exemple pour plus de confort si les vantaux se rabbattent trop vite sur le piéton.

En variante, par exemple pour une cloison ou une fenêtre, on supprime les premier et deuxième isolateurs optiques et les premier et deuxième intercalaires de feuilletage, les premier et deuxième vitrages sont espacés par de l'air (isolateur optique idéal) et assemblés (sceller) en périphérie de préférence avec des espaceurs, par exemple comme un double vitrage (un vitrage isolant ou sous vide).

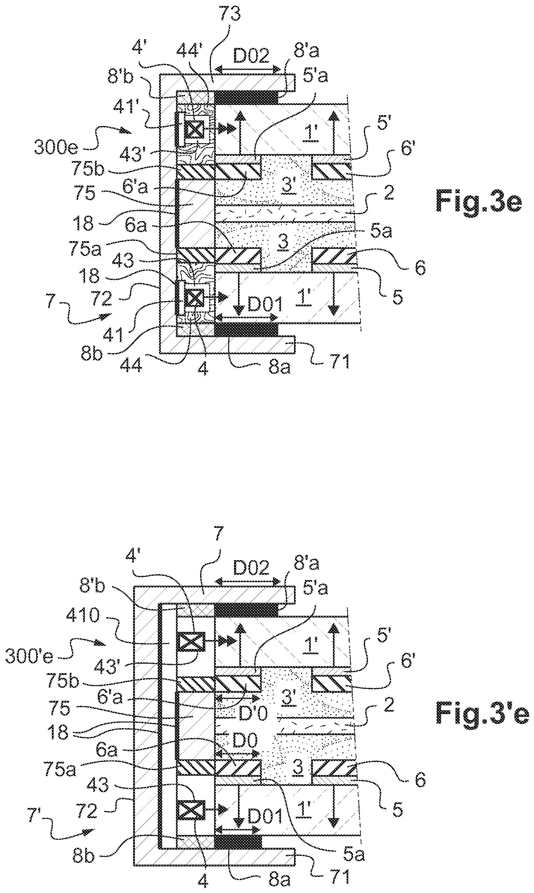

La figure 3a montre une vue partielle en coupe d'un ensemble vitré lumineux 300a dans un troisième mode de réalisation variante du deuxième.

Seules les différences par rapport au deuxième mode sont décrites. L'ensemble vitré lumineux 300a diffère comme suit de l'ensemble vitré 200.

On choisit des diodes 4,4' classiques, par exemple sans optique de collimation -et même sans (pré)encapsulation- ayant un diagramme d'émission avec des grands angles par exemple émission lambertienne (par exemple avec angle à mi hauteur de 120°).

Comme diodes on peut choisir les NSSM124T vendu par la société NICHIA de largeur WO 3mm centrée sur la première tranche. Par précaution, on peut aussi choisir de conserver les diodes de l'exemple de la figure 2.

Une première bande dite antimélange 8 en émail noir ou en peinture noire couvre sur une largeur D0 la face interne 11 pour couper les grands angles allant vers le deuxième vitrage 1'. La première bande 8 est décalée des premiers moyens de masquage 6a et de la première surface d'extraction 50 plus éloignés de la première tranche 13. On peut réaliser en même temps bande anti mélange et premiers moyens de masquage avec une même composition.

D0 est au moins égale à 0,8 Dmin où Dmin= d1 / tan (π/2-arsin(n2/n1)) et inférieure à 2cm et même 1cm. d1 est la distance entre le bord le plus éloigné de chaque diode de la première source et la face interne 11, ou formé par un motif des premiers moyens de masquages opaques. Pour d1 égale à 5mm, n2=1,4 et n1=1,5 Dmin vaut donc 13 mm.

On peut préférer ajouter une autre première bande antimélange 8a (sur la face externe 12 identique et de largeur D01 égale à D0 pour couper les grands angles allant vers le deuxième vitrage 1' après réflexion sur l'aile 71. On choisit par exemple un ruban adhésif noir, mono ou double face en plus (sous une éventuelle colle 18, remplaçant une colle de montage etc). L'aile 71 dépasse de l'autre première bande anti mélange 8a.

Une deuxième bande dite antimélange 8' en émail noir ou en peinture noire couvre sur la largeur D0 la face de collage 11' pour couper les grands angles allant vers le premier vitrage 1. La deuxième bande 8' est décalée des deuxièmes moyens de masquage 6'a et de la deuxième surface d'extraction 50 (plus éloignés de la deuxième tranche 13'. Si on choisit la peinture (laque) on peut réaliser en même temps deuxième bande anti mélange et deuxièmes moyens de masquage.

D'0 est au moins égale à 0,8 D'min où D'min= d'1 / tan (π/2-arsin(n2/n'1)) et inférieure à 2cm. d'1 est la distance entre le bord le plus éloigné de chaque diode 41' de la deuxième source 4' et la face de collage 11', ou formé par un motif des premiers moyens de masquages opaques. Pour d'1 égale à 5mm, n'2=1,4 et n'1=1,5 D'min vaut donc 13 mm.

On choisit ici des première et deuxième bandes identiques. Ces bandes anti mélange sont utiles surtout si n2 (n'2) est d'au moins 1,2.

On préfère ajouter une autre deuxième bande antimélange 8'a sur la face extérieure 12' identique et de largeur D02 égale à D'0 pour couper les grands angles allant vers le premier vitrage 1 après réflexion sur l'aile 73. On choisit par exemple un ruban adhésif noir, mono ou double face en plus (sous une éventuelle colle 18, remplaçant une colle de montage etc). L'aile 73 dépasse de l'autre deuxième bande anti mélange 8'a.

Par ailleurs on souhaite éviter tout mélange de couleurs dû à une fuite latérale de lumière des premières diodes 4 du volume intérieur 74 vers le deuxième vitrage (rayons non couplés au premier vitrage) en particulier réfraction dans le premier intercalaire voire même dans la deuxième tranche, et/ou dû à une fuite latérale de lumière des deuxièmes diodes 4' du volume intérieur 74' vers le premier vitrage (rayons non couplés au deuxième vitrage) en particulier réfraction dans le deuxième intercalaire voire même dans la première tranche 13.

Aussi, le support 7 est un profilé de section en E plutôt qu'un U avec une branche centrale 75 du E opaque (ou réflecteur) cloisonnant et absorbant (ou réfléchissant) la lumière de la première source de lumière et de la deuxième source de lumière, par exemple contre ou espacé de moins de 1mm de la tranche (alignée) de l'ensemble vitré (du vitrage feuilleté). Le profilé ou au moins cette branche centrale 75 est d'épaisseur inférieure ou égale à l'épaisseur entre face interne et face de collage, par exemple de moins de 0,8mm et même 0,5mm.

Le profilé 7 est monolithique ou la branche centrale 75 opaque (absorbante) - est rapportée (fixée) sur la base 72.

L'ensemble (ou au moins l'intérieur) du profilé 7 peut être opaque (par exemple plongé dans un bain).

La première surface latérale avec le revêtement opaque 75a de préférence ne dépasse pas vers et sur la première tranche 13.

La deuxième surface avec le revêtement opaque 75b de préférence ne dépasse pas vers et sur la deuxième tranche 13'.

De préférence, on choisit un revêtement opaque de moins de 1mm et même de moins de 0,5mm.

Par exemple c'est une peinture noire ou c'est un adhésif noir comme :
- en monoface, le produit NORFIX T333 (mousse polyéthylène et colle acrylique) de Norton épais de 0,5mm
- en double face le produit D5395B de Nitto épais de 0,05mm (polyester noir et adhésif acrylique) ou D9625 épais de 0,100µm (polyéthylène noir et adhésif acrylique)
- en monoface le produit 61313B de Nitto épais de 0,05mm (polyester noir et adhésif acrylique)
- en double face le produit 521-12µm de Lohmann épais de 12µm.

Entre la branche centrale et la tranche centrale il n'y a pas de colle ou tout autre moyen de fixation.

En variante, la branche centrale 75 opaque (absorbante) - est une pièce (avec les revêtements opaques précités) distincte, rapportée (fixée) sur la base 72 par une colle 18, par une encoche....Par précaution, coté espace interne 74, on forme sur l'aile 71 un revêtement opaque 8b en regard de la surface latérale opaque 75a, par exemple en prolongeant un ruban adhésif noir 8a double face ou monoface.

Par précaution, coté espace interne 74' on forme sur l'aile 73 un revêtement opaque 8'b en regard de la surface latérale opaque 75b, par exemple en prolongeant un ruban adhésif noir 8'a double face ou monoface.

De manière alternative, lorsque la branche centrale 75 (comme l'âme 72 et l'aile 71 et même l'aile 73) est métallique, réfléchissante par exemple en aluminium elle peut assurer le cloisonnement. On peut aussi se contenter d'un profilé 7 métallique, réfléchissant par exemple en aluminium sans revêtement (opaque) en regard des espaces internes 74, 74'.

La figure 3b montre une vue partielle en coupe d'un ensemble vitré lumineux 300b dans une première variante du troisième mode de réalisation.

Seules les différences par rapport au troisième mode sont décrites. L'ensemble vitré lumineux 300b diffère comme suit de l'ensemble vitré 300a.

Les première et deuxième bandes 81, 81' sont chacune un bande adhésive opaque (type scotch) mono face ou double face d'épaisseur inférieure à celle des intercalaires 3,3' (0,76mm voire 0,38mm) - par exemple bandes comme celles déjà précités pour la branche centrale 75 de l'exemple précédent. Ces bandes adhésives 81, 81' ont une surface libre car les intercalaires de feuilletages 3,3' et le premier isolateur optique 2 sont en retrait des première et deuxième tranches 13,13' et commencent à partir de D0 (D'0).

Le profilé 7 est de section en U. Une pièce 75 avec les revêtements opaques 75a, 75b est collée sur la base 72 et est espacée de moins de 1mm de la gorge entre les vitrages 1,1'. Elle peut rentrer dans la gorge.

De manière alternative, lorsque la branche centrale 75 (comme l'âme 72 et l'aile 71 et même l'aile 73) est métallique, réfléchissante par exemple en aluminium elle peut assurer le cloisonnement. On peut aussi se contenter d'un profilé 7 métallique, réfléchissant par exemple en aluminium sans revêtement (opaque) en regard des espaces internes 74, 74'.

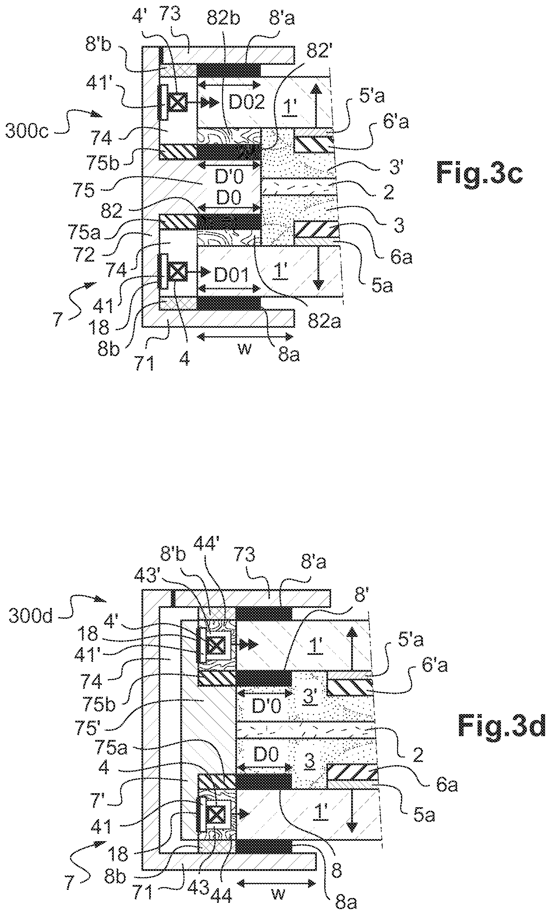

La figure 3c montre une vue partielle en coupe d'un ensemble vitré lumineux 300c dans une deuxième variante du troisième mode de réalisation.

Seules les différences par rapport à la première variante sont décrites. L'ensemble vitré lumineux 300c diffère comme suit de l'ensemble vitré 300b.

Les première et deuxième bandes 82, 82' sont chacune un revêtement opaque par exemple noir (encre etc) sur les faces principales de la branche centrale 75 qui rentre entre les vitrages 1,1' jusqu'aux tranches des intercalaires 3,3' et de l'isolateur optique 2.

Ces revêtements opaques 82, 82' ont des surfaces externes collées aux faces interne et de collage 11, 11' par une colle optique ou un adhésif double face transparent 82a, 82b comme support polyester avec en double face de la colle acrylique comme le produit dénommé D9605 de la société NITTO.

Pour former les surfaces latérales opaques 75a, 75b, on peut étendre le revêtement opaque 82, 82' choisi ruban adhésif noir monoface sur une branche centrale 75 du profilé de section en E.

De manière alternative, lorsque la branche centrale 75 (comme l'âme 72 et l'aile 71 et même l'aile 73) est métallique, réfléchissante par exemple en aluminium elle peut assurer le cloisonnement. On peut aussi se contenter d'un profilé 7 métallique, réfléchissant par exemple en aluminium sans revêtement (opaque) en regard des espaces internes 74, 74'.

La figure 3d montre une vue partielle en coupe d'un ensemble vitré lumineux 300d dans une autre variante du troisième mode de réalisation.

Seules les différences par rapport au troisième mode sont décrites. L'ensemble vitré lumineux 300d diffère comme suit de l'ensemble vitré 300a.

Les premier et deuxième support PCB 41,41' sont sur un profilé métallique commun 7' par exemple une barrette de largeur inférieure ou égale à l'épaisseur de la tranche de l'ensemble vitré, de section T donc avec un ergot 75 avec les revêtements opaques 75a, 75b pour cloisonner les sources de lumière 4,4' et absorber les rayons gênants.

Ce profilé 7' n'est pas fixé sur le profilé de montage 7 de l'ensemble vitré par exemple à un portant.

Chacun des diodes de la première source 4 (resp. de la deuxième source 4') comporte une encapsulation primaire 43,43' et sont collées à la première tranche 13 (resp. à la deuxième tranche 14') par un adhésif double face transparent 44,44' comme support polyester avec en double face de la colle acrylique comme le produit D9605 dénommé de la société NITTO par exemple ne dépassant pas de la tranche de l'ensemble vitré, vers l'extérieur.

De manière alternative, lorsque le profilé 7' est métallique, réfléchissant par exemple en aluminium il peut assurer le cloisonnement. On peut aussi se contenter d'un profilé 7 métallique, réfléchissant par exemple en aluminium sans revêtement (opaque) en regard des diodes.

On peut aussi supprimer le profilé commun et avoir un profilé (type barrette de section rectangulaire voire en U, en L) ainsi collé pour chaque source 4,4'. Deux profilés en U ou L peuvent être espacés ou accolés ou fixés entre eux et garder le cloisonnement. On peut même avoir sur des tranches de côté opposé de l'ensemble vitré deux profilés ainsi collés.

La figure 3e montre une vue partielle en coupe d'un ensemble vitré lumineux 300e dans une variante du troisième mode de réalisation.

Seules les différences par rapport au troisième mode sont décrites. L'ensemble vitré lumineux 300e diffère comme suit de l'ensemble vitré 300a.

La première bande antimélange de largeur D0 n'est plus un simple revêtement opaque mais est remplacée par un premier motif opaque 6a (émail noir ou coloré) sus jacent au premier motif diffusant 5a (émail blanc). L'extraction commence dès la première tranche 13. Cette réalisation de bande anti mélange coté feuilletage est la plus simple à fabriquer. La deuxième bande antimélange de largeur D'0 n'est plus un simple revêtement mais est remplacée par un deuxième motif opaque 6'a (émail noir ou coloré) sus jacent à un deuxième motif diffusant 5'a (émail blanc).

Les premier et deuxième supports PCB 41, 41' sont sur un profilé métallique commun 7 avec une base 72, en regard de la tranche de l'ensemble vitré, et deux ailes 71, 73 de part et d'autre'. Le profilé 7 est donc en U et on fixe (collage etc) une pièce 75 avec les revêtements opaques 75a, 75b sur la base 72.Le premier motif d'extraction 5a, 5'a est masqué par les ailes 71, 73. Alternativement la pièce 75 est une pièce métallique réflectrice, comme une pièce en aluminium (sans revêtements opaques) ou encore une pièce opaque.

Chacun des diodes de la première source (resp. de la deuxième source) comporte une encapsulation primaire 43,43' et sont collées à la première tranche 13 (resp. à la deuxième tranche 14') par une colle optique 44, 44' ou un adhésif double face transparent.

Le profilé 7 peut aussi être en E (ne dépassant pas sur les faces extérieure et externe de préférence).

La figure 3'e montre une vue partielle en coupe d'un ensemble vitré lumineux 300'e dans une variante du précédent mode de réalisation précédent.

L'ensemble vitré lumineux 300'e diffère comme suit de l'ensemble vitré précédent 300e.

Les premier et deuxième supports PCB 41,41' sont formés par un support PCB commun 410 comme une barrette rectangulaire, de largeur inférieure ou égale à l'épaisseur de la tranche de l'ensemble vitré. Le support PCB commun est collé par une colle thermique 18 à la base métallique 72 du profilé 7 en U.

Une pièce avec les revêtements opaques 75a, 75b est fixée sur le support PCB commun 410 par une colle 18 (ou une encoche etc). Alternativement la pièce 75 est une pièce métallique réflectrice, comme une pièce en aluminium (sans revêtements opaques) ou encore une pièce opaque.

Les diodes, qui restent à émission par le haut, sont espacées des première et deuxième tranches 13, 13'. La colle 44, 44' est supprimée.

En variante, on conserve les bandes opaques 8 et 8' sous forme de couches d'émail (avec de préférence les bandes opaques 8a et 8'a qui sont des films rapportés comme des adhésifs mono ou double face opaques déjà cités).

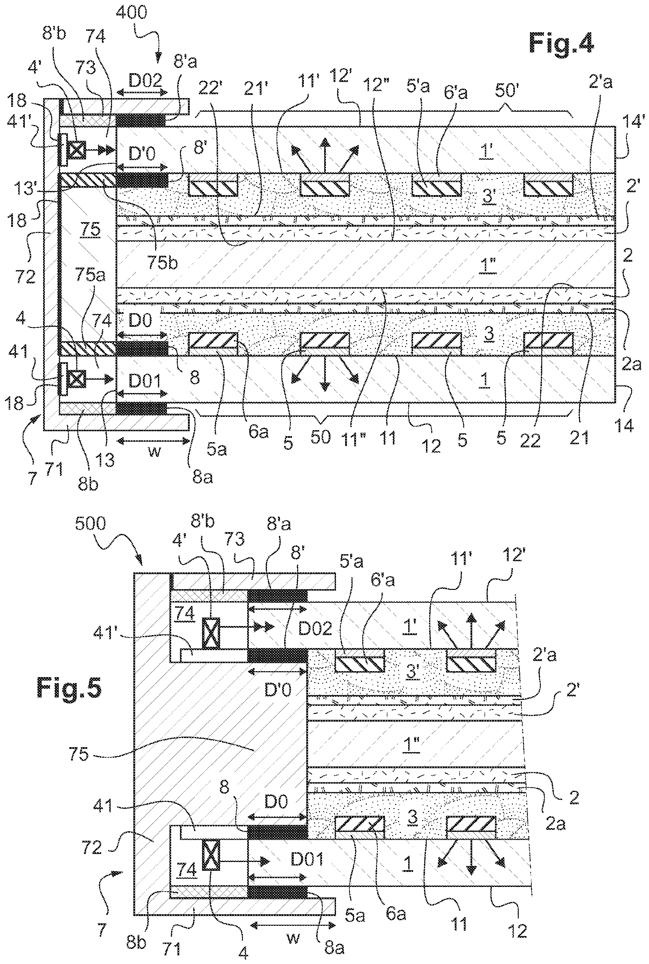

La figure 4 montre une vue partielle en coupe d'un ensemble vitré lumineux 400 dans un quatrième mode de réalisation.

Seules les différences par rapport au troisième mode 300a sont décrites. L'ensemble vitré lumineux 400 diffère comme suit de l'ensemble vitré 300a.

On n'utilise plus de film bas indice. On insère un troisième verre 1", par exemple identique aux premier et deuxième vitrages 1,1'. On peut abaisser l'épaisseur de chacun à 4mm environ. d1 (d1') devient égal à 4mm.

Ce troisième verre 1" est revêtu :
- sur sa face 11", côté face interne 11 d'une première couche bas indice qui est une couche de silice poreuse de préférence obtenue par voie sol-gel et d'épaisseur de 600nm mieux 800nm, surmontée si nécessaire d'un premier revêtement de protection transparent 2a en couche de silice (dense) obtenu par voie sol-gel, d'épaisseur 300nm ou même plus, avec un indice de réfraction n4 d'au moins 1,4 à 550nm
- sur sa face 12", côté face de collage 11' d'une deuxième couche bas indice qui est une couche de silice poreuse de préférence obtenue par voie sol-gel et d'épaisseur de 600nm mieux 800nm, de préférence identique à la première couche bas indice, surmonté si nécessaire d'un deuxième revêtement de protection transparent 2'a en couche de silice (dense) obtenu par voie sol-gel, d'épaisseur 300nm ou même plus, de préférence identique au premier revêtement de protection 2a.

Le profilé de montage 7 est en U (ou en variante reste en E avec surfaces latérales opaques pour cloisonner et absorber la lumière). La base 72 porte une pièce 75 avec des surfaces latérales opaques 75a, 75b collée avec de la colle 18 par exemple. Alternativement la pièce 75 est une pièce métallique réflectrice, comme une pièce en aluminium (sans revêtements opaques) ou encore une pièce opaque.

On ajoute de préférence une autre première bande anti mélange 8a sur la face externe 12 et une autre deuxième bande anti mélange 8'a sur la face extérieure 12' par exemple des rubans adhésifs noirs monoface ou double face minces comme déjà décrits.

On rajoute même des revêtements opaques 8b, 8'b sur les parois internes coté 74, 74' des première et deuxième ailes 71, 73.

n2 (n'2) varie en fonction de la fraction volumique de pores et peut aller de 1,4 à 1,15 aisément. La fraction volumique de pores est de préférence supérieure à 50% et même à 65% et de préférence inférieure à 85% pour une grande tenue de la couche.

Chaque couche de silice poreuse 2, 2' est une matrice de silice avec des pores fermés (de préférence délimités par les parois de la silice) en volume.

Si n2 descend sous 1,2 (si n'2 descend sous 1,2) on peut retirer la première (deuxième) bande antimélange 8,8' et toute autre bande antimélange.

La porosité peut être en outre monodisperse en taille, la taille des pores étant alors calibrée. 80% ou même plus des pores sont fermés de forme sphériques (ou ovales) présentent un diamètre entre 75nm et 100nm.

On peut utiliser en variante seulement le verre 1" avec la première couche sol gel de silice 2 poreuse avec son revêtement de protection 2a (de préférence) - la face opposée alors en contact avec le deuxième intercalaire de feuilletage- mais étant donné l'épaisseur millimétrique du troisième verre central 1" on augmente le trajet des rayons guidés et cela peut diminuer l'efficacité d'extraction (et même plus de rayons pouvant être absorbés par les premiers moyens de masquage opaques 6).

Un exemple de fabrication de la couche de silice poreuse est décrit dans le WO2008/059170. De préférence, la cuisson à haute température est après le dépôt liquide de la couche de silice dense sur la couche de silice poreuse séchée.

La figure 5 montre une vue partielle en coupe d'un ensemble vitré lumineux 500 dans un cinquième mode de réalisation.

Seules les différences par rapport au quatrième mode 400 sont décrites. L'ensemble vitré lumineux 500 diffère comme suit de l'ensemble vitré 400.

Le profil 7 est en E, de préférence métallique et par exemple d'au plus 5mm (épaisseur inférieure ou égale à la distance face de collage - face interne), avec une branche centrale 75 cloisonnant les sources 4 et 4' et intercalé entre les faces interne 11 et de collage 11'. Les intercalaires 3,3', les couches bas indice 2, 2' et leurs revêtements de protection 2a, 2b le verre central 1" étant en retrait de la tranche de l'ensemble vitré (incluant première et deuxième tranches 13,13') de D0 (D'0 égal à D0). Sur cette branche centrale 75 est agencé d'un côté le premier support PCB 41, de l'autre le deuxième support PCB 41'.

Les diodes 4,4' sont à émission latérale (« side emitting » en anglais). Chaque face émettrice de la première source 4 (resp. de la deuxième 4') est perpendiculaire au premier (respectivement deuxième) support PCB 41.

La largeur de la face émettrice est par exemple de 1mm. d1 est de l'ordre de 2,5mm (pour 4mm de verre, avec diodes centrées).

On rajoute une autre première bande anti mélange 8a sur la face externe 12 et une autre deuxième bande anti mélange 8'a sur la face extérieure 12'.

Les supports PCB 41, 41' peuvent participer au cloisonnement anti mélange des lumières. Ainsi le premier support PCB 41 est opaque (ou avec un revêtement opaque coté 74) et forme le premier cloisonnement opaque et le deuxième support PCB 41' est opaque (ou avec un revêtement opaque coté 74') et forme le deuxième cloisonnement opaque.

De préférence, le premier support PCB 41 (sa tranche) n'est pas en saillie de la première tranche 13 et le deuxième support PCB 41' (sa tranche) n'est pas en saillie de la deuxième tranche 13'.

Chaque support PCB 41, 41' est collé à la surface de la branche centrale 75 avec de la colle (non montrée) par exemple thermique qui peut être opaque.

Alternativement, il n'y a pas de retrait. Les supports PCB 41,41' (et la branche centrale 75 les portant) sont alors contre la tranche centrale.

Alternativement, les supports PCB 41,41' sont fixés sur les ailes 71,73 du profilé de montage 7.

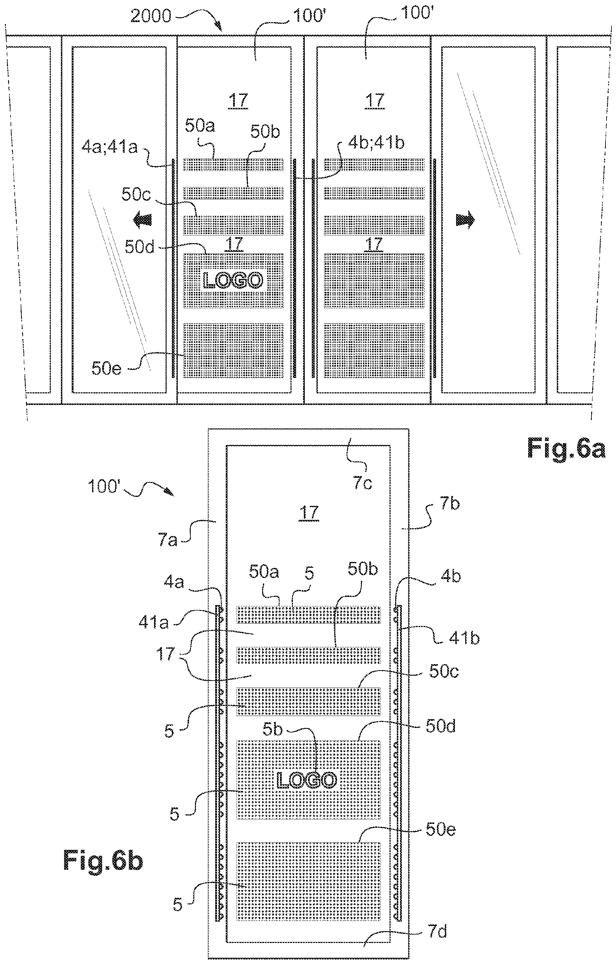

La figure 6 montre une vue partielle de face d"une série des portes vitrées 2000 à double signalisation et/ou décor lumineux à vision unique comportant deux ensembles vitrés lumineux 100' dans un sixième mode de réalisation. La figure 6a est une vue de face agrandie de l'un deux.Seules les différences par rapport au deuxième mode de réalisation 200 sont décrites. L'ensemble vitré lumineux 600 diffère comme suit de l'ensemble vitré 200.

Chaque ensemble vitré 100' comporte cinq premières surfaces d'extractions 50a à 50e sous forme de bandes horizontales rectangulaires de largeur (hauteur) croissante en direction du sol. La quatrième première surface d'extraction (en partant du haut) comporte un ensemble de caractères sous forme de LOGO avec son masquage opaque ou réfléchissant congruent (non visible), LOGO entouré de premiers motifs diffusants discrets 5 analogues à ceux déjà décrits avec son masquage opaque ou réfléchissant congruent (non visible). Les autres premières surfaces d'extraction comportent uniquement des premiers motifs diffusants discrets 5 (voir figure 6a) analogues à ceux déjà décrits. Les deuxièmes surfaces d'extraction (non visibles) avec leurs deuxièmes moyens de masquage opaques ou réfléchissants sont congruents aux premières surfaces d'extraction. Entre les bandes d'extractions 50a à 50e et sur la partie haute et basse il y a des zones de transparence 17.

Chaque ensemble vitré 100' comporte un cadre de montage 7a,7b,7c,7d par exemple métallique ou plastique (PVC etc) ou même bois -(monolithique ou en plusieurs pièces)- par exemple de section en U. Dans le volume intérieur du profilé de montage vertical 7a côté première tranche, on place, pour le premier vitrage, autant d'ensembles de diodes 4a d'au moins deux couleurs distinctes, par exemples rouge ou verte et même bleu ou blanc ou ambre que de surfaces d'extraction, sur un premier support PCB 41a commun (ou individuel). On fait de même pour le deuxième vitrage.

La longueur de chaque bande d'extraction est supérieure à 450mm, on préfère donc, dans le volume intérieur du profilé de montage vertical 7b côté tranche opposée à la première tranche, placer, pour le premier vitrage, autant d'ensembles supplémentaires de diodes 4b d'au moins deux couleurs distinctes, par exemples rouge ou verte et même bleu ou blanc ou ambre que de surfaces d'extraction, sur un autre support PCB 41b commun (ou individuel). Les ensembles supplémentaires sont identiques aux ensembles côté première tranche. On fait de même pour le deuxième vitrage.

Chaque ensemble vitré 100' est monté sur des rails et coulisse pour laisser le passage. L'ouverture peut être conditionné à l'usage d'un ticket, d'un moyen d'identification etc.

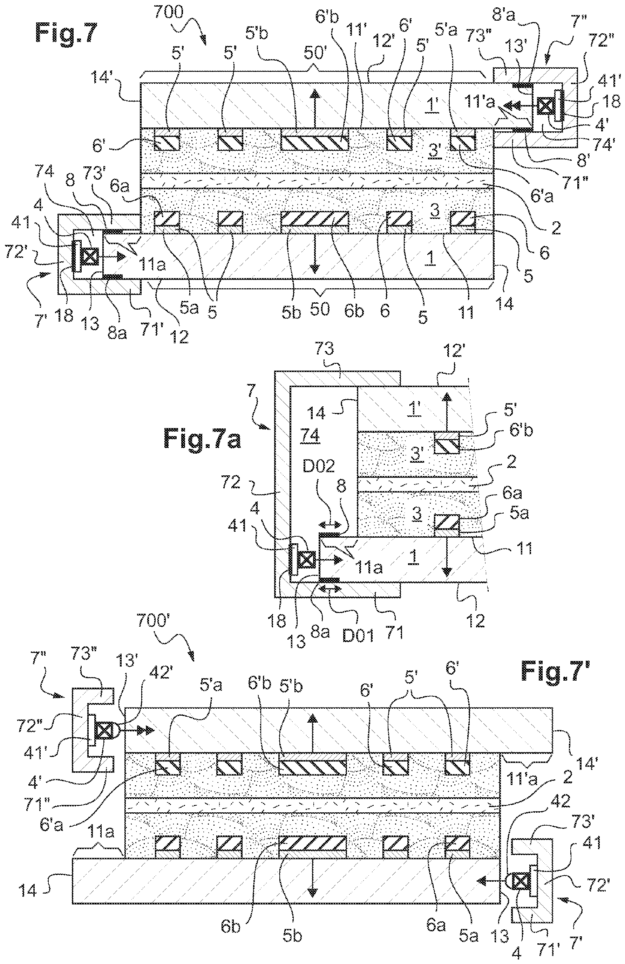

La figure 7 montre une vue partielle en coupe d'un ensemble vitré lumineux 700 dans un septième mode de réalisation.

Seules les différences par rapport au troisième mode 300a sont décrites. L'ensemble vitré lumineux 700 diffère comme suit de l'ensemble vitré 300a.

La deuxième source de lumière 4' est du côté opposé de l'ensemble vitré par rapport à la première source de lumière 4. La deuxième tranche 13' est donc du côté opposé de l'ensemble vitré par rapport à la première tranche 13. De même la deuxième bande anti mélange 8' (par exemple ruban adhésif noir double face) est du côté opposé de l'ensemble vitré par rapport à la première bande anti mélange 8 (par exemple ruban adhésif noir double face). Les premier et deuxième vitrages restent de taille identique mais sont décalés latéralement.

Un profilé de fixation 7' du PCB 41 avec des diodes 4 au premier vitrage 1 est de section en U (ou en L) et est rapporté sur le premier vitrage (sur la zone dépassante 12a de la face interne 11a due au décalage des vitrages). Un autre profilé de fixation 7" du PCB 41' avec des diodes 4' au deuxième vitrage est de section en U (ou en L) et est rapporté sur le deuxième vitrage (sur la zone dépassante 11'a de la face de collage 11 due au décalage des vitrages).

Les bandes antimélanges 8 et 8' sont dans les zones dépassantes 11a, 11'a. On conserve de préférence une autre première bande anti mélange 8a sur la face externe 12 et une autre deuxième bande anti mélange 8'a sur la face extérieure 12'.Elles sont dans les zones dépassantes 11a, 11'a.

Si le profilé de fixation 7 n'est pas opaque on peut conserver les revêtements opaques sur les ailes 71', 73' dans le volume intérieur 74. Si le profilé de fixation 7' n'est pas opaque on peut conserver les revêtements opaques sur les ailes 71", 73" dans le volume intérieur 74'.

Un profilé de montage de l'ensemble vitré (non montré) par exemple renfermant les profilés de fixation 7, 7' peut être rapporté sur toute l'épaisseur de l'ensemble vitré, de chaque côté, former un cadre.

Dans une variante montrée en figure 7a (vue partielle), le profilé de montage 7 est métallique et de section en U avec une base 72 qui porte le premier support PCB collé par de la colle thermique 18 et des ailes 71, 72 sur les faces externe et extérieure 12, 12'. La première bande opaque 8 est par exemple un adhésif monoface et a une surface libre.

On fait de même côté deuxième tranche.

La figure 7' montre une vue partielle en coupe d'un ensemble vitré lumineux 700 dans une variante du septième mode de réalisation.

Seules les différences par rapport au septième mode 700 sont décrites. L'ensemble vitré lumineux 700' diffère comme suit de l'ensemble vitré 700.

Le profilé de fixation 7' ne forme pas une surépaisseur de l'ensemble vitré car il est en regard de la zone dépassante 11'a du deuxième vitrage 1'. Il peut même être fixé par son aile 73 à cette zone dépassante (au-delà de la deuxième surface d'extraction 50'). L'autre profilé 7" ne forme pas non plus une surépaisseur de l'ensemble vitré car il est en regard de la zone dépassante 12a du premier vitrage 1'. Il peut même être fixé par son aile 73' à cette zone dépassante (au-delà de la première surface d'extraction 50).

On supprime les bandes antimélange. Les diodes comportent une lentille 42, 42' pour un diagramme d'émission étroit ou alternativement on utilise une couche bas indice (avec un revêtement de protection) comme isolateur optique avec n2 de moins de 1,2.

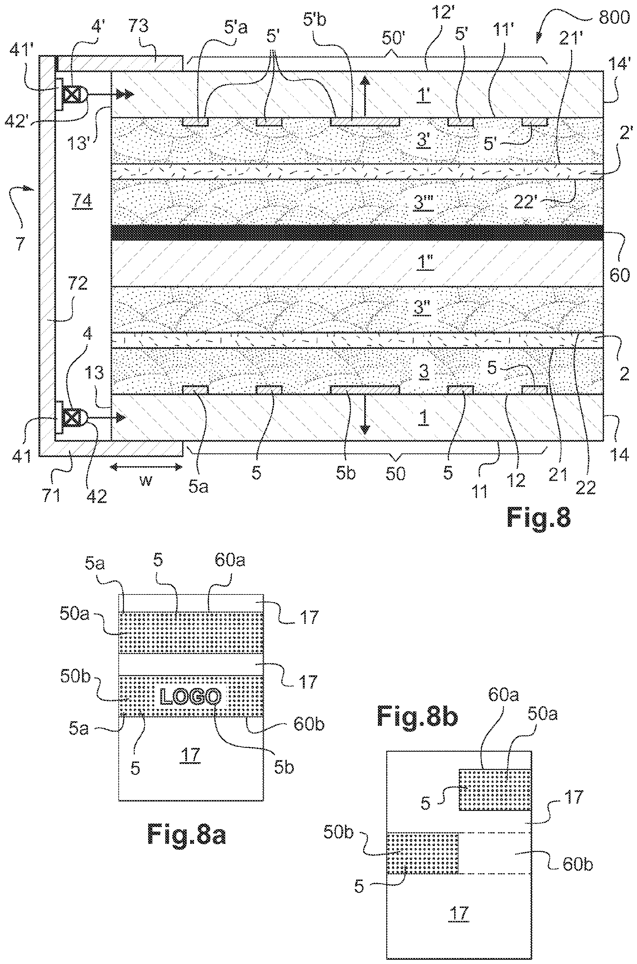

La figure 8 montre une vue partielle en coupe d'un ensemble vitré lumineux 800 à double zone lumineuse à sens unique (décor et/ou signalisation) dans un mode de réalisation de l'invention comportant :
- un premier vitrage 1, ici de forme rectangulaire (par exemple longueur de 1m suivant la verticale, largeur par exemple de 250mm), plan ou en variante bombé (trempé), en verre silicosodocalcique clair ou extraclair trempé, (par exemple de 6mm environ notamment le verre dénommé Planilux de la Demanderesse, trempé), d'indice de réfraction n1 d'environ 1,5 à 550nm, de T_{L} d'au moins 90%, avec une première face principale 11 dite face interne, une deuxième face principale 12 dite face externe, une première tranche 13 qui est verticale en position monté et sa tranche opposée 14 (ici chant formé de quatre tranches ; la première tranche étant longitudinale),
- une première source de lumière 4, ici un ensemble de diodes électroluminescentes 4 rouges et vertes alignées sur une carte de circuit imprimé dit premier support PCB 41, source couplée optiquement à la première tranche 13, le premier vitrage 1 guidant la lumière émise par les diodes de préférence espacées ici d'au plus 1mm de la première tranche 13, de préférence centrée sur la première tranche et de largeur inférieure à l'épaisseur du premier vitrage 1, par exemple chaque diode de largeur W0 de 4mm,
- une première surface d'extraction 50 délimitée par (les contours) des premiers moyens d'extraction de lumière 5, 5a, 5b associés au premier vitrage ici directement sur la face interne 12, qui sont une première couche diffusante discontinue blanche en présentant une clarté L* d'au moins 50, qui est ici un émail blanc diffusant contenant des pigments minéraux blancs et de la fritte de verre fondue, sous forme de premiers motifs diffusants de taille variable, dont un réseau de motifs discrets 5a, 5, des motif(s) décoratif(s) 5b et/ou en variante un ensemble de caractères (LOGO etc).

Le premier motif diffusant 5a est distant de W de la première tranche 13. Le motif le plus large 5b est un motif décoratif par exemple géométrique de largeur 3cm. Les motifs discrets sont par exemple géométriques, comme des disques

Pour une première surface d'extraction de longueur de 256mm (suivant l'horizontale), les motifs discrets sont par exemple des disques de diamètre 1mm, espacés de 4mm. Le motif décoratif est espacé (entouré) de 7mm des disques.

Dans un premier exemple de fabrication, on applique par sérigraphie sur la face interne 11 (ou en variante externe) une première composition d'émail, diffusante, liquide de manière discontinue pour former la trame des premiers motifs diffusants 5, 5a,5b comportant fritte de verre, pigment minéral blanc et médium organique et on sèche.

Plus précisément, la première composition d'émail renfermant une fritte de verre et des pigments de TiO₂ (commercialisée sous la référence 194100 par la société FERRO) et un médium organique (commercialisé sous la référence 801022 par la société Prince Minerais) en une quantité permettant d'obtenir une viscosité de 200 Poises (mesurée dans les conditions précitées).

L'épaisseur (humide) moyenne de la première couche déposée est égale à 35µm.

Côté verre (face externe) la couleur blanche est définie par L=63,08, a=-1,92 , b=0,69 (après cuisson).

Côté masquage (face interne) la couleur blanche est définie par :L= 82,35 , a=-1,24 ,b=-0,46 (après cuisson).

La densité optique de l'émail diffusant blanc est de 0.9 (côté verre), après cuisson.

L'écran de sérigraphie pour la première couche est constitué d'un tissu de fils de polyester de 80µm de diamètre comprenant 43fils/cm qui permet notamment de former la pluralité de motifs discrets sous forme de disques de 1mm de diamètre espacés de 4 mm, un motif décoratif de largeur 2cm comme un disque, un symbole.

Après le dépôt, le premier vitrage ainsi revêtu est introduit dans un dispositif de séchage équipé de lampes infrarouges opérant à une température de l'ordre de 145 à 155°C afin d'éliminer le médium organique et de consolider la couche. Le premier vitrage revêtu est ensuite chauffé à une température de 655°C dans un four afin que la fritte de verre fonde et forme l'émail.

En variante, l'émail 5 présente par exemple la composition suivante :
- entre 20 et 60 % en poids de SiO₂,
- 10 à 45 % en poids de pigments réfractaires, incluant le Ti0₂, notamment de taille micronique
- pas plus de 20 % en poids d'alumine et/ou d'oxyde de zinc.

Des exemples de composition d'émail peuvent être l'émail sous la dénomination Ferro 194011 commercialisé par l'entreprise FERRO, la référence AF5000 commercialisé par la société JM, la référence VV30-244-1 commercialisé par Pemco.

En autre variante on peut choisir une peinture blanche. On peut citer par exemple la peinture extrablanc du produit Planilaque Evolution, de la société Demanderesse avec comme pigment majoritaire du TiO2. L'épaisseur est typiquement entre 40 et 60µm.

Une formulation de peinture peut être déposée selon le procédé du rideau. Le solvant est du xylène ou en variante aqueux. La laque après séchage comprend par exemple les ingrédients suivants :
- un liant sous forme de résine polyuréthane obtenue par réticulation, par un isocyanate non aromatique, de résines acryliques hydroxylées issues de la polymérisation d'un styrène acrylique
- des matières minérales (pigments et charges) à hauteur de 55% en masse.

La face interne 11 et les premiers motifs diffusants 5,5a,5b sont (directement)couverts par :
- un premier intercalaire de feuilletage 3 en matière thermoplastique ici de l'EVA submillimétrique, en un feuillet de 0,38mm, transparent même clair, présentant (seul) un flou d'au plus 1,5%,et même 1% et d'indice de réfraction n3 tel que n3-n1, en valeur absolue, est inférieur à 0,05 (ici n3 égal à 1,49 environ dans le spectre visible)
- un film bas indice 2, en fluopolymère, formant premier isolateur optique, de préférence ETFE ou FEP et d'épaisseur 50µm ayant des première et deuxième faces principales traitées par traitement corona, de flou entre 1,5 et 2%, tel le produit dénommé Norton ETFE de la société Saint Gobain Performance Plastics de flou entre 1,5 et 2% d'indice n2 égal à 1,4 ou Norton FEP de la société Saint Gobain Performance Plastics de flou entre 1,5 et 2% d'indice n2 égal à 1,34 environ, film en contact adhésif avec le premier intercalaire de feuilletage 3,
- un intercalaire central de feuilletage 3" en matière thermoplastique de préférence EVA identique (nature, épaisseur, un feuillet) au premier intercalaire de feuilletage 3, mais éventuellement teinté, en contact adhésif avec le film bas indice 2,
- un support central 1", transparent qui est ici un vitrage en verre minéral (ou un film plastique, comme un PET), identique au premier vitrage (pouvant être plus mince), mais éventuellement teinté, revêtu en pleine face par des premiers moyens de masquage opaques 60 qui sont un premier revêtement opaque ici en émail noir, gris ou coloré (rouge, vert ou autre couleur suffisamment absorbante), émail contenant des pigments minéraux et de la fritte de verre fondue, couche opaque ici côté face de collage 11' mais en variante côté face interne 11,
- un autre intercalaire central de feuilletage 3'" en matière thermoplastique de préférence EVA identique (nature, épaisseur, un feuillet) au premier intercalaire de feuilletage 3, mais éventuellement teinté, en contact adhésif avec le revêtement opaque 30,
- un deuxième film bas indice 2', en fluopolymère, formant deuxième isolateur optique, de préférence ETFE ou FEP et d'épaisseur 50µm ayant des première et deuxième faces principales traitées par traitement corona, de flou entre 1,5 et 2%, tel le produit dénommé Norton ETFE de la société Saint Gobain Performance Plastics de flou entre 1,5 et 2% d'indice de réfraction n2 égal à 1,4 ou Norton FEP de la société Saint Gobain Performance Plastics de flou entre 1,5 et 2% d'indice de réfraction n2 égal à 1,34 environ, film en contact adhésif avec l'autre intercalaire de feuilletage 3"', de préférence identique au premier isolateur optique 2,
- un deuxième intercalaire de feuilletage 3" en matière thermoplastique de préférence EVA transparent, clair, identique (nature, épaisseur, un feuillet) au premier intercalaire de feuilletage, en contact adhésif le deuxième film bas indice 2', et d'indice de réfraction n'3
- un deuxième vitrage 1', en verre minéral, identique au premier vitrage congruent (ou en variante décalé), avec une face principale de collage 11' coté deuxième intercalaire de feuilletage 3', une face opposée dite extérieure 12',une deuxième tranche 13' et sa tranche opposée 14', d'indice de réfraction n'1 d'environ 1,5 à 550nm, de T_{L} d'au moins 90%, (avec n'3 tel que n'3-n'1, en valeur absolue, est inférieur à 0,05 dans le spectre visible (ici n'3 égal à 1,49 environ).

L'ensemble vitré 800 comporte en outre :
- une deuxième source de lumière 4', ici un ensemble de diodes électroluminescentes rouges et vertes alignées sur une carte de circuit imprimé dit deuxième support PCB 41', source couplée optiquement à la deuxième tranche 13', le deuxième vitrage 1' guidant la lumière émise par ces diodes 4' de préférence espacées ici d'au plus 1mm de la deuxième tranche, de préférence centrée sur la deuxième tranche et de largeur inférieure à l'épaisseur du deuxième vitrage 1',1', par exemple diode de largeur W'0 de 4mm,
- par exemple ici en congruence avec la première surface d'extraction 50 (même taille, même forme ou contours), une deuxième surface d'extraction 50' délimitée (par ses contours) par des deuxièmes moyens d'extraction de lumière 5',5'a,5'b associés au deuxième vitrage, ici directement sur la face de collage 12', qui sont une deuxième couche diffusante discontinue blanche en présentant une clarté L* d'au moins 50, de préférence un émail blanc diffusant avec des pigments minéraux blancs et de la fritte de verre fondue, ici de nature et même épaisseur (sensiblement) identique à la première couche diffusante 5, sous forme de deuxièmes motifs diffusants de taille variable, choisis parmi un réseau de motifs discrets 5',5'a et/ou un ensemble de caractères/ et/ou motif(s) décoratif(s) 5'b, par exemple congruents avec premiers motifs diffusants 5,5a,5b.

En variante, si le revêtement de masquage opaque (émail peinture encre etc) est rouge, à base de rouge ou d'une autre couleur absorbant le vert (ou d'épaisseur suffisante pour l'absorber) alors on rajoute un deuxième revêtement de masquage opaque d'une couleur au moins absorbant le rouge par exemple bleu, jaune voire vert par exemple sur la face côté face interne 11 du verre central 1".

La fabrication du deuxième vitrage 1 revêtu d'une couche d'émail diffusant blanc 5 est identique à celle décrite pour le premier vitrage.

La première surface d'extraction 50, (et la deuxième surface d'extraction 50' ici congruente) peut s'étendre sur toute la longueur et couvrant sensiblement le premier vitrage (aux marges près), tout comme pour le revêtement opaque 60.

Comme montré en variante en figure 8a, il peut y avoir plusieurs premières surfaces d'extraction en bandes 50a, 50b par exemple deux bandes horizontales- l'une en motifs discrets 5, 5a l'autre en motifs discrets entourant un LOGO 5b- espacés par une zone transparente 17 et espacés des tranches latérales par une zone transparente 17.

Il y a alors deux zones de revêtement opaque 60a, 60b espacées chacune couvrant une bande d'extraction.

Comme montré en variante en figure 8b, il peut y avoir plusieurs premières surfaces d'extraction en bandes 50a, 50b par exemple deux bandes horizontales- l'une en motifs discrets 5 moins large que le premier le vitrage par exemple décentré vers la droite- l'autre en motifs discrets 5 moins large que le premier le vitrage par exemple décentré vers la gauche-- espacés par une zone transparente 17 et espacés des tranches latérales par une zone transparente 17.

Il y a alors deux zones de revêtement opaque 60a, 60b espacées, la première couvrant la première bande d'extraction, la deuxième couvrant la deuxième bande d'extraction et s'étendant sur la largeur du vitrage par exemple pour éviter une découpe ou une marche dans l'ensemble feuilleté.

La première source de lumière 4 est donc pilotée en dynamique pour émettre à l'instant t0 via une première série de diodes 4 un premier rayonnement principal à une première longueur d'onde dite λ1 et à l'instant t'≠t0 via une deuxième série de diodes 4 un deuxième rayonnement principal à une deuxième longueur d'onde dite λ2 distincte de λ1.

La deuxième source de lumière 4' est donc pilotée en dynamique pour émettre à l'instant t0 via une troisième série de diodes 4' un troisième rayonnement principal à une troisième longueur d'onde dite λ3 et à l'instant t'≠t0 via une quatrième série de diodes 4' un quatrième rayonnement principal à une quatrième longueur d'onde dite λ4 distincte de λ1.

A t0 :
- la première source émet dans le vert avec λ1 dans une gamme allant de 515nm à 535nm et de largeur spectrale à mi-hauteur de moins de 50nm (et la lumière extraite C1 est verte définie par un premier rayonnement extrait principal à λ1' sensiblement égal à λ1, distinct d'au plus 10nm ou 5nm et avec une largeur spectrale à mi-hauteur de moins de 30nm),
- la deuxième source émet dans le rouge avec λ3 dans une gamme allant de 615nm à 635nm et de largeur spectrale à mi-hauteur de moins de 30nm (et la lumière extraite C3 est rouge définie par un troisième rayonnement extrait principal à λ3' sensiblement égal à λ3, distinct d'au plus 10nm ou 5nm et avec une largeur spectrale à mi-hauteur de moins de 30nm) ou encore du blanc.

A t' :
- la première source émet dans le rouge avec λ2 dans une gamme allant de 615nm à 635nm et de largeur spectrale à mi-hauteur de moins de 30nm (et la lumière extraite C2 est rouge définie par un deuxième rayonnement extrait principal à λ1' sensiblement égal à λ1, distinct d'au plus 10nm ou 5nm et avec une largeur spectrale à mi-hauteur de moins de 30nm)
- et la deuxième source émet dans le vert avec λ4 dans une gamme allant de 515nm à 535nm et de largeur spectrale à mi-hauteur de moins de 50nm (et la lumière extraite C4 est verte définie par un quatrième rayonnement extrait principal à λ4' sensiblement égal à λ4, distinct d'au plus 10nm ou 5nm et avec une largeur spectrale à mi-hauteur de moins de 30nm).

Alternativement, la première source continue d'émettre dans le rouge avec λ4 dans une gamme allant de 615 nm à 635nm et de largeur spectrale à mi-hauteur de moins de 30nm (et la lumière extraite C4 est rouge définie par un quatrième rayonnement extrait principal à λ4' sensiblement égal à λ1, par exemple distinct d'au plus 10nm ou 5nm et de préférence avec une largeur spectrale à mi-hauteur de moins de 30nm).

Une autre configuration est que par exemple à t3 chaque source 4, 4' émette dans le vert ou dans le blanc. Il est aussi possible qu'une des sources soit éteinte (donc configurations suivantes : rouge et état off ; vert et état off ; blanc et état off).

Pour prévenir le mélange des couleurs vertes et rouges, surtout si le revêtement opaque 60 est absent (par exemple en retrait) en périphérie des première et deuxième tranches, chaque diode 4 de la première source 4 comporte éventuellement une optique de collimation 42 qui assure un diagramme d'émission étroit. Chaque diode 4 de la première source de lumière 4 est espacée de la première tranche par de l'air (même d'au plus 2mm) et au moins 80% (mieux au moins 90% et même au moins 95%) du flux lumineux émis par chaque diode est dans un cône d'émission entre -a1 et α1 avec α1 = Arsin(n1 * sin (α2)) où α2=π/2-Arsin (n2/n1) et correspond à l'angle de réfraction dans le premier vitrage comme montré en vue de détail.

Pour n2=1,4 (indice de l'ETFE) et n1=1,5 dans le spectre du visible α2 est de 21° et α1 de 33°. Pour n2=1,35 (indice du FEP) et n1=1,5 dans le spectre du visible α2 est de 26° et α1 de 41°.

Pour prévenir le mélange des couleurs vertes et rouges, surtout si le revêtement opaque 60 est absent (en retrait) en périphérie des première et deuxième tranches, chaque diode de la deuxième source 4' comporte éventuellement une optique de collimation 42' qui assure un diagramme d'émission étroit. Chaque diode de la deuxième source de lumière 4' est espacée de la deuxième tranche par de l'air d'1mm environ et au moins 80% (mieux au moins 90% et même au moins 95%) du flux lumineux émis par chaque diode est dans un cône d'émission entre -α'1 et α'1 avec α'1 = Arsin(n1 * sin (α'2)) où α'2=π/2-Arsin (n2/n'1) et correspond à l'angle de réfraction dans le deuxième vitrage,.

Comme diodes, on peut choisir les diodes ALMD de la société Avago de 4 mm de largeur avec 100% du flux lumineux émis par chaque diode dans un cône d'émission entre -30 et 30°. En particulier, les diodes rouges dénommées ALMD-EG3D-VX002 à base d'AllnGaP de longueur d'onde dominante à 626nm et de largeur spectrale entre 618nm et 630nm.

En particulier les diodes vertes dénommées ALMD-CM3D-XZ002 à base d'InGaN de longueur d'onde dominante à 525nm et de largeur spectrale entre 519nm et 539nm.

Chaque support PCB est en barrette, rectangulaire ne dépassant pas de la tranche de l'ensemble vitré et comprend en alternance LED rouge et verte. L'espacement max entre les diodes de même couleur est choisi d'au plus 20mm.

Les diodes de la première source (respectivement de la deuxième source) ont chacune une direction principale d'émission donnée sensiblement parallèle à la première tranche (respectivement à la deuxième tranche) par exemple de moins de 5°. Le diagramme d'émission est de type gaussien.

En variante, on choisit des diodes classiques et on cloisonne ces diodes par exemple par un profilé de montage en E (ou un profilé de fixation en E ou deux profilés en L).

La Luminance à la normale d'un motif 5a côté face externe ou face extérieure avec lumière verte ou rouge est d'environ 100 cd/m² (+/- 10 cd/m²). La luminance à la normale est uniforme à (+/- 10 cd/m²).

Le circuit électrique de chaque diode « verte » émettant dans le vert est ajusté pour que le flux F1 émis par cette diode « verte » soit inférieur à 0,8 fois le flux F2 émis par une diode « rouge » émettant dans le rouge.

Dans ce cas, on peut préférer que les premiers (resp. deuxièmes) moyens d'extraction soient une peinture blanche et même sur la face externe (resp. extérieure). On peut citer par exemple la peinture extrablanc du produit Planilaque Evolution, de la société Demanderesse avec comme pigment majoritaire du TiO2. L'épaisseur est typiquement entre 40 et 60µm.

Une formulation de peinture peut être déposée selon le procédé du rideau. Le solvant est du xylène ou en variante aqueux. La laque après séchage comprend par exemple les ingrédients suivants :
- un liant sous forme de résine polyuréthane obtenue par réticulation, par un isocyanate non aromatique, de résines acryliques hydroxylées issues de la polymérisation d'un styrène acrylique
- des matières minérales (pigments et charges) à hauteur de 55% en masse.

Les premier et deuxième supports PCB 41,41' sont dans le volume intérieur 74 d'un profilé de montage 7 de section en U, de préférence métallique (aluminium, acier - laqué -) ou en variante plastique (PVC etc) ou encore bois comportant :
- une base 72 en regard de la tranche de l'ensemble vitré 200 (incluant la première et deuxième tranche 13,13'; les tranches du film bas indice et des premier et deuxième intercalaire de feuilletage 3,3'), base métallique portant ici les premier et deuxième supports PCB 41,41' et servant par exemple de dissipateur thermique,
- de part et d'autre de la base 72 des première et deuxièmes ailes 71,73 respectivement s'étendant sur face externe 12 et face extérieure 12' sur une largeur W de 3cm, sans être en contact optique pour ne pas perturber le guidage.

La face 12' est une surface libre du vitrage lumineux, est visible voire même accessible (au toucher). L'ensemble vitré pourrait être assemblé dans un vitrage isolant ou sous vide si nécessaire

Les première et deuxième tranches 13,13' sont droites, polies. Les tranches opposées 14, 14' sont droites, polies ou même diffusantes.

On peut rajouter d'autres diodes sur la tranche opposée (non montrée ici) notamment dans le cas d'un vitrage avec une large première surface d'extraction et/ou avec plusieurs motifs centimétriques espacés.

On peut placer un joint polymérique sur cette tranche opposée par exemple pour plus de confort si les vantaux se rabbattent trop vite sur le piéton.

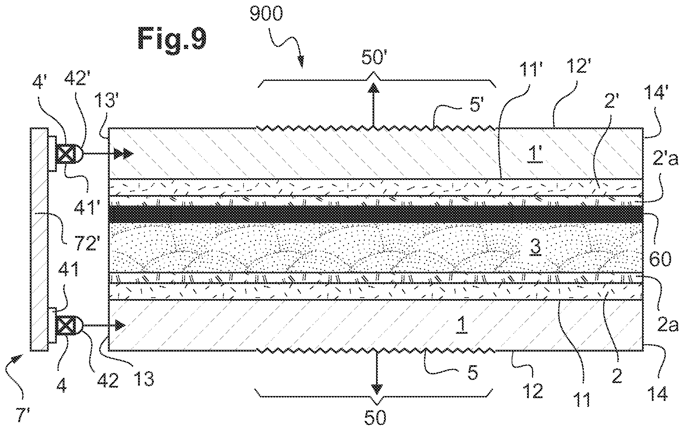

La figure 9 montre une vue partielle en coupe d'un ensemble vitré lumineux 900 à double zone lumineuse à sens unique dans une variante du dernier mode de réalisation.

Seules les différences par rapport au dernier mode 800 sont décrites. L'ensemble vitré lumineux 900 diffère comme suit de l'ensemble vitré 800.

Les premiers et deuxièmes intercalaires de feuilletage sont supprimés ainsi que le verre central et l'autre intercalaire central de feuilletage.

Le premier isolateur optique n'est plus un film fluoropolymère mais une première couche de silice poreuse sol-gel 2 d'épaisseur de 600nm mieux 800nm avec de préférence son premier revêtement de protection en couche de silice sol gel dense 2a d'épaisseur 300nm ou même plus, avec un indice de réfraction n4 d'au moins 1,4 à 550nm. La première couche de silice poreuse sol-gel 2 est sur la face interne 11 et les premiers moyens d'extraction de lumière 5 sont sur la face externe 12 et par exemple sous forme de dépoli (en motifs décoratifs, en motif plein, évidé ..) sur une première surface d'extraction 50 par exemple centrale.

Le deuxième isolateur optique 2' n'est plus un film fluoropolymère mais une deuxième couche de silice poreuse sol-gel 2' d'épaisseur de 600nm mieux 800nm avec de préférence son deuxième revêtement de protection en couche de silice sol gel dense 2'a d'épaisseur 300nm ou même plus, avec un indice de réfraction n'4 d'au moins 1,4 à 550nm. La deuxième couche de silice poreuse sol-gel 2' est sur la face de collage et les deuxièmes moyens d'extraction 5' de lumière sont sur la face extérieure 12' et par exemple sous forme de dépoli (en motifs décoratifs, en motif plein, évidé ..) sur une deuxième surface d'extraction 50' par exemple centrale et congruente à la première surface d'extraction 50.

n2 (n'2) varie en fonction de la fraction volumique de pores et peut aller de 1,4 à 1,15 aisément. La fraction volumique de pores est de préférence supérieure à 50% et même à 65% et de préférence inférieure à 85% pour une grande tenue de la couche.

Chaque couche de silice poreuse 2, 2' est une matrice de silice avec des pores fermés (de préférence délimités par les parois de la silice) en volume.

La porosité peut être en outre monodisperse en taille, la taille des pores étant alors calibrée. 80% ou même plus des pores sont fermés de forme sphériques (ou ovales) présentent un diamètre entre 75nm et 100nm.

Un exemple de fabrication de la couche de silice poreuse est décrit dans le WO2008/059170. De préférence, la cuisson à haute température est après le dépôt liquide de la couche de silice dense sur la couche de silice poreuse séchée.

Le revêtement opaque 60 est ici une impression sur l'intercalaire de feuilletage central de préférence un PVB qui peut être teinté (si on ne souhaite pas d'une ou de zones de transparence, incolores en limitant l'étendue de 60).

Naturellement l'ensemble vitré tel que décrit dans les différents modes de réalisation précité peut fonctionner aussi en mode statique c'est-à-dire proposer uniquement la combinaison C1 et C3 (ou C1 et état off, ou C3 et état off). Dans ce cas, la première source de lumière peut même ne contenir que des premières diodes à λ1 et la deuxième source de lumière ne contenir que des troisièmes diodes à λ3. L'ensemble vitré peut aussi convenir comme cloison lumineuse (dans une pièce , entre bureaux, dalle de sol ou encore de fenêtre.

## Revendications

1. Ensemble vitré lumineux (100,100', 200, 300a à 300'e, 400, 500, 600, 700, 700') comportant :
- un premier vitrage (1) d'indice de réfraction n1, avec des faces principales (12), appelées face interne (11) et face externe (12), et une première tranche (13),
- une première source de lumière (4), couplée optiquement au premier vitrage par la première tranche, premier vitrage guidant ainsi la lumière émise par la première source, première source de lumière pilotée, en statique ou dynamique, pour émettre à l'instant t0 un premier rayonnement principal à une première longueur d'onde dite λ1 et de préférence commutable pour émettre à l'instant t'≠t0 un deuxième rayonnement principal à une deuxième longueur d'onde dite λ2 distincte de λ1,
- des premiers moyens d'extraction de lumière (5), associés au premier vitrage, comportant un ou une pluralité de premiers motifs d'extraction délimitant une première surface d'extraction (50), la lumière extraite étant visible côté face externe, premiers moyens d'extraction tels que la lumière extraite audit t0 est d'une première couleur dite C1 et de préférence audit t' est d'une deuxième couleur dite C2 distincte de C1,
- des premiers moyens de masquage (6) de la lumière extraite côté face interne, agencés côté face interne et couvrant partiellement la face interne, choisis parmi l'un au moins des moyens suivants :
- moyens opaques en congruence avec les premiers moyens d'extraction, plus éloignés que les premiers moyens d'extraction de la face interne et de préférence sur les premiers moyens d'extraction,
- moyens réfléchissants en regard des premiers moyens d'extraction, et de préférence qui sont sur les premiers moyens d'extraction et plus éloignés du premier vitrage que les premiers moyens d'extraction,
- en contact optique avec le premier vitrage, un deuxième vitrage (1'), d'indice de réfraction n'1, avec des faces principales appelées face de collage (11') et face extérieure (12'), la face de collage étant en regard de la face interne, et une tranche (13'), dite deuxième tranche,
- une deuxième source de lumière (4'), couplée optiquement au deuxième vitrage, par la deuxième tranche, deuxième vitrage guidant ainsi la lumière émise par la deuxième source de lumière, deuxième source de lumière pilotée en statique ou dynamique, pour émettre audit t0 un troisième rayonnement principal à une longueur d'onde dite λ3 distincte de λ1 et de préférence sensiblement égale à λ2 et de préférence, pour émettre audit instant t' un quatrième rayonnement principal à une longueur d'onde dite λ4, de préférence distincte de λ3,
- des deuxièmes moyens d'extraction de lumière (5') associés au deuxième vitrage, comportant un ou une pluralité de deuxièmes motifs d'extraction délimitant une deuxième surface d'extraction (50'), la lumière ainsi extraite étant visible côté face extérieure, deuxièmes moyens d'extraction de lumière tels que la lumière ainsi extraite à t0 est d'une couleur dite C3 distincte de C1, et de préférence audit t' est d'une couleur dite C4 distincte de C2,
- des deuxièmes moyens de masquage (6') de la lumière extraite côté face de collage, agencés côté face de collage, couvrant partiellement la face de collage, choisis parmi l'un au moins des moyens suivants :
- moyens opaques en congruence avec les deuxièmes moyens d'extraction, plus éloignés que les deuxièmes moyens d'extraction de la face de collage et de préférence sur les deuxièmes moyens d'extraction,
- moyens réfléchissants en regard des deuxièmes moyens d'extraction, et de préférence qui sont sur les deuxièmes moyens d'extraction et sont plus éloignés du deuxième vitrage que les premiers moyens d'extraction,
- entre les premiers moyens de masquage et les deuxièmes moyens d'extraction, un isolateur optique (2), dit premier isolateur optique, transparent, d'indice de réfraction n2 tel que, aux longueurs d'onde de la première source de lumière, n1-n2 est d'au moins 0,08, qui est en regard de la face interne : entre la première tranche et la première surface d'extraction et/ou entre les premiers motifs d'extraction, de préférence couvrant la première surface d'extraction,
le premier isolateur optique est feuilleté au premier vitrage au moyen d'un premier intercalaire de feuilletage (3), en première matière polymérique transparente, qui est d'indice de réfraction n3 tel que n3-n1, en valeur absolue, est inférieur à 0,05 aux longueurs d'onde de la première source de lumière,
- entre les premiers moyens de masquage et les deuxièmes moyens d'extraction, un isolateur optique (2, 2'), dit deuxième isolateur optique, confondu avec le premier isolateur optique ou distinct et plus proche des deuxièmes moyens d'extraction, transparent, d'indice de réfraction n'2 tel que, aux longueurs d'onde de la deuxième source de lumière, n'1-n'2 est d'au moins 0,08, qui est en regard de la face de collage : entre la deuxième tranche et la deuxième surface d'extraction et/ou entre les deuxièmes motifs d'extraction, de préférence couvrant la deuxième surface d'extraction,
et en ce que le deuxième isolateur optique (2, 2') est feuilleté au deuxième vitrage au moyen d'un deuxième intercalaire de feuilletage (3'), en deuxième matière polymérique transparente, qui est d'indice de réfraction n'3 tel que n'3-n'1, en valeur absolue, est inférieur à 0,05 aux longueurs d'onde de la deuxième source de lumière.

2. Ensemble vitré lumineux (100,100', 200, 300a à 300'e, 400, 500, 600, 700, 700') selon la revendication précédente **caractérisé en ce que** les premiers moyens d'extraction (5) sont sur la face interne (11), les premiers moyens de masquage (6) comprennent une couche opaque, voire réfléchissante, en congruence et sur les premiers moyens d'extraction, et **en ce que** de préférence les deuxièmes moyens d'extraction (5') sont sur la face de collage (12), les deuxièmes moyens de masquage (6') comprennent une couche opaque, voire réfléchissante, en congruence et sur les deuxièmes moyens d'extraction.

3. Ensemble vitré lumineux (100,100', 200, 300a à 300'e, 400, 500, 600, 700, 700') selon l'une quelconque des revendications précédentes **caractérisé en ce que** les premiers moyens d'extraction (5) comprennent une couche diffusante d'émail sur la face interne, les premiers moyens de masquage (6) comprennent une couche opaque d'émail en congruence et sur la couche diffusante d'émail, les deuxièmes moyens d'extraction (5') comprennent une couche diffusante d'émail sur la face de collage (11'), les deuxièmes moyens de masquage (6') comprennent une couche opaque d'émail en congruence et sur la couche diffusante d'émail.

4. Ensemble vitré lumineux (400, 500, 900) selon l'une des revendications précédentes **caractérisé en ce que** le premier isolateur optique (2) comprend une première couche de silice poreuse d'épaisseur e2 d'au moins 400nm sur une face principale d'un troisième vitrage transparent (1"), en verre minéral, orientée côté face interne et de préférence le deuxième isolateur optique comprend une deuxième couche de silice poreuse d'épaisseur e'2 d'au moins 400nm sur une autre face principale du troisième vitrage orientée côté face de collage, d'indice de réfraction n'2 tel que, aux longueurs d'onde de la deuxième source de lumière (4') n'1-n'2 est d'au moins 0,08.

5. Ensemble vitré lumineux (800, 900) comportant :
- un premier vitrage (1), d'indice de réfraction n1, avec des faces principales (12), appelées face interne (11) et face externe (12), et une première tranche (13, 14),
- une première source de lumière (4), couplée optiquement au premier vitrage, par la première tranche, premier vitrage guidant ainsi la lumière émise par la première source, première source de lumière pilotée en statique ou en dynamique pour émettre à l'instant t0 un premier rayonnement principal à une première longueur d'onde dite λ1 et de préférence commutable pour émettre à l'instant t'≠t0 un deuxième rayonnement principal à une deuxième longueur d'onde dite λ2 distincte de λ1,
- des premiers moyens d'extraction de lumière (5) associés au premier vitrage, comportant un ou une pluralité de premiers motifs d'extraction délimitant une première surface d'extraction (50), la lumière extraite étant visible côté face externe, premiers moyens d'extraction tels que la lumière extraite audit t0 est d'une première couleur dite C1 ou de préférence audit t' est d'une deuxième couleur dite C2 distincte de C1,
- des premiers moyens de masquage de la lumière extraite côté face interne, (60), agencés côté face interne, au moins en regard des premiers moyens d'extraction, opaques ou réfléchissants, de préférence couvrant la première surface d'extraction (50) et même sensiblement la face interne,
- entre les premiers moyens d'extraction et les premiers moyens de masquage, un premier isolateur optique (2) transparent, d'indice de réfraction n2 tel que, aux longueurs d'onde de la première source de lumière (4) n1-n2 est d'au moins 0,08, qui est en regard de la face interne : entre la première tranche et la première surface d'extraction, et/ou entre les premiers motifs d'extraction, de préférence couvrant la première surface d'extraction,
- en contact optique avec le premier vitrage, un deuxième vitrage (1'), d'indice de réfraction n'1, avec des faces principales appelées face de collage (11') et face extérieure (12'), la face de collage étant en regard de la face interne, et une tranche (13'), dite deuxième tranche,
- une deuxième source de lumière (4'), couplée optiquement au deuxième vitrage, par la deuxième tranche, deuxième vitrage guidant ainsi la lumière émise par la deuxième source de lumière, deuxième source de lumière pilotée en statique ou dynamique pour émettre audit t0 un troisième rayonnement principal à une longueur d'onde dite λ3 distincte de λ1 et de préférence audit instant t' un quatrième rayonnement principal à une longueur d'onde dite λ4 distincte de λ3,
- des deuxièmes moyens d'extraction de lumière (5') associés au deuxième vitrage, comportant un ou une pluralité de deuxièmes motifs d'extraction et délimitant une deuxième surface d'extraction (50'), la lumière extraite du deuxième vitrage étant visible côté face extérieure, deuxièmes moyens d'extraction de lumière tels que la lumière extraite à t0 est d'une couleur dite C3 distincte de C1 et de préférence audit t' est d'une couleur dite C4 distincte de C3,
- des deuxièmes moyens de masquage de la lumière extraite côté face de collage (60), agencés côté face de collage, au moins en regard des deuxièmes moyens d'extraction, opaques ou réfléchissants, de préférence couvrant la deuxième surface d'extraction et même sensiblement la face de collage,
- entre les deuxièmes moyens d'extraction et les deuxièmes moyens de masquage, un deuxième isolateur optique (2') transparent, d'indice de réfraction n'2 tel que, aux longueurs d'onde de la deuxième source de lumière, n'1-n'2 est d'au moins 0,08 qui est en regard de la face de collage : entre la deuxième tranche et la deuxième surface d'extraction, et/ou entre les deuxièmes motifs d'extraction, de préférence couvrant la deuxième surface d'extraction
et en ce que
le premier isolateur optique a une première surface principale côté face interne et une deuxième surface principale côté face de collage, la première surface principale étant sur la face interne ou le premier isolateur optique étant feuilleté par la première surface principale au premier vitrage au moyen d'un premier intercalaire de feuilletage (3), en première matière polymérique transparente, qui est d'indice de réfraction n3 tel que n3-n1, en valeur absolue, est inférieur à 0,05 aux longueurs d'onde de la première source de lumière,
le deuxième isolateur optique a une troisième surface principale côté face de collage, la troisième surface principale étant sur la face de collage ou le deuxième isolateur optique étant feuilleté par ladite troisième surface principale au deuxième vitrage au moyen d'un deuxième intercalaire de feuilletage (3'), en deuxième matière polymérique transparente, qui est d'indice de réfraction n'3 tel que n'3-n'1, en valeur absolue, est inférieur à 0,05 aux longueurs d'onde de la deuxième source de lumière (4'),
et en ce que l'ensemble vitré comprend entre le premier isolateur optique et le deuxième isolateur optique, un intercalaire de feuilletage dit central (3"), en matière polymérique dite troisième matière.

6. Ensemble vitré lumineux (800, 900) selon la revendication 5 **caractérisé en ce que** les premiers et deuxièmes moyens de masquage (60) sont confondus lorsque les deuxièmes moyens d'extraction (5') sont en congruence avec les premiers moyens d'extraction (5) et/ou lorsque les premiers moyens de masquage (60) couvrent sensiblement la face interne et la face de collage.

7. Ensemble vitré lumineux (800, 900) selon l'une des revendications 5 ou 6 **caractérisé en ce que** les premiers moyens de masquage (60) comprennent un revêtement opaque, comme une encre, une peinture ou un émail, notamment sur l'intercalaire central de feuilletage ou sur un support additionnel notamment plastique ou verre minéral.

8. Ensemble vitré lumineux (100, 100', 200, 300a à 300'e, 400, 500, 600, 700, 700', 800, 900) selon l'une quelconque des revendications précédentes **caractérisé en ce que** :
- à t0 la première source de lumière (4) émet dans le vert avec λ1 dans une gamme allant de 515 à 535nm, la deuxième source de lumière (4') émet dans le rouge avec λ3 dans une gamme allant de 615nm et 635nm
- de préférence à t' la première source de lumière émet dans le rouge avec λ2 dans une gamme allant de 615nm et 635nm et de préférence la deuxième source de lumière émet dans le vert avec λ4 dans une gamme allant de 515 à 535 nm.

9. Ensemble vitré lumineux (200, 300a à 300'e, 400, 500, 600, 700, 700', 800, 900) selon l'une quelconque des revendications précédentes **caractérisé en ce que** à t0 la première source de lumière (4) comporte une première diode électroluminescente qui émet dans le vert avec λ1 dans une gamme allant de 515 à 535 nm, et à t' la première source de lumière comporte une deuxième diode électroluminescente qui émet dans le rouge avec λ2 dans une gamme allant de 615 nm et 635nm, le circuit électrique de la première diode est ajusté pour que le flux F1 émis par la première diode soit inférieur à 0,8 fois le flux F2 émis par la deuxième diode.

10. Ensemble vitré lumineux (100, 100', 200, 300a à 300d, 400, 500, 600, 700, 800) selon l'une quelconque des revendications précédentes **caractérisé en ce qu'**il comporte en périphérie de la première tranche un profilé (7), de préférence métallique, dépassant sur les faces extérieure et externe de préférence sur une distance W entre 1cm et 3 cm, renfermant ou porteur de la première source de lumière (4) et éventuellement de la deuxième source de lumière,.

11. Ensemble vitré lumineux (100, 100', 200, 600, 700', 800, 900) selon l'une quelconque des revendications précédentes **caractérisé en ce que** la première source de lumière (4) comprend une première diode électroluminescente (4) avec ledit premier rayonnement principal à λ1 et une deuxième diode électroluminescente avec ledit deuxième rayonnement principal à λ2, chacune des première et deuxième diodes est espacée de la première tranche (13) et au moins 80% du flux lumineux émis par chacune des première et deuxième diodes est dans un cône d'émission entre -α1 et α1 avec α1 = Arsin(n1 * sin (α2)) où α2=(π/2)-Arsin (n2/n1) et correspond à l'angle de réfraction dans le premier vitrage,
et **en ce que** la deuxième source de lumière (4') comprend une troisième diode électroluminescente avec ledit troisième rayonnement principal de λ3 et éventuellement une quatrième diode électroluminescente avec ledit quatrième rayonnement principal de λ4, la troisième diode, voire la quatrième diode éventuelle, est espacée de la deuxième tranche (13',14') et au moins 80% du flux lumineux émis par chacune de la troisième et éventuelle quatrième diodes est dans un cône d'émission entre -α'1 et α'1 avec α'1 = Arsin(n'1 * sin (α'2)) où α'2=(π/2)-Arsin (n'2/n'1) et correspond à l'angle de réfraction dans le deuxième vitrage.

12. Ensemble vitré lumineux (100, 100', 200, 300a à 300'e, 400, 500, 600, 700, 700') selon l'une quelconque des revendications précédentes **caractérisé en ce qu'**une première bande dite antimélange (8, 81, 82, 6a) est en contact optique avec la face interne, en périphérie de la face interne, s'étendant à partir de la première tranche, bande de largeur D0 au moins égale à 0,8 Dmin où Dmin= d1 / tan ((π/2)-arsin(n2/n1)) et de préférence inférieure à 2cm où d1 est la distance entre la première source de lumière et la face interne, première bande en matériau opaque décalée des premiers moyens de masquage et de la première surface d'extraction plus éloignés de la première tranche ou première bande formée par un motif des premiers moyens de masquages opaques, et **en ce que** de préférence une deuxième bande dite antimélange (8', 81', 82', 6'a) est en contact optique avec la face de collage, en périphérie de la face de collage, s'étendant à partir de la deuxième tranche, bande de largeur D'0 au moins égale à 0,8D'min avec D'min= d'1 / tan ((π/2)-arsin(n'2/n'1)) et de préférence inférieure à 2cm en matériau opaque où d'1 est la distance entre la deuxième source de lumière et la face de collage, deuxième bande en matériau opaque décalée des deuxièmes moyens de masquage et de la deuxième surface d'extraction plus éloignés de la deuxième tranche ou deuxième bande formée par un motif des deuxièmes moyens de masquage opaques.

13. Ensemble vitré lumineux (100,100', 200, 300a à 300'e, 400, 500, 600, 700, 700', 800, 900) selon l'une quelconque des revendications précédentes **caractérisé en ce que** l'ensemble vitré comporte une zone transparente (17) et **en ce que** de préférence les tranches en regard de la zone transparente sont dénuées de sources de lumière et/ou **en ce que** la première surface d'extraction (50) présente une transparence globale.

14. Ensemble vitré lumineux (100,100', 200, 300a à 300'e, 400, 500, 600, 700, 700', 800, 900) selon l'une quelconque des revendications précédentes **caractérisé en ce que** la première surface d'extraction comporte :
- un premier réseau de motifs diffusants ponctuels (5), motifs de largeur l1 d'au plus 1cm et espacés d'un pas p1 d'au plus 1cm, de préférence largeur et pas adaptés pour une transparence globale
- et/ou un premier motif diffusant décoratif (5c) de largeur l2 centimétrique et d'au plus 5cm de préférence entouré par le premier réseau de motifs diffusants ponctuels,
- et/ou un premier ensemble diffusant de caractères (5b) tel qu'un LOGO, chacun de largeur l3 et d'au plus 5cm espacés d'un pas p3 d'au plus 1cm, de préférence entouré par le premier réseau de motifs diffusants ponctuels,
et **en ce que** de préférence la deuxième surface d'extraction est en regard et même congruente avec la première surface d'extraction et comporte :
- un deuxième réseau de motifs diffusants ponctuels (5'), motifs de largeur l'₁ d'au plus 1cm et espacés d'un pas p'₁ d'au plus 1cm, congruent avec le premier réseau, de préférence largeur et pas adaptés pour une transparence globale,
- et/ou un deuxième motif diffusant décoratif (5'c) de largeur l₂ centimétrique et d'au plus 5cm de préférence entouré par le deuxième réseau de motifs diffusants ponctuels congruent avec le premier motif diffusant décoratif ou en regard avec le premier réseau de motifs diffusants ponctuels,
- et/ou un deuxième ensemble diffusant de caractères (5'c) tel qu'un LOGO, chacun de largeur l'₃ et d'au plus 5 cm espacés d'un pas p'₃ d'au plus 1cm, de préférence entouré par le deuxième réseau de motifs diffusants ponctuels, congruent avec le premier ensemble diffusant de caractères ou en regard avec le premier réseau de motifs diffusants ponctuels.

15. Ensemble vitré lumineux (100,100', 200, 300a à 300e, 600, 700, 700', 800) selon l'une quelconque des revendications précédentes **caractérisé en ce que** le premier isolateur optique (2) comprend un premier film, dit bas indice, en matière à base de fluoropolymère.

16. Ensemble vitré lumineux (100, 100', 200, 300a à 300'e, 600, 700, 700', 800) selon la revendication 15, **caractérisé en ce que** chaque surface principale du premier film bas indice (2) est traitée par un traitement promoteur d'adhésion qui est de préférence un traitement corona.

17. Ensemble vitré lumineux (100, 100', 200, 300a à 300'e, 600, 700, 700', 800) selon l'une quelconque des revendications 15 à 16 **caractérisé en ce que** le fluoropolymère (2) est de l'ETFE ou du FEP.

18. Ensemble vitré lumineux (400, 500, 900) selon l'une quelconque des revendications 1 à 17 **caractérisé en ce que** le premier isolateur optique (2) comprend une première couche de silice poreuse d'épaisseur e2 d'au moins 400nm.

19. Ensemble vitré lumineux (400, 500, 900) selon la revendication précédente **caractérisé en ce que** la première couche de silice poreuse est revêtue d'un premier revêtement de protection (2a) minéral et transparent, qui est de préférence une couche de silice d'épaisseur e4 supérieure à 50nm et de préférence supérieure à 100nm et avec un indice de réfraction n4 d'au moins 1,4 à 550nm.

20. Ensemble vitré lumineux (300a à 300'e, 400, 500) selon l'une quelconque des revendications précédentes en ce que le premier et deuxième vitrage forme un vitrage feuilleté comportant une tranche dite centrale entre les première et deuxième tranches, et en ce que :
l'ensemble vitré comporte un moyen dit cloisonnement (75) commun, notamment opaque (75a, 75b) ou réfléchissant notamment métallique, entre la première source de lumière et la deuxième source de lumière agencées du même côté de l'ensemble vitré, notamment du vitrage feuilleté, empêchant tout ou partie de la réfraction de la lumière émise par la première source de lumière à la tranche centrale et empêchant tout ou partie de la réfraction de la lumière émise par la deuxième source de lumière à la tranche centrale,
ou la première source de lumière et la deuxième source de lumière sont agencées sont deux côtés distincts notamment opposés de l'ensemble vitré et l'ensemble vitré comporte un moyen dit premier cloisonnement (75), notamment opaque (75a) ou réfléchissant notamment métallique, empêchant tout ou partie de la réfraction de la lumière émise par la première source de lumière à la tranche centrale et l'ensemble vitré comporte un moyen dit deuxième cloisonnement (75), notamment opaque (75b) ou réfléchissant notamment métallique empêchant tout ou partie de la réfraction de la lumière émise par la deuxième source de lumière à la tranche centrale.

21. Ensemble vitré lumineux (100, 100', 200, 300a à 300e, 400, 500, 600, 700, 700', 800, 900) selon l'une quelconque des revendications précédentes en ce que la première source de lumière (4) est un premier ensemble de diodes électroluminescentes sur une carte de circuit imprimé dite premier support PCB (41) et les diodes sont couplées à la première tranche, et de préférence la deuxième source de lumière (4') est un deuxième ensemble de diodes électroluminescentes sur une carte de circuit imprimé dite deuxième support PCB (41'), et les diodes sont couplées à la deuxième tranche de préférence alignée de la première tranche ou alignée ou décalée de la tranche opposée à la première tranche, premier et deuxième support PCB étant espacés, jointifs ou en un support PCB commun.

22. Ensemble vitré lumineux (300a à 300'e) selon la revendication précédente en ce que le premier et deuxième vitrage forme un vitrage feuilleté, le premier ensemble de diodes électroluminescentes et le deuxième ensemble de diodes électroluminescentes sont agencés du même côté du vitrage feuilleté et à émission par le haut, et le premier et/ou deuxième support PCB ou encore un support PCB dit support PCB commun, formant les premier et deuxième supports PCB a une face principale en regard des première et deuxième tranches et le support PCB commun porte un cloisonnement dit commun de préférence pièce opaque ou avec deux revêtements opaques (75a, 75b) ou pièce réfléchissante notamment métallique coté premier ensemble et côté deuxième ensemble sensiblement parallèles au vitrage feuilleté, entre le premier ensemble de diodes électroluminescentes et le deuxième ensemble de diodes électroluminescentes, cloisonnement commun empêchant tout ou partie de la réfraction de la lumière émise par le premier ensemble de diodes à la tranche entre face interne et face extérieure du vitrage feuilleté et empêchant tout ou partie de la réfraction de la lumière émise par le deuxième ensemble de diodes à la tranche entre face de collage et face externe du vitrage feuilleté, cloisonnement commun de préférence saillant par rapport aux première et deuxième ensemble de diodes électroluminescentes en direction des première et deuxième tranches.

23. Ensemble vitré lumineux (100,100', 200, 300a à 300'e, 400, 500, 600, 700, 700', 800, 900) selon l'une quelconque des revendications précédentes en ce que la première source de lumière (4) est un premier ensemble de diodes électroluminescentes qui est couplé à la première tranche en étant collé à la première tranche par une colle optique ou un adhésif double face transparent ou étant espacé de la première tranche d'au plus 5mm.

24. Ensemble vitré lumineux (700, 700') selon l'une quelconque des revendications précédentes **caractérisé en ce que** les première et deuxième sources de lumière sont sur des côtés opposés, le deuxième vitrage dépasse de la première tranche formant une première zone dépassante (11a) et de préférence le premier vitrage dépasse de la deuxième tranche formant une deuxième zone dépassante (11'a) et **en ce que** la première source de lumière est sur un premier support (41) qui est lié à la première zone dépassante et/ou dans la première zone dépassante et ne dépassant pas de la deuxième tranche (13') et de préférence la deuxième source de lumière est sur un deuxième support (41'), qui est lié à la deuxième zone dépassante et/ou est dans la deuxième zone dépassante et ne dépassant pas de la première tranche.

25. Porte d'accès (1000, 2000) incorporant l'ensemble vitré lumineux (100,100', 200, 300a à 300'e, 400, 500, 600, 700, 700', 800, 900) selon l'une des revendications précédentes, notamment entre l'extérieur et un bâtiment, entre deux zones d'un bâtiment ou d'un véhicule terrestre, maritime ou aérien, au sein d'une station de transport en commun, entre deux zones extérieures.

26. Cloison, dalle, fenêtre incorporant l'ensemble vitré lumineux (100,100', 200, 300a à 300'e, 400, 500, 600, 700, 700', 800, 900) selon l'une des revendications 1 à 24.

## Patentansprüche

1. Verglaste Leuchteinheit (100, 100', 200, 300a bis 300'e, 400, 500, 600, 700, 700'), umfassend:
- eine erste Verglasung (1) mit Brechungsindex n1, mit Hauptflächen (12), die interne Fläche (11) und externe Fläche (12) genannt werden, und eine erste Kante (13),
- eine erste Lichtquelle (4), die optisch über die erste Kante mit der ersten Verglasung gekoppelt ist, wodurch die erste Verglasung das von der ersten Quelle abgegebene Licht führt, eine erste statisch oder dynamisch gesteuerte Lichtquelle, um in dem Augenblick t0 eine erste Hauptstrahlung mit einer ersten Wellenlänge, λ1 genannt, abzugeben, und die bevorzugt umschaltbar ist, um in dem Augenblick t'≠t0 eine zweite Hauptstrahlung mit einer zweiten Wellenlänge, λ2 genannt, die von λ1 unterschiedlich ist, abzugeben,
- erste Lichtextraktionsmittel (5), die mit der ersten Verglasung assoziiert sind, die ein oder eine Vielzahl erster Extraktionsmuster umfassen, die eine erste Extraktionsoberfläche (50) definieren, wobei das extrahierte Licht auf der Seite der externen Fläche sichtbar ist, erste Extraktionsmittel welche so sind, dass das extrahierte Licht in dem Augenblick t0 eine erste Farbe, C1 genannt, hat, und bevorzugt in dem Augenblick t' eine zweite Farbe, C2 genannt, hat, die von C1 unterschiedlich ist,
- erste Maskierungsmittel (6) des auf der Seite der internen Fläche extrahierten Lichts, die auf der Seite der internen Fläche eingerichtet sind und die interne Fläche teilweise bedecken, die aus mindestens einem der folgenden Mittel ausgewählt sind:
- lichtundurchlässige Mittel in Kongruenz mit den ersten Extraktionsmitteln, die weiter als die ersten Extraktionsmittel von der internen Fläche entfernt und bevorzugt auf den ersten Extraktionsmitteln sind,
- reflektierende Mittel gegenüber den ersten Extraktionsmitteln und die bevorzugt auf den ersten Extraktionsmitteln liegen und von der ersten Verglasung weiter entfernt sind als die ersten Extraktionsmittel,
- in optischem Kontakt mit der ersten Verglasung, eine zweite Verglasung (1'), mit Brechungsindex n'1, mit Hauptflächen, die Klebefläche (11') und äußere Fläche (12') genannt werden, wobei die Klebefläche der internen Fläche gegenüber liegt, und eine Kante (13'), zweite Kante genannt,
- eine zweite Lichtquelle (4'), die optisch über die zweite Kante mit der zweiten Verglasung gekoppelt ist, wodurch die zweite Verglasung das von der zweiten Lichtquelle abgegebene Licht führt, eine zweite statisch oder dynamisch gesteuerte Lichtquelle, um in dem Augenblick t0 eine dritte Hauptstrahlung mit einer Wellenlänge, λ3 genannt, die von λ1 unterschiedlich und im Wesentlichen gleich λ2 ist, abzugeben und bevorzugt, um in dem Augenblick t' eine vierte Hauptstrahlung mit einer Wellenlänge, λ4 genannt, die bevorzugt von λ3 unterschiedlich ist, abzugeben,
- zweite Lichtextraktionsmittel (5'), die mit der zweiten Verglasung assoziiert sind, die ein oder eine Vielzahl zweiter Extraktionsmuster umfassen, die eine zweite Extraktionsoberfläche (50') definieren, wobei das derart extrahierte Licht auf der Seite der äußeren Fläche sichtbar ist, zweite Lichtextraktionsmittel die so sind, dass das in dem Augenblick t0 extrahierte Licht eine Farbe, C3 genannt, hat, die von C1 unterschiedlich ist, und bevorzugt in dem Augenblick t' eine Farbe, C4 genannt, hat, die von C2 unterschiedlich ist,
- zweite Maskierungsmittel (6') des auf Seite der Klebefläche extrahierten Lichts, die sich auf der Klebefläche befinden, die Klebefläche teilweise bedecken, und die aus mindestens einem der folgenden Mittel ausgewählt sind:
- lichtundurchlässige Mittel in Kongruenz mit den zweiten Extraktionsmitteln, die weiter als die zweiten Extraktionsmittel von der Klebefläche entfernt sind und sich bevorzugt auf den zweiten Extraktionsmitteln befinden,
- reflektierende Mittel gegenüber den zweiten Extraktionsmitteln und die bevorzugt auf den zweiten Extraktionsmitteln liegen und weiter von der zweiten Verglasung entfernt sind als die ersten Extraktionsmittel,
- zwischen den ersten Maskierungsmitteln und den zweiten Extraktionsmitteln einen optischen Isolator (2), erster optischer Isolator genannt, der durchsichtig ist, mit einem Brechungsindex n2 der so ist, dass bei den Wellenlängen der ersten Lichtquelle n1-n2 mindestens 0,08 beträgt, der der internen Fläche gegenüber liegt: zwischen der ersten Kante und der ersten Extraktionsoberfläche und/oder zwischen den ersten Extraktionsmustern, die bevorzugt die erste Extraktionsoberfläche bedecken,
wobei der erste optische Isolator an der ersten Verglasung mittels einer ersten Laminierungszwischenlage (3) aus einem ersten durchsichtigen Polymermaterial laminiert ist, mit Brechungsindex n3 der so ist, dass n3-n1 bei den Wellenlängen der ersten Lichtquelle in Absolutwert kleiner ist als 0,05,
- zwischen den ersten Maskierungsmitteln und den zweiten Extraktionsmitteln, einen optischen Isolator (2, 2'), zweiter optischer Isolator genannt, der mit dem ersten optischen Isolator zusammenfällt oder von ihm getrennt ist und dann den zweiten Extraktionsmitteln näher ist, der durchsichtig ist, mit einem Brechungsindex n'2 der so ist, dass bei den Wellenlängen der zweiten Lichtquelle n'1-n'2 mindestens 0,08 beträgt, der der Klebefläche gegenüber liegt: zwischen der zweiten Kante und der zweiten Extraktionsoberfläche und/oder zwischen den zweiten Extraktionsmustern, die bevorzugt die zweite Extraktionsoberfläche bedecken,
und **dadurch gekennzeichnet, dass** der zweite optische Isolator (2, 2') an der zweiten Verglasung mittels einer zweiten Laminierungszwischenlage (3'), aus zweitem durchsichtigem Polymermaterial laminiert ist, mit einem Brechungsindex n'3 der so ist, dass n'3-n'1 bei den Wellenlängen der zweiten Lichtquelle in Absolutwert kleiner ist als 0,05.

2. Verglaste Leuchteinheit (100, 100', 200, 300a bis 300'e, 400, 500, 600, 700, 700') nach dem vorhergehenden Anspruch, **dadurch gekennzeichnet, dass** die ersten Extraktionsmittel (5) auf der internen Fläche (11) liegen, die ersten Maskierungsmittel (6) eine lichtundurchlässige, ja sogar reflektierende Schicht umfassen, die in Kongruenz und auf den ersten Extraktionsmitteln liegt, und dass die zweiten Extraktionsmittel (5') auf der Klebefläche (12) liegen, die zweiten Maskierungsmittel (6') eine lichtundurchlässige, ja sogar reflektierende Schicht umfassen, die in Kongruenz und auf den zweiten Extraktionsmitteln liegt.

3. Verglaste Leuchteinheit (100, 100', 200, 300a bis 300'e, 400, 500, 600, 700, 700') nach einem beliebigen der vorhergehenden Ansprüche, **dadurch gekennzeichnet, dass** die ersten Extraktionsmittel (5) eine lichtstreuende Emailschicht auf der internen Fläche umfassen, wobei die ersten Maskierungsmittel (6) eine lichtundurchlässige Emailschicht in Kongruenz und auf der lichtstreuenden Emailschicht umfassen, wobei die zweiten Extraktionsmittel (5') eine lichtstreuende Emailschicht auf der Klebefläche (11') umfassen, die zweiten Maskierungsmittel (6') eine lichtundurchlässige Emailschicht in Kongruenz und auf der lichtstreuenden Emailschicht umfassen.

4. Verglaste Leuchteinheit (400, 500, 900) nach einem der vorhergehenden Ansprüche, **dadurch gekennzeichnet, dass** der erste optische Isolator (2) eine erste poröse Siliziumschicht mit Stärke e2 von mindestens 400 nm auf einer Hauptfläche einer dritten durchsichtigen Verglasung (1") aus mineralischem Glas umfasst, die zu der Seite der internen Fläche ausgerichtet ist, und dass der zweite optische Isolator bevorzugt eine zweite poröse Siliziumschicht mit Stärke e'2 von mindestens 400 nm auf einer anderen Hauptfläche der dritten Verglasung umfasst, die zu der Seite der Klebefläche ausgerichtet ist, mit Brechungsindex n'2 der so ist, dass bei den Wellenlängen der zweiten Lichtquelle (4') n'1-n'2 mindestens 0,08 beträgt.

5. Verglaste Leuchteinheit (800, 900) umfassend:
- eine erste Verglasung (1) mit Brechungsindex n1, mit Hauptflächen (12), die interne Fläche (11) und externe Fläche (12) genannt werden, und eine erste Kante (13, 14),
- eine erste Lichtquelle (4), die optisch über die erste Kante mit der ersten Verglasung gekoppelt ist, wodurch die erste Verglasung das von der ersten Quelle abgegebene Licht führt, eine erste statisch oder dynamisch gesteuerte Lichtquelle, um in dem Augenblick t0 eine erste Hauptstrahlung mit einer ersten Wellenlänge, λ1 genannt, abzugeben, und die bevorzugt umschaltbar ist, um in dem Augenblick t'≠t0 eine zweite Hauptstrahlung mit einer zweiten Wellenlänge, λ2 genannt, die von λ1 unterschiedlich ist, abzugeben,
- erste Lichtextraktionsmittel (5), die mit der ersten Verglasung assoziiert sind, die ein oder eine Vielzahl erster Extraktionsmuster umfassen, die eine erste Extraktionsoberfläche (50) definieren, wobei das extrahierte Licht auf der Seite der externen Fläche sichtbar ist, erste Extraktionsmittel derart, dass das in dem Augenblick t0 extrahierte Licht eine erste Farbe, C1 genannt, hat, oder bevorzugt im Augenblick t' eine zweite Farbe, C2 genannt, die von C1 unterschiedlich ist, hat,
- erste Maskierungsmittel des Lichts, das auf der Seite der internen Fläche extrahiert wird, (60), die auf der Seite der internen Fläche eingerichtet sind, mindestens gegenüber den ersten Extraktionsmitteln, die lichtundurchlässig oder reflektierend sind, die bevorzugt die erste Extraktionsoberfläche (50) und sogar im Wesentlichen die interne Fläche bedecken,
- zwischen den ersten Extraktionsmitteln und den ersten Maskierungsmitteln, einen ersten durchsichtigen optischen Isolator (2) mit Brechungsindex n2 der so ist, dass bei den Wellenlängen der ersten Lichtquelle (4) n1-n2 mindestens 0,08 beträgt, der der internen Fläche gegenüber liegt: zwischen der ersten Kante und der ersten Extraktionsoberfläche, und/oder zwischen den ersten Extraktionsmustern, die bevorzugt die erste Extraktionsoberfläche bedecken,
- in optischem Kontakt mit der ersten Verglasung, eine zweite Verglasung (1'), mit Brechungsindex n'1, mit Hauptflächen, die Klebefläche (11') und äußere Fläche (12') genannt werden, wobei die Klebefläche der internen Fläche gegenüber liegt, und eine Kante (13'), zweite Kante genannt,
- eine zweite Lichtquelle (4'), die optisch über die zweite Kante mit der zweiten Verglasung gekoppelt ist, wodurch die zweite Verglasung das von der zweiten Lichtquelle abgegebene Licht führt, eine zweite statisch oder dynamisch gesteuerte Lichtquelle, um in dem Augenblick t0 eine dritte Hauptstrahlung abzugeben, mit einer Wellenlänge, λ3 genannt, die von λ1 unterschiedlich ist, und bevorzugt in dem Augenblick t' eine vierte Hauptstrahlung mit einer Wellenlänge, λ4 genannt, die von λ3 unterschiedlich ist,
- zweite Lichtextraktionsmittel (5'), die mit der zweiten Verglasung assoziiert sind, die ein oder eine Vielzahl zweiter Extraktionsmuster umfassen und eine zweite Extraktionsoberfläche (50') definieren, wobei das aus der zweiten Verglasung extrahierte Licht auf der Seite der äußeren Fläche sichtbar ist, zweite Extraktionsmittel die so sind, dass das in dem Augenblick t0 extrahierte Licht eine Farbe, C3 genannt, hat, die von C1 unterschiedlich ist, und bevorzugt in dem Augenblick t' eine Farbe, C4 genannt, hat, die von C3 unterschiedlich ist,
- zweite Maskierungsmittel des auf der Seite der Klebefläche (60) extrahierten Lichts, die sich auf der Klebefläche befinden, mindestens gegenüber den zweiten lichtundurchlässigen oder reflektierenden Extraktionsmitteln, die bevorzugt die zweite Extraktionsoberfläche und sogar im Wesentlichen die Klebefläche bedecken,
- zwischen den zweiten Extraktionsmitteln und den zweiten Maskierungsmitteln, einen zweiten durchsichtigen optischen Isolator (2') mit Brechungsindex n'2 der so ist, dass bei den Wellenlängen der zweiten Lichtquelle n'1-n'2 mindestens 0,08 beträgt, der der Klebefläche gegenüber liegt: zwischen der zweiten Kante und der zweiten Extraktionsoberfläche, und/oder zwischen den zweiten Extraktionsmustern, die bevorzugt die zweite Extraktionsoberfläche bedecken und **dadurch gekennzeichnet, dass**
der erste optische Isolator eine erste Hauptoberfläche auf der Seite der internen Fläche und eine zweite Hauptoberfläche auf der Seite der Klebefläche hat, wobei die erste Hauptoberfläche auf der internen Fläche ist, wo der erste optische Isolator durch die erste Hauptoberfläche mit der ersten Verglasung mittels einer ersten Laminierungszwischenlage (3) aus erstem durchsichtigem Polymermaterial mit Brechungsindex n3 derart laminiert ist, dass n3-n1 bei den Wellenlängen der ersten Lichtquelle in Absolutwert kleiner ist als 0,05,
der zweite optische Isolator eine dritte Hauptoberfläche auf der Seite der Klebefläche hat, wobei die dritte Hauptoberfläche auf der Klebefläche ist, wo der zweite optische Isolator durch die dritte Hauptoberfläche mit der zweiten Verglasung mittels einer zweiten Laminierungszwischenlage (3') aus zweitem durchsichtigem Polymermaterial mit Brechungsindex n'3 derart laminiert ist, dass n'3-n'1 bei den Wellenlängen der zweiten Lichtquelle (4') in Absolutwert kleiner ist als 0,05 als,
und dass die verglaste Einheit zwischen dem ersten optischen Isolator und dem zweiten optischen Isolator eine Laminierungszwischenlage, zentral genannt, (3") aus Polymermaterial, drittes Material genannt, umfasst.

6. Verglaste Leuchteinheit (800, 900) nach Anspruch 5, **dadurch gekennzeichnet, dass** die ersten und zweiten Maskierungsmittel (60) zusammenfallen, wenn die zweiten Extraktionsmittel (5') mit den ersten Extraktionsmitteln (5) kongruent sind, und/oder wenn die ersten Maskierungsmittel (60) im Wesentlichen die interne Fläche und die Klebefläche bedecken.

7. Verglaste Leuchteinheit (800, 900) nach einem der Ansprüche 5 oder 6, **dadurch gekennzeichnet, dass** die ersten Maskierungsmittel (60) eine lichtundurchlässige Beschichtung, wie eine Tinte, einen Anstrich oder ein Email, insbesondere auf der zentralen Laminierungszwischenlage oder auf einem zusätzlichen Träger, insbesondere aus Kunststoff oder mineralischem Glas, umfassen.

8. Verglaste Leuchteinheit (100, 100', 200, 300a bis 300'e, 400, 500, 600, 700, 700', 800, 900) nach einem beliebigen der vorhergehenden Ansprüche, **dadurch gekennzeichnet, dass**:
- im Augenblick t0 die erste Lichtquelle (4) grünes Licht mit λ1 in einem Bereich von 515 bis 535 nm abgibt, die zweite Lichtquelle (4') rotes Licht mit λ3 in einem Bereich von 615 nm bis 635 nm abgibt,
- im Augenblick t' bevorzugt die erste Lichtquelle rotes Licht mit λ2 in einem Bereich von 615 nm bis 635 nm abgibt, und die zweite Lichtquelle bevorzugt grünes Licht mit λ4 in einem Bereich von 515 bis 535 nm abgibt.

9. Verglaste Leuchteinheit (200, 300a bis 300'e, 400, 500, 600, 700, 700', 800, 900) nach einem beliebigen der vorhergehenden Ansprüche, **dadurch gekennzeichnet, dass** im Augenblick t0 die erste Lichtquelle (4) eine erste Licht-emittierende Diode umfasst, die grünes mit λ1 in einem Bereich von 515 bis 535 nm abgibt, und im Augenblick t' die erste Lichtquelle eine zweite Licht-emittierende Diode umfasst, die rotes Licht mit λ2 in einem Bereich von 615 nm bis 635 nm abgibt, wobei die elektrische Schaltung der ersten Diode angepasst ist, damit der Fluss F1, der von der Diode abgegeben wird, kleiner ist als 0,8 Mal der Fluss F2, der von der zweiten Diode abgegeben wird.

10. Verglaste Leuchteinheit (100, 100', 200, 300a bis 300d, 400, 500, 600, 700, 800) nach einem beliebigen der vorhergehenden Ansprüche, **dadurch gekennzeichnet, dass** sie an der Peripherie der ersten Kante ein Profil (7) umfasst, das bevorzugt metallisch ist, das auf der äußeren und externen Fläche und bevorzugt auf einer Distanz W zwischen 1 cm und 3 cm übersteht, wobei die erste Lichtquelle (4) und eventuell die zweite Lichtquelle darin eingeschlossen ist/sind oder getragen wird/werden.

11. Verglaste Leuchteinheit (100, 100', 200, 600, 700', 800, 900) nach einem beliebigen der vorhergehenden Ansprüche, **dadurch gekennzeichnet, dass** die erste Lichtquelle (4) eine erste Licht emittierende Diode (4) mit der ersten Hauptstrahlung an λ1 und eine zweite Licht emittierende Diode mit der zweiten Hauptstrahlung an λ2 umfasst, wobei jede der ersten und zweiten Dioden von der ersten Kante (13) beabstandet ist, und mindestens 80 % des Lichtflusses, der von jeder der ersten und zweiten Diode abgegeben wird, in einem Emissionskegel zwischen -α1 und α1 liegt, mit α1 = Arsin(n1 * sin (α2)), wobei α2=(π/2)-Arsin (n2/n1) und dem Brechungswinkel in der ersten Verglasung entspricht,
und dass die zweite Lichtquelle (4') eine dritte Licht emittierende Diode mit der dritten Hauptstrahlung von λ3 und eventuell eine vierte Licht emittierende Diode mit der vierten Hauptstrahlung von λ4 umfasst, wobei die dritte Diode, ja sogar die eventuelle vierte Diode von der zweiten Kante (13', 14') beabstandet ist und mindestens 80 % des Lichtflusses, der von jeder der dritten und eventuellen vierten Diode abgegeben wird, in einem Abgabekegel zwischen -α'1 et α'1 liegt, mit α'1 = Arsin(n'1 * sin (α'2)) wobei α'2=(π/2)-Arsin (n'2/n'1) und dem Brechungswinkel in der zweiten Verglasung entspricht.

12. Verglaste Leuchteinheit (100, 100', 200, 300a bis 300'e, 400, 500, 600, 700, 700') nach einem beliebigen der vorhergehenden Ansprüche, **dadurch gekennzeichnet, dass** das erste sogenannte Mischschutzband (8, 81, 82, 6a) in optischem Kontakt mit der internen Fläche am Umfang der internen Fläche ist, sich ausgehend von der ersten Kante erstreckt, Band mit Breite D0 mindestens gleich 0,8 Dmin, wobei Dmin = d1 / tan ((π/2)-Arsin(n2/n1)) und bevorzugt kleiner als 2 cm, wobei d1 der Abstand zwischen der ersten Lichtquelle und der internen Fläche ist, erstes Band aus lichtundurchlässigem Material, das von den ersten Maskierungsmitteln und der ersten Extraktionsoberfläche versetzt ist, die weiter von der ersten Kante oder dem ersten Band, das von einem Muster der ersten lichtundurchlässigen Maskierungsmittel gebildet ist, entfernt sind, und bevorzugt ein zweites Band, Mischschutzband (8', 81', 82', 6'a) genannt, in optischem Kontakt mit der Klebefläche am Umfang der Klebefläche ist, sich ausgehend von der zweiten Kante erstreckt, Band mit Breite D'0 mindestens gleich 0,8 D'min mit D'min = d'1 / tan ((π/2)-Arsin(n'2/n'1)) und bevorzugt kleiner als 2 cm erstreckt, aus lichtundurchlässigem Material, wobei d'1 der Abstand zwischen der zweiten Lichtquelle und der Klebefläche ist, zweites Band aus lichtundurchlässigem Material, das von den zweiten Maskierungsmitteln und der zweiten Extraktionsoberfläche versetzt ist, die weiter von der zweiten Kante oder dem zweiten Band, das durch ein Muster der zweiten lichtundurchlässigen Maskierungsmittel gebildet ist, entfernt ist.

13. Verglaste Leuchteinheit (100, 100', 200, 300a bis 300'e, 400, 500, 600, 700, 700', 800, 900) nach einem beliebigen der vorhergehenden Ansprüche, **dadurch gekennzeichnet, dass** die verglaste Einheit eine durchsichtige Zone (17) umfasst, und dass die Kanten gegenüber der durchsichtigen Zone bevorzugt keine Lichtquellen haben und/oder dass die erste Extraktionsoberfläche (50) eine globale Transparenz aufweist.

14. Verglaste Leuchteinheit (100, 100', 200, 300a bis 300'e, 400, 500, 600, 700, 700', 800, 900) nach einem beliebigen der vorhergehenden Ansprüche, **dadurch gekennzeichnet, dass** die erste Extraktionsoberfläche Folgendes umfasst:
- ein erstes Netzwerk aus stellenweisen lichtstreuenden Mustern (5), Muster mit einer Breite l1 von mindestens 1 cm und um einen Abstand p1 von maximal 1 cm beabstandet, wobei Breite und Abstand bevorzugt für eine globale Transparenz angepasst sind
- und/oder ein erstes lichtstreuendes Dekormuster (5c) mit Zentimeterbreite l2 und maximal 5 cm, das bevorzugt von den ersten Netzwerk stellenweise lichtstreuender Muster umgeben ist,
- und/oder eine erste lichtstreuende Einheit von Zeichen (5b), wie zum Beispiel ein LOGO, jeweils mit Breite l3 und maximal 5 cm, beabstandet um einen Abstand p3 von maximal 1 cm, bevorzugt umgeben von dem ersten Netzwerk stellenweiser lichtstreuender Muster,
und dass die zweite Extraktionsoberfläche bevorzugt gegenüber der ersten Extraktionsoberfläche ist und sogar mit ihr kongruent ist, und Folgendes umfasst:
- ein zweites Netzwerk stellenweise lichtstreuender Muster (5'), Muster mit einer Breite l'₁ von maximal 1 cm und beabstandet um einen Abstand p'₁ von maximal 1 cm, kongruent mit dem ersten Netzwerk, bevorzugt mit Breite und Abstand, die für eine globale Transparenz angepasst sind,
- und/oder ein zweites lichtstreuendes Dekormuster mit Breite l₂ in Zentimetergröße und maximal 5 cm, bevorzugt von dem zweiten Netzwerk stellenweise lichtstreuender Muster kongruent mit dem ersten lichtstreuenden Dekormuster oder gegenüber dem ersten Netzwerk stellenweise lichtstreuender Muster umgeben,
- und/oder eine zweite lichtstreuende Einheit von Zeichen (5'c), wie ein LOGO, jeweils mit einer Breite l'₃ und maximal 5 cm, beabstandet um einen Abstand p'₃ von maximal 1 cm, bevorzugt von dem zweiten Netzwerk stellenweise lichtstreuender Muster kongruent mit der ersten lichtstreuenden Einheit von Zeichen oder gegenüber dem ersten Netzwerk stellenweise lichtstreuender Muster umgeben.

15. Verglaste Leuchteinheit (100, 100', 200, 300a bis 300e, 600, 700, 700', 800) nach einem beliebigen der vorhergehenden Ansprüche, **dadurch gekennzeichnet, dass** der erste optische Isolator (2) eine erste Folie, mit niedrigem Index genannt, aus Material auf Fluorpolymerbasis umfasst.

16. Verglaste Leuchteinheit (100, 100', 200, 300a bis 300'e, 600, 700, 700', 800) nach Anspruch 15, **dadurch gekennzeichnet, dass** jede Hauptoberfläche der ersten Folie mit niedrigem Index (2) mit einer haftungsfördernden Behandlung behandelt ist, die bevorzugt eine Koronabehandlung ist.

17. Verglaste Leuchteinheit (100, 100', 200, 300a bis 300'e, 600, 700, 700', 800) nach einem beliebigen der Ansprüche 15 bis 16, **dadurch gekennzeichnet, dass** das Fluorpolymer (2) ETFE oder FEP ist.

18. Verglaste Leuchteinheit (400, 500, 900) nach einem beliebigen der Ansprüche 1 bis 17, **dadurch gekennzeichnet, dass** der erste optische Isolator (2) eine erste Schicht aus porösem Silizium mit einer Stärke e2 von mindestens 400 nm umfasst.

19. Verglaste Leuchteinheit (400, 500, 900) nach dem vorhergehenden Anspruch, **dadurch gekennzeichnet, dass** die erste Schicht aus porösem Silizium mit einer ersten mineralischen und durchsichtigen Schutzbeschichtung (2a) beschichtet ist, die bevorzugt eine Siliziumschicht mit einer Stärke e4 größer als 50 nm und bevorzugt größer als 100 nm und mit einem Brechungsindex n4 von mindestens 1,4 bis 550 nm ist.

20. Verglaste Leuchteinheit (300a bis 300'e, 400, 500) nach einem beliebigen der vorhergehenden Ansprüche, **dadurch gekennzeichnet, dass** die erste und die zweite Verglasung eine Verbundverglasung bilden, die eine sogenannte zentrale Kante zwischen der ersten und zweiten Kante umfasst, und dass:
die verglaste Einheit ein gemeinsame Abteilung (75) genanntes Mittel, das insbesondere lichtundurchlässig (75a, 75b) oder reflektierend, insbesondere metallisch ist, zwischen der ersten Lichtquelle und der zweiten Lichtquelle, die auf derselben Seite der verglasten Einheit eingerichtet sind, umfasst, insbesondere Verbundverglasung, die die Brechung des Lichts, das von der ersten Lichtquelle abgegeben wird, an der zentralen Kante ganz oder teilweise verhindert und die Brechung des Lichts, das von der zweiten Lichtquelle abgegeben wird, an der zentralen Kante ganz oder teilweise verhindert,
oder die erste Lichtquelle und die zweite Lichtquelle auf zwei getrennten Seiten eingerichtet sind, die insbesondere der verglasten Einheit entgegengesetzt sind, und die verglaste Einheit ein erste Abteilung (75) genanntes Mittel umfasst, das insbesondere lichtundurchlässig (75a) oder reflektierend, insbesondere metallisch ist, das die Brechung des Lichts, das von der ersten Lichtquelle an der zentralen Kante abgegeben wird, ganz oder teilweise verhindert, und die verglaste Einheit ein zweite Abteilung (75) genanntes Mittel umfasst, das insbesondere lichtundurchlässig (75b) oder reflektierend, insbesondere metallisch ist, das die Brechung des von der zweiten Lichtquelle abgegebenen Lichts an der zentralen Kante ganz oder teilweise verhindert.

21. Verglaste Leuchteinheit (100, 100', 200, 300a bis 300e, 400, 500, 600, 700, 700', 800, 900) nach einem beliebigen der vorhergehenden Ansprüche, **dadurch gekennzeichnet, dass** die erste Lichtquelle (4) eine erste Einheit Licht emittierender Dioden auf einer Leiterplatte, erster PCB-Träger (41) genannt, ist, und dass die Dioden mit der ersten Kante gekoppelt sind, und dass die zweite Lichtquelle (4') bevorzugt eine zweite Einheit Licht emittierender Dioden auf einer Leiterplatte, zweiter PCB-Träger (41') genannt, ist, und dass die Dioden mit der zweiten Kante, die bevorzugt mit der ersten Kante ausgerichtet ist oder mit der entgegengesetzten Kante zu der ersten Kante ausgerichtet oder versetzt ist, gekoppelt sind, wobei der erste und der zweite PCB-Träger beabstandet, aneinander liegend oder in einem gemeinsamen PCB-Träger sind.

22. Verglaste Leuchteinheit (300a bis 300'e) nach dem vorhergehenden Anspruch, **dadurch gekennzeichnet, dass** die erste und zweite Verglasung eine Verbundverglasung bilden, wobei die erste Einheit Licht emittierender Dioden und die zweite Einheit Licht emittierender Dioden auf derselben Seite der Verbundverglasung und mit Abgabe von oben eingerichtet sind, und der erste und/oder der zweite PCB-Träger oder auch ein PCB-Träger, gemeinsamer PCB-Träger genannt, den ersten und den zweiten PCB-Träger bildet, eine Hauptfläche gegenüber der ersten und zweiten Kante hat und der gemeinsame PCB-Träger eine gemeinsam genannte Abteilung trägt, bevorzugt ein lichtundurchlässiges Teil oder mit zwei lichtundurchlässigen Beschichtungen (75a, 75b) oder reflektierendes Teil, insbesondere ein metallisches Teil, auf der Seite der ersten Einheit und der Seite der zweiten Einheit im Wesentlichen parallel zu der Verbundverglasung, zwischen der ersten Einheit Licht emittierender Dioden und der zweiten Einheit Licht emittierender Dioden, wobei die gemeinsame Abteilung die Brechung des Lichts, das von der ersten Einheit von Dioden abgegeben wird, an der Kante zwischen der internen Fläche und der externen Fläche der Verbundverglasung ganz oder teilweise verhindert, und die Brechung des Lichts, das von der zweiten Einheit von Dioden abgegeben wird, an der Kante zwischen der Klebefläche und der externen Fläche der Verbundverglasung ganz oder teilweise verhindert, wobei die gemeinsame Abteilung bevorzugt in Bezug auf die erste und zweite Einheit Licht emittierender Dioden in Richtung der ersten und zweiten Kante vorsteht.

23. Verglaste Leuchteinheit (100, 100', 200, 300a bis 300'e, 400, 500, 600, 700, 700', 800, 900) nach einem beliebigen der vorhergehenden Ansprüche, **dadurch gekennzeichnet, dass** die erste Lichtquelle (4) eine erste Einheit Licht emittierender Dioden ist, die mit der ersten Kante gekoppelt ist, indem sie anhand eines optischen Klebers oder eines durchsichtigen doppelflächigen Klebers an die erste Kante geklebt ist oder von der ersten Kante um maximal 5 mm beabstandet ist.

24. Verglaste Leuchteinheit (700, 700') nach einem beliebigen der vorhergehenden Ansprüche, **dadurch gekennzeichnet, dass** die erste und die zweite Lichtquelle auf entgegengesetzten Seiten liegen, die zweite Verglasung von der ersten Kante vorsteht, indem eine erste vorstehende Zone (11a) gebildet wird, und wobei die erste Verglasung bevorzugt von der zweiten Kante vorsteht, indem eine zweite vorstehende Zone (11'a) gebildet wird, und dass die erste Lichtquelle auf einem ersten Träger (41) liegt, der mit der ersten vorstehenden Zone verbunden ist und/oder in der ersten vorstehenden Zone liegt, und nicht von der zweiten Kante (13') vorsteht, und dass die zweite Lichtquelle bevorzugt auf einem zweiten Träger (41') liegt, der mit der zweiten vorstehenden Zone verbunden ist und/oder in der zweiten vorstehenden Zone liegt und nicht über die erste Kante vorsteht.

25. Zugangstür (1000, 2000), die die verglaste Leuchteinheit (100, 100', 200, 300a bis 300'e, 400, 500, 600, 700, 700', 800, 900) nach einem der vorhergehenden Ansprüche enthält, insbesondere zwischen dem Freien und einem Gebäude, zwischen zwei Zonen eines Gebäudes oder eines Land-, See- oder Luftfahrzeugs, innerhalb einer gemeinsamen Transportstation, zwischen zwei Zonen im Freien.

26. Wand, Platte, Fenster, die/das die verglaste Leuchteinheit (100, 100', 200, 300a bis 300'e, 400, 500, 600, 700, 700', 800, 900) nach einem der Ansprüche 1 bis 24 enthält.

## Claims

1. Luminous glazing assembly (100, 100', 200, 300a to 300'e, 400, 500, 600, 700, 700') comprising:
- a first glazing pane (1) of refractive index n1, having main faces (12), referred to as the internal face (11) and external face (12), and a first edge face (13);
- a first light source (4) optically coupled to the first glazing pane via the first edge face, the first glazing pane thus guiding the light emitted by the first source, which first light source is controlled, statically or dynamically, in order to emit at the instant t0 a first main emission at a first wavelength called λ1 and preferably switchable in order to emit at the instant t'≠t0 a second main emission at a second wavelength called λ2 distinct from λ1;
- first light-extracting means (5) associated with the first glazing pane, comprising one or more first extracting features bounding a first extracting area (50), the light extracted being visible on the external-face side, the first extracting means being such that the light extracted at said t0 is of a first colour called C1 and preferably at said t' is of a second colour called C2 distinct from C1;
- first means (6) for masking the extracted light from the internal-face side, these means being arranged on the internal-face side and partially covering the internal face and being chosen from at least one of the following means:
- opaque means in congruence with the first extracting means, further away than the first extracting means from the internal face and preferably on the first extracting means, and
- reflective means facing the first extracting means, and which are preferably on the first extracting means and further away from the first glazing pane than the first extracting means;
- making optical contact with the first glazing pane, a second glazing pane (1'), of refractive index n'1, having main faces, referred to as the bonding face (11') and exterior face (12'), the bonding face facing the internal face, and an edge face (13') called the second edge face;
- a second light source (4') optically coupled to the second glazing pane via the second edge face, the second glazing pane thus guiding the light emitted by the second light source, which second light source is controlled, statically or dynamically, in order to emit at said t0 a third main emission at a wavelength called λ3 distinct from λ1 and preferably substantially equal to λ2 and preferably in order to emit at said instant t' a fourth main emission at a wavelength called λ4 preferably distinct from λ3;
- second light-extracting means (5') associated with the second glazing pane, comprising one or more second extracting features bounding a second extracting area (50'), the light thus extracted being visible on the exterior-face side, the second light-extracting means being such that the light thus extracted at t0 is of a colour called C3 distinct from C1, and preferably at said t' is of a colour called C4 distinct from C2;
- second means (6') for masking the extracted light from the bonding-face side, these means being arranged on the bonding-face side and partially covering the bonding face, and being chosen from at least one of the following means:
- opaque means in congruence with the second extracting means, further away than the second extracting means from the bonding face and preferably on the second extracting means, and
- reflective means facing the second extracting means, and which are preferably on the second extracting means and are further away from the second glazing pane than the second extracting means;
- between the first masking means and the second extracting means, a transparent optical isolator (2), called the first optical isolator, of refractive index n2 such that, at the wavelengths of the first light source, n1-n2 is at least 0.08, and which faces the internal face: between the first edge face and the first extracting area and/or between the first extracting features, preferably covering the first extracting area,
the first optical isolator is laminated to the first glazing pane by means of a first lamination interlayer (3) made of a first transparent polymer that has a refractive index n3 such that, in absolute value, n3-n1 is lower than 0.05 at the wavelengths of the first light source; and
- between the first masking means and the second extracting means, a transparent optical isolator (2, 2'), called the second optical isolator, merged with the first optical isolator or separate and closer to the second extracting means, of refractive index n'2 such that, at the wavelengths of the second light source, n'1-n'2 is at least 0.08, and which faces the bonding face: between the second edge face and the second extracting area and/or between the second extracting features, preferably covering the second extracting area,
and wherein the second optical isolator (2, 2') is laminated to the second glazing pane by means of a second lamination interlayer (3') made of a second transparent polymer that has a refractive index n'3 such that, in absolute value, n'3-n'1) is lower than 0.05 at the wavelengths of the second light source.

2. Luminous glazing assembly (100, 100', 200, 300a to 300'e, 400, 500, 600, 700, 700') according to the preceding claim, **characterized in that** the first extracting means (5) are on the internal face (11), the first masking means (6) comprising an opaque or even reflective layer in congruence with and on the first extracting means, and **in that** the second extracting means (5') are preferably on the bonding face (12) and the second masking means (6') comprise an opaque or even reflective layer in congruence with and on the second extracting means.

3. Luminous glazing assembly (100, 100', 200, 300a to 300'e, 400, 500, 600, 700, 700') according to either one of the preceding claims, **characterized in that** the first extracting means (5) comprise a scattering enamel layer on the internal face, the first masking means (6) comprise an opaque enamel layer in congruence with and on the scattering enamel layer, the second extracting means (5') comprise a scattering enamel layer on the bonding face (11') and the second masking means (6') comprise an opaque enamel layer in congruence with and on the scattering enamel layer.

4. Luminous glazing assembly (400, 500, 900) according to one of the preceding claims, **characterized in that** the first optical isolator (2) comprises a first porous silica layer of thickness e2 of at least 400 nm on one main face of a third transparent glazing pane (1") that is made of mineral glass, said face being oriented to the internal-face side, and preferably the second optical isolator comprises a second porous silica layer of thickness e'2 of at least 400 nm on another main face of the third glazing pane, said face being oriented to the bonding-face side, of refractive index n'2 such that, at the wavelengths of the second light source (4') n'1-n'2 is at least 0.08.

5. Luminous glazing assembly (800, 900) comprising:
- a first glazing pane (1) of refractive index n1, having main faces (12), referred to as the internal face (11) and external face (12), and a first edge face (13, 14);
- a first light source (4) optically coupled to the first glazing pane via the first edge face, the first glazing pane thus guiding the light emitted by the first source, which first light source is controlled, statically or dynamically, in order to emit at the instant t0 a first main emission at a first wavelength called λ1 and preferably switchable in order to emit at the instant t'≠t0 a second main emission at a second wavelength called λ2 distinct from λ1;
- first light-extracting means (5) associated with the first glazing pane, comprising one or more first extracting features bounding a first extracting area (50), the light extracted being visible on the external-face side, the first extracting means being such that the light extracted at said t0 is of a first colour called C1 or preferably at said t' is of a second colour called C2 distinct from C1;
- first means (60) for masking the extracted light from the internal-face side, these opaque or reflective means being arranged on the internal-face side at least facing the first extracting means and preferably covering the first extracting area (50) and even substantially the internal face;
- between the first extracting means and the first masking means, a first transparent optical isolator (2) of refractive index n2 such that, at the wavelengths of the first light source (4) n1-n2 is at least 0.08, and which faces the internal face: between the first edge face and the first extracting area and/or between the first extracting features, preferably covering the first extracting area;
- making optical contact with the first glazing pane, a second glazing pane (1'), of refractive index n'1, having main faces, referred to as the bonding face (11') and exterior face (12'), the bonding face facing the internal face, and an edge face (13') called the second edge face;
- a second light source (4') optically coupled to the second glazing pane via the second edge face, the second glazing pane thus guiding the light emitted by the second light source, which second light source is controlled, statically or dynamically, in order to emit at said t0 a third main emission at a wavelength called λ3 distinct from λ1 and preferably at said instant t' a fourth main emission at a wavelength called λ4 distinct from λ3;
- second light-extracting means (5') associated with the second glazing pane, comprising one or more second extracting features and bounding a second extracting area (50'), the light extracted from the second glazing pane being visible on the exterior-face side, the second light-extracting means being such that the light extracted at t0 is of a colour called C3 distinct from C1, and preferably at said t' is of a colour called C4 distinct from C3;
- second means (60) for masking the extracted light from the bonding-face side, these opaque or reflective means being arranged on the bonding-face side at least facing the second extracting means and preferably covering the second extracting area and even substantially the bonding face; and
- between the second extracting means and the second masking means, a second transparent optical isolator (2') of refractive index n'2 such that, at the wavelengths of the second light source, n'1-n'2 is at least 0.08, and which faces the bonding face: between the second edge face and the second extracting area and/or between the second extracting features, preferably covering the second extracting area,
and wherein
the first optical isolator has a first main surface on the internal-face side and a second main surface on the bonding-face side, the first main surface being on the internal face or the first optical isolator being laminated via the first main surface to the first glazing pane by means of a first lamination interlayer (3) made of a first transparent polymer that has a refractive index n3 such that, in absolute value, n3-n1 is lower than 0.05 at the wavelengths of the first light source,
the second optical isolator has a third main surface on the bonding-face side, the third main surface being on the bonding face or the second optical isolator being laminated via said third main surface to the second glazing pane by means of a second lamination interlayer (3') made of a second transparent polymer that has a refractive index n'3 such that, in absolute value, n'3-n'1) is lower than 0.05 at the wavelengths of the second light source (4'),
and wherein the glazing assembly comprises, between the first optical isolator and the second optical isolator, what is called a central lamination interlayer (3") made of a polymer that is called a third polymer.

6. Luminous glazing assembly (800, 900) according to Claim 5, **characterized in that** the first and second masking means (60) are merged when the second extracting means (5') are in congruence with the first extracting means (5) and/or when the first masking means (60) substantially cover the internal face and the bonding face.

7. Luminous glazing assembly (800, 900) according to one of Claims 5 and 6, **characterized in that** the first masking means (60) comprise an opaque coating, such as an ink, a paint or an enamel, especially on the central lamination interlayer or on an additional carrier especially made of plastic or mineral glass.

8. Luminous glazing assembly (100, 100', 200, 300a to 300'e, 400, 500, 600, 700, 700', 800, 900) according to any one of the preceding claims, **characterized in that**:
- at t0 the first light source (4) emits in the green with λ1 in a range extending from 515 to 535 nm and the second light source (4') emits in the red with λ3 in a range extending between 615 nm and 635 nm; and
- preferably at t' the first light source emits in the red with λ2 in a range extending between 615 nm and 635 nm and preferably the second light source emits in the green with λ4 in a range extending from 515 to 535 nm.

9. Luminous glazing assembly (200, 300a to 300'e, 400, 500, 600, 700, 700', 800, 900) according to any one of the preceding claims, **characterized in that** at t0 the first light source (4) comprises a first light-emitting diode that emits in the green with λ1 in a range extending from 515 to 535 nm, and at t' the first light source comprises a second light-emitting diode that emits in the red with λ2 in a range extending between 615 nm and 635 nm, the electrical circuit of the first diode being adjusted so that the flux F1 emitted by the first diode is lower than 0.8 times the flux F2 emitted by the second diode.

10. Luminous glazing assembly (100, 100', 200, 300a to 300d, 400, 500, 600, 700, 800) according to any one of the preceding claims, **characterized in that** it comprises, on the periphery of the first edge face, a preferably metal profile (7) extending over the exterior and external faces preferably by a distance W of between 1 cm and 3 cm, enclosing or bearing the first light source (4) and optionally the second light source.

11. Luminous glazing assembly (100, 100', 200, 600, 700', 800, 900) according to any one of the preceding claims, **characterized in that** the first light source (4) comprises a first light-emitting diode (4) providing said first main emission at λ1 and a second light-emitting diode providing said second main emission at λ2, and each of the first and second diodes is spaced apart from the first edge face (13) and at least 80% of the light flux emitted by each of the first and second diodes is contained in an emission cone between -α1 and α1 where α1 = Arsin(n1 * sin (α2)), and where α2=(π/2)-Arsin (n2/n1) corresponds to the angle of refraction in the first glazing pane;
and **in that** the second light source (4') comprises a third light-emitting diode providing said third main emission of λ3 and optionally a fourth light-emitting diode providing said fourth main emission of λ4, and the third diode and, if relevant, the optional fourth diode is spaced apart from the second edge face (13', 14') and at least 80% of the light flux emitted by each of the third and optional fourth diodes is contained in an emission cone between -α'1 and α'1 where α'1 = Arsin(n1 * sin (α'2)), and where α'2=(π/2)-Arsin (n'2/n'1) corresponds to the angle of refraction in the second glazing pane

12. Luminous glazing assembly (100, 100', 200, 300a to 300'e, 400, 500, 600, 700, 700') according to any one of the preceding claims, **characterized in that** a first so-called anti-mixing band (8, 81, 82, 6a) makes, on the periphery of the internal face, extending from the first edge face, optical contact with the internal face, this band having a width D0 at least equal to 0.8 Dmin, where Dmin= d1 / tan ((π/2)-arsin(n2/n1)), and preferably smaller than 2 cm, where d1 is the distance between the first light source and the internal face, this first band being made of an opaque material and being offset from the first masking means and the first extracting area, which are further away from the first edge face, or this first band is formed by a feature of the opaque first masking means, and **in that** preferably, a second so-called anti-mixing band (8', 81', 82', 6'a) makes, on the periphery of the bonding face, extending from the second edge face, optical contact with the bonding face, this band of opaque material having a width D'0 at least equal to 0.8 D'min, where D'min= d'1 / tan ((π/2)-arsin(n'2/n'1)), and preferably smaller than 2 cm, where d1 is the distance between the second light source and the bonding face, this second band of opaque material being offset from the second masking means and the second extracting area, which are further away from the second edge face, or this second band is formed by a feature of the opaque second masking means.

13. Luminous glazing assembly (100, 100', 200, 300a to 300'e, 400, 500, 600, 700, 700', 800, 900) according to any one of the preceding claims, **characterized in that** the glazing assembly comprises a transparent zone (17) and **in that** the edge faces facing the transparent zone are preferably devoid of light sources and/or **in that** the first extracting area (50) has an overall transparency.

14. Luminous glazing assembly (100, 100', 200, 300a to 300'e, 400, 500, 600, 700, 700', 800, 900) according to any one of the preceding claims, **characterized in that** the first extracting area comprises:
- a first array of discrete scattering features (5), these features having a width l1 of at most 1 cm and being spaced apart by a pitch p1 of at most 1 cm, said width and pitch preferably being tailored to obtain an overall transparency;
- and/or a first scattering decorative feature (5c) of centimetre-sized width l2 of at most 5 cm, preferably encircled by the first array of discrete scattering features;
- and/or a first scattering assembly of characters (5b) such as a logo, each having a width l3 of at most 5 cm and being spaced apart by a pitch p3 of at most 1 cm, preferably encircled by the first array of discrete scattering features,
and **in that** the second extracting area preferably faces and is even congruent with the first extracting area and comprises:
- a second array of discrete scattering features (5') congruent with the first array, these features having a width l'₁ of at most 1 cm and being spaced apart by a pitch p'₁ of at most 1 cm, said width and pitch preferably being tailored to obtain an overall transparency;
- and/or a second scattering decorative feature (5'c) of centimetre-sized width l₂ of at most 5 cm, preferably encircled by the second array of discrete scattering features and congruent with the first scattering decorative feature or facing the first array of discrete scattering features;
- and/or a second scattering assembly of characters (5'c) such as a logo, each having a width l'₃ of at most 5 cm and being spaced apart by a pitch p'₃ of at most 1 cm, preferably encircled by the second array of discrete scattering features and congruent with the first scattering assembly of characters or facing the first array of discrete scattering features.

15. Luminous glazing assembly (100, 100', 200, 300a to 300e, 600, 700, 700', 800) according to any one of the preceding claims, **characterized in that** the first optical isolator (2) comprises a first so-called low-index film made of a fluoropolymer-based material.

16. Luminous glazing assembly (100, 100', 200, 300a to 300'e, 600, 700, 700', 800) according to Claim 15, **characterized in that** each main surface of the first low-index film (2) is treated by an adhesion-promoting treatment that is preferably a corona treatment.

17. Luminous glazing assembly (100, 100', 200, 300a to 300'e, 600, 700, 700', 800) according to either one of Claims 15 to 16, **characterized in that** the fluoropolymer (2) is ETFE or an FEP.

18. Luminous glazing assembly (400, 500, 900) according to any one of Claims 1 to 17, **characterized in that** the first optical isolator (2) comprises a first porous silica layer of thickness e2 of at least 400 nm.

19. Luminous glazing assembly (400, 500, 900) according to the preceding claim, **characterized in that** the first porous silica layer is coated with a first transparent and mineral protective coating (2a) that is preferably a silica layer of thickness e4 larger than 50 nm and preferably larger than 100 nm having a refractive index n4 of at least 1.4 at 550 nm.

20. Luminous glazing assembly (300a to 300'e, 400, 500) according to any one of the preceding claims, wherein the first and second glazing pane form a laminated glazing unit comprising an edge face, which is called the central edge face, between the first and second edge faces, and wherein:
the glazing assembly comprises what is called a common partitioning means (75), which is especially opaque (75a, 75b) or reflective, and especially made of metal, located between the first light source and the second light source when the latter are arranged on the same side of the glazing assembly, especially of the laminated glazing unit, completely or partially preventing refraction of the light emitted by the first light source at the central edge face and completely or partially preventing refraction of the light emitted by the second light source at the central edge face;
or the first light source and the second light source are arranged on two separate, especially opposite, sides of the glazing assembly and the glazing assembly comprises what is called a first partitioning means (75), which is especially opaque (75a) or reflective, and especially made of metal, completely or partially preventing refraction of the light emitted by the first light source at the central edge face, and the glazing assembly comprises what is called a second partitioning means (75), which is especially opaque (75b) or reflective, and especially made of metal, completely or partially preventing refraction of the light emitted by the second light source at the central edge face.

21. Luminous glazing assembly (100, 100', 200, 300a to 300e, 400, 500, 600, 700, 700', 800, 900) according to any one of the preceding claims, wherein the first light source (4) is a first assembly of light-emitting diodes on a printed circuit board referred to as the first PCB carrier (41) and the diodes are coupled to the first edge face, and preferably the second light source (4') is a second assembly of light-emitting diodes on a printed circuit board referred to as the second PCB carrier (41'), and the diodes are coupled to the second edge face, which is preferably aligned with the first edge face or aligned with or offset from the edge face opposite the first edge face, the first and second PCB carriers being spaced apart, contiguous or a common PCB carrier.

22. Luminous glazing assembly (300a to 300'e) according to the preceding claim, wherein the first and second glazing pane form a laminated glazing unit, the first assembly of light-emitting diodes and the second assembly of light-emitting diodes are arranged on the same side of the laminated glazing unit and are top-emitting diodes, and the first and/or second PCB carrier or even one so-called common PCB carrier forming the first and second PCB carriers has a main face facing the first and second edge faces and the common PCB carrier bears what is referred to as a common partition, preferably an opaque part or a part comprising two opaque coatings (75a, 75b) or a reflective, especially metal part, on the side of the first assembly and on the side of the second assembly, that lie substantially parallel to the laminated glazing unit, between the first assembly of light-emitting diodes and the second assembly of light-emitting diodes, the common partition completely or partially preventing refraction of the light emitted by the first assembly of diodes at the edge face between the internal face and exterior face of the laminated glazing unit and completely or partially preventing refraction of the light emitted by the second assembly of diodes at the edge face between the bonding face and the external face of the laminated glazing unit, the common partition preferably protruding, relative to the first and second assembly of light-emitting diodes, in the direction of the first and second edge faces.

23. Luminous glazing assembly (100, 100', 200, 300a to 300'e, 400, 500, 600, 700, 700', 800, 900) according to any one of the preceding claims, wherein the first light source (4) is a first assembly of light-emitting diodes that is coupled to the first edge face by adhesive bonding to the first edge face with an optical adhesive or a transparent double-sided adhesive or spaced apart from the first edge face by at most 5 mm.

24. Luminous glazing assembly (700, 700') according to any one of the preceding claims, **characterized in that** the first and second light sources are on opposite sides, the second glazing pane projects beyond the first edge face forming a first projecting zone (11a) and preferably the first glazing pane projects beyond the second edge face forming a second projecting zone (11'a), and **in that** the first light source is on a first carrier (41) that is attached to the first projecting zone and/or located in the first projecting zone and not projecting beyond the second edge face (13'), and preferably the second light source is on a second carrier (41'), which is attached to the second projecting zone and/or is located in the second projecting zone and not projecting beyond the first edge face.

25. Access door (1000, 2000) incorporating the luminous glazing assembly (100, 100', 200, 300a to 300'e, 400, 500, 600, 700, 700', 800, 900) according to one of the preceding claims, especially between the exterior and a building, between two zones of a building or of a land-, water- or air-based vehicle, in a public transport station or between two exterior zones.

26. Divider, sheet or window incorporating the luminous glazing assembly (100, 100', 200, 300a to 300'e, 400, 500, 600, 700, 700', 800, 900) according to one of Claims 1 to 24.
